(19) Europäisches Patentamt
European Patent Office
Office européen des brevets

(11) **EP 1 739 977 A2**

(12) **EUROPEAN PATENT APPLICATION**

(43) Date of publication:
**03.01.2007  Bulletin 2007/01**

(51) Int Cl.:
*H04N 13/00* (2006.01)

(21) Application number: **06012070.6**

(22) Date of filing: **12.06.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: 27.06.2005  JP  2005186333
30.01.2006  JP  2006020588
30.01.2006  JP  2006020587
09.02.2006  JP  2006032815
16.02.2006  JP  2006039392
16.02.2006  JP  2006039393

(71) Applicant: **SONY CORPORATION**
**Tokyo (JP)**

(72) Inventors:
• **Iwamoto, Kyohei**
**Shinagawa-ku**
**Tokyo (JP)**
• **Suzuki, Yoshio**
**Shinagawa-ku**
**Tokyo (JP)**
• **Miyawaki, Tetsuyuki**
**Shinagawa-ku**
**Tokyo (JP)**
• **Lu, Qingyu**
**c/o Sony Digital Network Appl. Inc.,**
**Shinagawa-ku**
**Tokyo (JP)**

(74) Representative: **Müller - Hoffmann & Partner**
**Patentanwälte,**
**Innere Wiener Strasse 17**
**81667 München (DE)**

(54) **Three-dimensional image display apparatus**

(57)     Disclosed herein is a three-dimensional image display apparatus includes a light source, a light modulation section modulates light from the light source by means of pixels to produce two-dimensional images and emits a spatial frequency of the produced two-dimensional images along diffraction angles corresponding to a plurality of diffraction orders produced from each pixel, a Fourier transform image formation section Fourier transforms the spatial frequency of the two-dimensional images emitted from the light modulation section to produce Fourier transform images whose number corresponds to the number of diffraction orders, a Fourier transform image selection section selects one of the Fourier transform images produced by the Fourier transform section which corresponds to a desired diffraction order, a conjugate image formation section forms a conjugate image of the Fourier transform image selected by the Fourier transform image selection section.

FIG.2

**Description**

CROSS REFERENCES TO RELATED APPLICATIONS

The present invention contains subject matter related to Japanese Patent Applications JP 2005-186333, JP 2006-020588, JP 2006-020587, JP 2006-032815, JP 2006-039392 and JP 2006-039393 filed in the Japanese Patent Office on June 27, 2005, January 30, 2006, January 30, 2006, February 9, 2006, February 16, 2006 and February 16, 2006 respectively, the entire contents of which being incorporated herein by reference.

BACKGROUND OF THE INVENTION

This invention relates to a three-dimensional display apparatus which can display a three-dimensional image.

Two-eye type three-dimensional image techniques wherein both eyes of an observer observe different images called parallax images to obtain a three-dimensional image and multi-eye type three-dimensional image techniques wherein a plurality of sets of parallax images are prepared to obtain a plurality of three-dimensional images from different eye points are known, and various techniques relating to the image techniques have been developed. However, according to the two-eye type three-dimensional image techniques and the multi-eye type three-dimensional image techniques, a three-dimensional image is positioned not in a space intended for the three-dimensional image but, for example, on a two-dimensional display screen and is always positioned at a fixed position. Accordingly, the convergence and the regulation which are physiologic reactions of the visual sense system do not interlock with each other, and eyestrain caused by this makes a problem.

Meanwhile, in the real world, information of the surface of an article propagates up to the eyeballs of an observer through light waves acting as a medium. Thus, a holography technique is known as a technique for artificially regenerating light waves from the surface of an article which physically exists in the real world. A three-dimensional image obtained using the holography technique uses interference fringes themselves produced based on interference of light and uses a diffracted wavefront which appears when the interference fringes are illuminated with light acting as an image information medium. Accordingly, physiologic reactions of the visual sense system such as convergence and regulation similar to those when an observer observes the article in the real world occur, and therefore, the observer little suffers from eyestrain from the image. Further, that a light wavefront from an article is regenerated signifies that the continuity is secured in the direction in which image information is transmitted. Accordingly, even if the point of view of the observer moves, an appropriate image from any different angle upon the movement can be presented continuously, and a kinesthetic parallax is provided continuously.

However, in the holography technique, three-dimensional space information of an article is recorded as interference fringes in a two-dimensional space, and the information amount of the three-dimensional space information is very great when compared with that of a two-dimensional space of a photograph or the like obtained by picking up an image of the same article. This is because it is considered that, when the three-dimensional space information is converted into two-dimensional space information, the information is converted into information of a density in the two-dimensional space. Therefore, the spatial resolution required for a display apparatus for displaying interference fringes of a CGH (Computer Generated Hologram) is very high, and a very great information amount is required. Consequently, under existing circumstances, it is technically difficult to implement a three-dimensional image based on a real-time hologram.

In the holography technique, light waves which can be regarded as continuous information are used as an information medium to transmit information from an article. Meanwhile, a light ray reproduction method (also called integral photography method) is known as a technique for producing a three-dimensional image by discretizing light waves to regenerate a situation theoretically substantially equivalent to a field formed from light waves in the real world with rays of light. In the light ray reproduction method, a light ray group composed of a large number of rays of light propagating in various directions is scattered into a space by optical means in advance. Then, rays of light propagating from the surface of a virtual article positioned at an arbitrary position are selected from within the light ray group, and the selected rays of light are modulated in strength or phase to produce an image formed from the rays of light. An observer can observe the image as a three-dimensional image. A three-dimensional image by the light ray reproduction method is formed from multiplexed images from a plurality of directions, and similarly as in a case wherein a three-dimensional article in the real world is observed, the three-dimensional image looks differently with regard to an arbitrary point depending upon the position from which it is viewed.

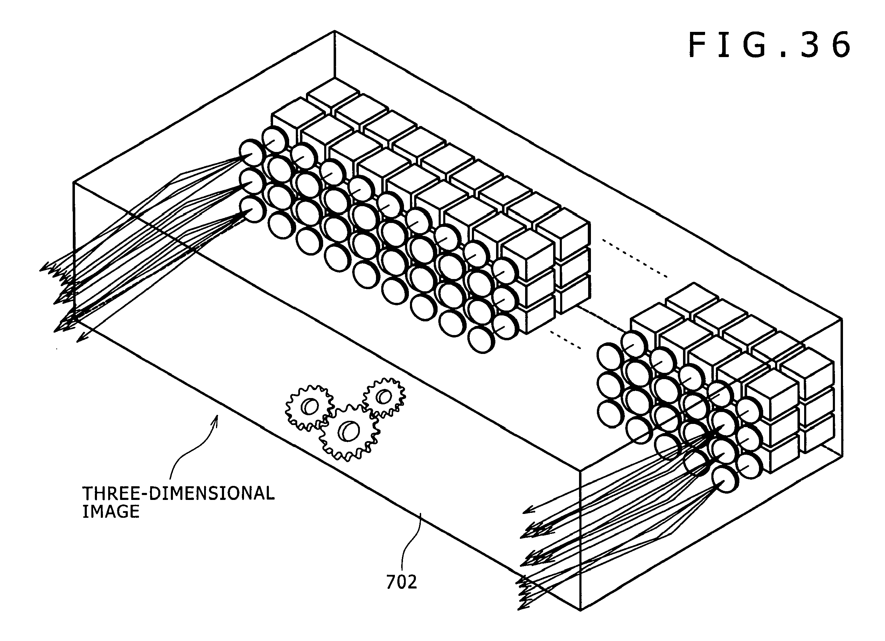

As an apparatus for implementing the light ray reproduction method described above, an apparatus is disclosed which includes a combination of a flat display apparatus such as a liquid crystal display apparatus or a plasma display apparatus and a microlens array or a pinhole array. An apparatus of the type just described is disclosed, for example, in Japanese Patent Laid-Open No. 2003-173128 (hereinafter referred to as Patent Document 1), Japanese Patent Laid-Open No. 2003-161912 (hereinafter referred to as Patent Document 2), Japanese Patent laid-Open No. 2003-295114 (hereinafter referred to as Patent Document 3), Japanese Patent Laid-Open No. 2003-75771 (hereinafter referred to as Patent Document 4), Japanese Patent Laid-Open No. 2002-72135 (hereinafter referred to as Patent Document 5), Japanese Patent Laid-Open No. 2001-56450 (hereinafter referred to as Patent Document 6) or Japanese Patent No. 3,523,605 (hereinafter referred to as Patent Document 7). Also an apparatus wherein a large number of projector units are arrayed may be contrived. FIG. 36 shows an example of a configuration of a three-dimensional image display apparatus which implements the light ray reproduction method using a projector unit. Referring to FIG. 36, the three-dimensional image display apparatus shown includes a large number of projector units 701 disposed parallelly in a horizontal direction and a vertical direction such that rays of light are emitted at different angles from the projector units 701. The three-dimensional image display apparatus multiplex-reproduces images of different viewing angles at an arbitrary point in a certain sectional plane 702 to implement a three-dimensional image.

SUMMARY OF THE INVENTION

According to the light ray reproduction method described above, since an image is produced from rays of light which operate effectively for focal adjustment and two-eye convergence angle adjustment as visual sense functions which are impossible with two-eye type three-dimensional image techniques and the multi-eye type three-dimensional image techniques, the produced three-dimensional image provides very little eyestrain to an observer. Besides, since rays of light are emitted continuously in a plurality of directions from the same element on a virtual article, a variation of the image caused by movement of the position of the point of view can be provided continuously.

However, an image produced by the light ray reproduction method in the present situation lacks in the feeling of presence when compared with an article existing in the real world. It is considered that this arises from the fact that a three-dimensional image by the light ray reproduction method in the present situation is produced from a very small amount of information when compared with an amount of information obtained from an article in the real world by an observer, that is, from a very small number of rays of light. Generally, it is considered that the limit to visibility of a human being is approximately one minute in angular resolution, and a three-dimensional image by the light ray reproduction method in the present situation is formed from rays of light insufficient for the visual sense of a human being. Accordingly, in order to produce a three-dimensional image which provides a high feeling of presence and reality which an article in the real world has, it is a subject to produce an image at least from a large number of rays of light.

In order to implement this, a technique by which a light ray group can be produced in a high spatial density is required, and one of such techniques may be to raise the display density of a display apparatus such as a liquid crystal display apparatus. Or, in the apparatus shown in FIG. 36 wherein a large number of projector units 701 are arrayed, each of the projector units 701 may be reduced in size as far as possible so that the projector units 701 may be arrayed in a high spatial density. However, rapid enhancement of the display density in display apparatus in the present situation is difficult from the problem of the light utilization efficiency or the diffraction limit. Further, in the case of the apparatus shown in FIG. 36, since there is a limitation to miniaturization of the projector units 701, it is considered difficult to array the projector units 701 in a high spatial density. In any case, in order to produce a light ray group of a high density, a plurality of devices are required, and therefore, a large scale configuration of an entire apparatus cannot be avoided.

Accordingly, it is an embodiment of the present invention to provide a three-dimensional image display apparatus which can produce and scatter a light ray group necessary for display of a three-dimensional image in a high spatial density to obtain a three-dimensional image formed from rays of light having quality proximate to that of an article in the real world without increase in scale of the three-dimensional image display apparatus.

According to a first embodiment of the present invention, it is described to provide a three-dimensional image display apparatus, including:

    (A) a light source;
    (B) a light modulation section having a plurality of pixels for modulating light from the light source by means of the pixels to a produce two-dimensional image and emitting a spatial frequency of the produced two-dimensional image along diffraction angles corresponding to a plurality of diffraction orders produced from each of the pixels;
    (C) a Fourier transform image formation section for performing Fourier transform of the spatial frequency of the two-dimensional image emitted from the light modulation section to produce Fourier transform images whose number corresponds to the number of diffraction orders;
    (D) a Fourier transform image selection section for selecting one of the Fourier transform images produced by said Fourier transform image formation section which corresponds to a desired diffraction order; and
    (E) a conjugate image formation section for forming a conjugate image of the Fourier transform image selected by the Fourier transform image selection section.

According to a second embodiment of the present invention, it is described to provid a three-dimensional image display apparatus, including:

(A) a light source;

(B) a light modulation section having a plurality of pixels for modulating light from the light source by means of the pixels to a produce two-dimensional image and emitting a spatial frequency of the produced two-dimensional image along diffraction angles corresponding to a plurality of diffraction orders produced from each of the pixels;

(C) an image limitation and production section for Fourier transform of the spatial frequency of the two-dimensional image emitted from the light modulation section to produce a number of Fourier transform images whose number corresponds to the number of diffraction orders produced from each of the pixels, selecting only a predetermined one of the Fourier transform images and then performing inverse Fourier transform of the selected Fourier transform image to produce a conjugate image of the two-dimensional image produced by the light modulation section;

(D) an oversampling filter having a plurality of opening regions for emitting a spatial frequency of the conjugate image of the two-dimensional image along diffraction angles corresponding to a plurality of diffraction orders produced from the opening regions;

(E) a Fourier transform image formation section for performing Fourier transform of the spatial frequency of the conjugate images of the two-dimensional image emitted from the oversampling filter to produce Fourier transform images whose number corresponds to the number of diffraction orders produced from each of the opening regions;

(F) a Fourier transform image selection section for selecting one of the Fourier transform images produced by said Fourier transform image formation section which corresponds to a desired diffraction order; and

(G) a conjugate image formation section for forming a conjugate image of the Fourier transform image selected by the Fourier transform image selection section.

According to a third embodiment of the present invention, it is described to provid a three-dimensional image display apparatus, including:

(A) a light source;

(B) a two-dimensional image formation apparatus having a plurality of pixels for a producing two-dimensional image based on light from the light source;

(C) an optical apparatus for emitting a spatial frequency of the two-dimensional image incident from the two-dimensional image formation apparatus along diffraction angles corresponding to a plurality of diffraction orders, the optical apparatus including a plurality of optical elements disposed in a two-dimensional matrix and each having an optical power of refracting light incident thereto to condense the light to a substantially one point, and having a function as a phase grating of modulating a phase of light transmitting therethrough;

(D) a Fourier transform image formation section for performing Fourier transform of the spatial frequency of the two-dimensional image emitted from the optical apparatus to produce Fourier transform images whose number corresponds to the number of diffraction orders;

(E) a Fourier transform image selection section for selecting one of the Fourier transform produced by said Fourier transform image formation section which corresponds to a desired diffraction order; and

(F) a conjugate image formation section for forming a conjugate image of the Fourier transform image selected by the Fourier transform image selection section.

Preferably, the three-dimensional image display apparatus according to the first embodiment of the present invention is configured such that the conjugate image formation section includes an inverse Fourier transform section for inverse Fourier transforming the Fourier transform image selected by the Fourier transform image selection section to form real images of the two-dimensional images produced by the light modulation section.

Preferably, the three-dimensional image display apparatus according to the second embodiment of the present invention is configured such that the conjugate image formation section includes an inverse Fourier transform section for inverse Fourier transforming the Fourier transform image selected by the Fourier transform image selection section to form conjugate images of the two-dimensional images produced by the image limitation and production section.

Preferably, the three-dimensional image display apparatus according to the third embodiment of the present invention is configured such that the conjugate image formation section includes an inverse Fourier transform section for inverse Fourier transforming the Fourier transform image selected by the Fourier transform image selection section to form real images of the two-dimensional images produced by the two-dimensional image formation section.

Preferably, the three-dimensional image display apparatus according to the first or second embodiment of the present invention including the preferable configurations is configured such that the light modulation section is formed from a two-dimensional spatial light modulator having a plurality of pixels arrayed two-dimensionally and each having an opening. In this instance, preferably the two-dimensional spatial light modulator is formed from a liquid crystal display apparatus (more particularly, a liquid crystal display apparatus of the transmission type or the reflection type) or a configuration wherein a movable mirror is provided in each of the openings of the two-dimensional spatial light modulator (a configuration formed from an MEMS of the two-dimensional type in which movable mirrors are disposed in a two-dimensional matrix). Preferably, the shape in plan of the openings is a rectangular shape. Where the shape in plan of the openings is a rectangular shape, Fraunhofer diffraction occurs, and M $\times$ N diffracted lights are produced. In other words, an amplitude grating which periodically modulates the amplitude (intensity) of an incident light wave so that a light amount distribution coincident with a light transmission factor distribution of the grating is obtained is formed by the openings.

Preferably, the three-dimensional image display apparatus according to the third embodiment of the present invention including the preferable configurations described above is configured such that the two-dimensional image formation section is formed from a liquid crystal display apparatus (more particularly, a liquid crystal display apparatus of the transmission type or the reflection type).

Preferably, the three-dimensional image display apparatus according to the first or second embodiment of the present invention including the preferable configurations described above is configured such that the light modulation section includes,

(B-1) a one-dimensional spatial light modulator for forming a one-dimensional image,
(B-2) a scanning optical system for two-dimensionally expanding the one-dimensional image formed by the one-dimensional spatial light modulator to form a two-dimensional image, and
(B-3) a lattice filter disposed on a formation plane of the two-dimensional image for emitting a spatial frequency of the produced two-dimensional image along diffraction angles corresponding to a plurality of diffraction orders.

It is to be noted that the lattice filter may otherwise be formed from an amplitude grating or from a phase grating which modulates the phase of the transmission light amount, that is, modulates the phase while the amplitude (intensity) of the light is maintained.

Or, the three-dimensional image display apparatus according to the third embodiment of the present invention including the preferable configurations described above may be configured such that the two-dimensional image formation apparatus includes,

(B-1) a one-dimensional image formation apparatus for forming a one-dimensional image, and
(B-2) a scanning optical system for two-dimensionally expanding the one-dimensional image formed by the one-dimensional image formation apparatus to form a two-dimensional image.

Preferably, the three-dimensional image display apparatus according to the first embodiment of the present invention including the preferable embodiments and configurations described above is configured such that the Fourier transform image formation section is formed from a lens, and the light modulation section is disposed on a front focal plane of the lens while the Fourier transform image selection section is disposed on a back focal plane of the lens.

Further, the three-dimensional image display apparatus according to the second embodiment of the present invention including the preferable embodiments and configurations described above is configured such that the image limitation and production section is formed from,

(C-1) two lenses, and
(C-2) an image limitation opening section disposed between the two lenses for allowing only the predetermined Fourier transform image to pass therethrough.

Preferably, the three-dimensional image display apparatus according to the second embodiment of the present invention including the preferable embodiments and configurations described above is configured such that the oversampling filter is formed from a diffracted light production member, more particularly, for example, a lattice filter. It is to be noted that the lattice filter may be formed from an amplitude grating or a phase grating.

Further, the three-dimensional image display apparatus according to the second embodiment of the present invention including the preferable configurations and embodiments described above may be configured such that the Fourier transform image formation section is formed from a lens, and the oversampling filter is disposed on a front focal plane of the lens while the Fourier transform image selection section is disposed on a back focal plane of the lens.

Furthermore, the three-dimensional image display apparatus according to the third embodiment of the present invention including the preferable embodiments and configurations may be configured such that the Fourier transform image formation section is formed from a lens, and the lens has a front focal plane on which the focuses of the optical elements which compose the optical apparatus are positioned while the Fourier transform image selection section is disposed on a back focal plane of the lens.

The three-dimensional image display apparatus according to the first embodiment of the present invention including the preferable configurations and embodiments described above may be configured such that the Fourier transform image selection section has a number of openings equal to the number of diffraction orders which can be controlled to be opened and closed. Further, the three-dimensional image display apparatus according to the second embodiment of the present invention including the preferable configurations and embodiments described above may be configured such that the Fourier transform image selection section has a number of openings equal to the number of diffraction orders produced from each of the opening regions which can be controlled to be opened and closed. Further, the three-dimensional image display apparatus according to the third embodiment of the present invention including the preferable configurations and embodiments described above may be configured such that the Fourier transform image selection section has a number of openings equal to the number of diffraction orders which can be controlled to be opened and closed. In those cases, the Fourier transform selection section may particularly be configured such that it is formed from a liquid crystal display apparatus (more particularly, a liquid crystal display apparatus of the transmission type or the reflection type) or configured such that it is formed from an MEMS of the two-dimensional type in which movable mirrors are disposed in a two-dimensional matrix. Preferably, the Fourier transform image selection section is configured such that it places a desired one of the openings into an open state in synchronism with a production timing of two-dimensional images by the light modulation section or two-dimensional image formation apparatus to select a Fourier transform image corresponding to a desired diffraction order.

Further, the three-dimensional image display apparatus according to the first embodiment of the present invention including the preferable configurations and embodiments described above may be configured such that the spatial frequency of the two-dimensional images correspond to image information whose carrier frequency is the spatial frequency of the pixel structure.

The three-dimensional image display apparatus according to the third embodiment of the present invention including the preferable configurations and embodiments described above may be configured such that the spatial frequency of the two-dimensional images corresponds to image information whose carrier frequency is the spatial frequency of the pixel structure, and besides the spatial frequency of the conjugate images of the two-dimensional images corresponds to a spatial frequency which is the difference of the spatial frequency of the pixel structure from the spatial frequency of the two-dimensional images. In other words, a spatial frequency which is obtained as first order diffraction whose carrier frequency is zeroth diffraction of the plane wave component and is lower than one half the spatial frequency of the pixel structure (opening structure) of the light modulation section is selected by the image limitation and production section or passes through the image limitation opening section. All of spatial frequencies displayed on the light modulation section or a two-dimensional image formation apparatus hereinafter described are transmitted.

Further, the three-dimensional image display apparatus according to the third embodiment of the present invention including the preferable configurations and embodiments described above may be configured such that the spatial frequency of the two-dimensional image corresponds to image information whose carrier frequency is the spatial frequency of the pixel structure of the two-dimensional image formation apparatus.

According to a fourth embodiment of the present invention, it is described to provid a three-dimensional image display apparatus, including:

(A) a light source;
(B) a light modulation section having P × Q openings disposed in a two-dimensional matrix along an X direction and a Y direction for producing a two-dimensional image through control of passage, reflection or diffraction of light from the light source for each of the openings and producing, based on the two dimensional image, for each of the openings, totaling M × N diffracted lights including M diffracted lights from the mth order to the m'th order diffracted lights along the X direction and N diffracted lights from the nth order to the n'th order diffracted lights along the Y direction, P and Q being arbitrary positive integers, m and m' being integers while M is a positive integer, n and n' being integers while N is a positive integer;
(C) a first lens having a front focal plane on which the light modulation section is disposed;
(D) a spatial filter disposed on a back focal plane of the first lens and having totaling M × N openings including M openings disposed along the X direction and N openings disposed along the Y direction, the openings being capable of being controlled between open and closed states;
(E) a second lens having a front focal plane on which the spatial filter is disposed; and
(F) a third lens having a front focus positioned at a back focus of the second lens.

According to a fifth embodiment of the present invention, there is provided a three-dimensional image display apparatus, including:

(A) a light source;
(B) a two-dimensional image formation apparatus having a plurality of openings disposed in a two-dimensional matrix along an X direction and a Y direction for producing a two-dimensional image through control of passage, reflection or diffraction of light from the light source for each of the openings and producing, based on the two dimensional image, diffracted lights of a plurality of diffraction orders for each of the openings;

(C) a first lens having a front focal plane on which the two-dimensional image formation apparatus is disposed;

(D) an image limitation opening section disposed on a back focal plane of the first lens for allowing only a diffracted light of a predetermined diffraction order to pass therethrough;

(E) a second lens having a front focal plane on which the image limitation opening section is disposed;

(F) an oversampling filter disposed on a back focal plane of the second lens and having $P_0 \times Q_0$ opening regions arrayed in a two-dimensional matrix along the X direction and the Y direction for producing, for each of the opening regions, based on a conjugate image of the two-dimensional image produced by the second lens, totaling $M \times N$ diffracted lights including M diffracted lights from the mth order to the m'th order diffracted lights along the X direction and N diffracted lights from the nth order to the n'th order diffracted lights along the Y direction, $P_0$ and $Q_0$ being arbitrary positive integers, m and m' being integers while M is a positive integer, n and n' being integers while N is a positive integer;

(G) a third lens having a front focal plane on which the oversampling filter is disposed;

(H) a spatial filter disposed on a back focal plane of the third lens and having totaling $M \times N$ openings including M openings along the X direction and N openings along the Y direction, the openings being capable of being controlled between open and closed states;

(I) a fourth lens having a front focal plane on which the spatial filter is disposed; and

(J) a fifth lens having a front focus positioned at a back focus of the fourth lens.

According to a sixth embodiment of the present invention, it is described to provid a three-dimensional image display apparatus, including:

(A) a light source;

(B) a two-dimensional image formation apparatus having a plurality of pixels for a producing two-dimensional image based on light from the light source;

(C) an optical apparatus for emitting a spatial frequency of the two-dimensional image incident from said two-dimensional image formation apparatus along diffraction angles corresponding to a plurality of diffraction orders, the optical apparatus including $P_0 \times Q_0$ optical elements disposed in a two-dimensional matrix along an X direction and a Y direction and each having an optical power of refracting light incident thereto to condense the light to a substantially one point, and having a function as a phase grating of modulating a phase of the light transmitting therethrough, $P_0 \times Q_0$ being arbitrary positive integers;

(D) a first lens having a front focal plane on which focuses of the optical elements in the optical apparatus are positioned;

(E) a spatial filter disposed on a back focal plane of the first lens and having $M \times N$ openings including M openings disposed along the X direction and N openings disposed along the Y direction and capable of being controlled between open and closed states;

(F) a second lens having a front focal plane on which the spatial filter is disposed; and

(G) a third lens having a front focus on which a back focus of the second lens is positioned.

The three-dimensional image display apparatus according to the fourth embodiment of the present invention may be configured such that the two-dimensional image formation apparatus is formed from a liquid crystal display apparatus (more particularly, a liquid crystal display apparatus of the transmission type or the reflection type) having $P \times Q$ pixels arrayed two-dimensionally, and each of the pixels has an opening, or is configured preferably such that a movable mirror is provided in each of the openings of the two-dimensional image formation apparatus (such that it includes an MEMS of the two-dimensional type in which movable mirrors are disposed in openings arrayed in a two-dimensional matrix. Here, preferably the shape in plan of the openings is a rectangular shape. Where the shape in plan of the openings is a rectangular shape, Fraunhofer diffraction occurs, and $M \times N$ diffracted lights are produced. In other words, an amplitude grating is formed by the openings.

The three-dimensional image display apparatus according to the fifth embodiment of the present invention may be configured such that the two-dimensional image formation apparatus is formed from a liquid crystal display apparatus (more particularly, a liquid crystal display apparatus of the transmission type or the reflection type) having $P \times Q$ pixels arrayed two-dimensionally, and each of the pixels has an opening and $P_0 > P$ and $Q_0 > Q$ are satisfied, or such that the two-dimensional image formation apparatus has $P \times Q$ openings provided therein and a movable mirror is provided in each of the openings (such that it includes an MEMS of the two-dimensional type in which movable mirrors are disposed in the openings arrayed in a two-dimensional matrix) and besides $P_0 > P$ and $Q_0 > Q$ are satisfied. Preferably the shape in plan of the openings is a rectangular shape. Where the shape in plan of the openings is a rectangular shape, Fraunhofer diffraction occurs, and $M \times N$ diffracted lights are produced. In other words, an amplitude grating is formed by the openings. Further, the oversampling filter may be formed from a diffracted light production member, more particularly, for example, a lattice filter. It is to be noted that the lattice filter may be formed from an amplitude grating or a phase grating.

The three-dimensional image display apparatus according to the sixth embodiment of the present invention may be configured such that the two-dimensional image formation apparatus is formed from a liquid crystal display apparatus (more particularly, a liquid crystal display apparatus of the transmission type or the reflection type) having P $\times$ Q (where $P_0 \geq P$ and $Q_0 \geq Q$) arrayed two-dimensionally. It is to be noted that P and $P_0$, and Q and $Q_0$ may have more particular relationships of $1 \leq P_0/P \leq 4$ and $1 \leq Q_0/Q \leq 4$, respectively.

Or, the three-dimensional image display apparatus according to the sixth embodiment of the present invention may be configured such that the two-dimensional image formation apparatus includes,

(B-1) a one-dimensional image formation apparatus for forming a one-dimensional image, and
(B-2) a scanning optical system for two-dimensionally expanding the one-dimensional image formed by the one-dimensional image formation apparatus to form a two-dimensional image.

In this instance, the three-dimensional image display apparatus may be configured such that the one-dimensional image formation apparatus produces a one-dimensional image by diffracting light from the light source. Further, the three-dimensional image display apparatus may be configured such that a member (anisotropic diffusion filter, anisotropic diffusion film or anisotropic diffusion sheet) for causing anisotropic light diffusion to occur is disposed rearwardly of the third lens.

The three-dimensional image display apparatus according to the fourth, fifth or sixth embodiment of the present invention including the preferred configurations and embodiments described above may be configured such that the spatial filter is particularly formed from a liquid crystal display apparatus (liquid crystal display apparatus of the transmission type or the reflection type) having M $\times$ N openings (pixels) or may have a configuration formed from a two-dimensional MEMS in which movable mirrors are arrayed two-dimensionally. Or, the spatial filter may be configured such that a desired one of the openings is placed into an open state in synchronism with a production timing of two-dimensional images by the two-dimensional image formation apparatus.

According to a seventh embodiment of the present invention, it is described to provid a three-dimensional image display apparatus, including:

(A) a light source;
(B) a two-dimensional image formation apparatus including a one-dimensional spatial light modulator having P pixels along an X direction for producing a one-dimensional image, a scanning optical system for two-dimensionally expanding the one-dimensional image produced by the one-dimensional spatial light modulator to produce a two-dimensional image, and a diffracted light production section disposed on a production plane of the two-dimensional image for producing, for each of the pixels, M diffracted lights from the mth to the m'th orders, m and m' being integers while M is a positive integer;
(C) a first lens having a front focal plane on which the diffracted light production section is disposed;
(D) a spatial filter disposed on a back focal plane of the first lens and having totaling M $\times$ N openings including M openings along the X direction and N openings along a Y direction, N being a positive integer, the openings being capable of being controlled between open and closed states;
(E) a second lens having a front focal plane on which the spatial filter is disposed; and
(F) a third lens having a front focus positioned at a back focus of the second lens.

The three-dimensional image display apparatus according to the seventh embodiment of the present invention may be configured such that the one-dimensional spatial light modulator diffracts light from the light source to form a one-dimensional image.

According to an eighth embodiment of the present invention, it is described to provid a three-dimensional image display apparatus, including:

(A) a light source;
(B) a two-dimensional image formation apparatus including a one-dimensional spatial light modulator for producing a one-dimensional image, a scanning optical system for two-dimensionally expanding the one-dimensional image produced by the one-dimensional spatial light modulator to produce a two-dimensional image, and a diffracted light production section disposed on a production plane of the two-dimensional image for producing, for each of pixels, diffracted lights of a plurality of diffraction orders;
(C) a first lens having a front focal plane on which the diffracted light production section is disposed;
(D) an image limitation opening section disposed on a back focal plane of the first lens for allowing only a diffracted light of a predetermined diffraction order to pass therethrough;
(E) a second lens having a front focal plane on which the image limitation opening section is disposed;
(F) an oversampling filter disposed on a back focal plane of the second lens and having $P_0 \times Q_0$ opening regions

arrayed in a two-dimensional matrix along an X direction and a Y direction for producing, for each of the opening regions, based on a conjugate image of a two-dimensional image formed by the second lens, totaling M × N diffracted lights including M diffracted lights from the mth order to the m'th order diffracted lights along the X direction and N diffracted lights from the nth order to the n'th order diffracted lights along the Y direction, $P_0$ and $Q_0$ being arbitrary positive integers, m and m' being integers while M is a positive integer, n and n' being integers while N is a positive integer;

(G) a third lens having a front focal plane on which the oversampling filter is disposed;

(H) a spatial filter disposed on a back focal plane of the third lens and having totaling M × N openings including M openings along the X direction and N openings along the Y direction, the openings being capable of being controlled between open and closed states;

(I) a fourth lens having a front focal plane on which the spatial filter is disposed; and

(J) a fifth lens having a front focus positioned at a back focus of the fourth lens.

The three-dimensional image display apparatus according to the eighth embodiment of the present invention may be configured such that the one-dimensional spatial light modulator has P pixels along the X direction and diffracts light from the light source to produce a one-dimensional image such that $P_0 > P$ is satisfied. The three-dimensional image display apparatus may be configured such that the oversampling filter is formed from a diffracted light production member, more particularly, for example, a lattice filter. It is to be noted that the lattice filter may be formed from an amplitude grating or a phase grating.

The three-dimensional image display apparatus according to the seventh or eighth embodiment of the present invention including the preferred configurations described above may be configured such that the spatial filter is particularly formed from a liquid crystal display apparatus (more particularly, a liquid crystal display apparatus of the transmission type or the reflection type) having M × N openings (pixels) or may have a configuration formed from a two-dimensional MEMS in which movable mirrors are arrayed two-dimensionally. Or, the spatial filter may be configured such that a desired one of the openings is placed into an open state in synchronism with a production timing of two-dimensional images.

The three-dimensional image display apparatus according to the seventh embodiment of the present invention including the preferred configurations described above may be configured such that a member (anisotropic diffusion filter, anisotropic diffusion sheet or anisotropic diffusion film) for causing anisotropic light diffusion to occur is disposed rearwardly of the third lens.

In the three-dimensional image display apparatus according to the fourth, fifth, seventh or eighth embodiment of the present invention, m and m' are integers and M is a positive integer, and m, m' and M have relationships of m ≤ m' and M = m' - m + 1. Further, n and n' are integers and N is a positive integer, and n, n' and N have relationships of n ≤ n' and N = n' - n + 1. Further, although the numbers M and N which define the total number of diffraction orders are not particularly limited, they may be such that

$$0 \leq M\ (= m' - m + 1) \leq 21$$

is satisfied, and preferably, for example,

$$5 \leq M\ (= m' - m + 1) \leq 21$$

is satisfied. Further,

$$0 \leq N\ (= n' - n + 1) \leq 21$$

is satisfied, and preferably, for example,

$$5 \leq N\ (= n' - n + 1) \leq 21$$

is satisfied. The value of M and the value of N may be equal to each other or may be different from each other. The value of $|m'|$ and the value of $|m|$ may be equal to each other or may be different from each other. Further, the value of $|n'|$ and the value of $|n|$ may be equal to each other or may be different from each other. Further, while, in the optical apparatus of the three-dimensional image display apparatus according to the sixth embodiment of the present invention, a spatial frequency of incident two-dimensional images is emitted along diffraction angles corresponding to a plurality of diffraction orders (totaling M $\times$ N diffraction orders), where totaling M $\times$ N diffracted lights including M diffracted lights from the mth order to the m'th order diffracted lights (m and m' are integers while M is a positive integer) along the X direction and N diffracted lights from the nth order to the n'th order diffracted lights (n and n' are integers while N is a positive integer) along the Y direction are produced, m, m' and M, and n, n' and N may have such relationships as given hereinabove.

The three-dimensional image display apparatus according to the second, fifth and eighth embodiments of the present invention including the preferred configurations and embodiments described above may be configured such that the lattice filter which forms the oversampling filter has, for example, a structure (of the phase grating type) that $P_0 \times Q_0$ recesses are formed in a two-dimensional matrix on a glass plate. Here, the recesses correspond to the opening regions. Where the opening regions (recesses) have, for example, a rectangular shape, Fraunhofer diffraction occurs, and M $\times$ N diffracted lights are produced. Further, although preferably $P_0 > P$ and $Q_0 > Q$ are satisfied as described above, more particularly $1 \leq P_0/P \leq 4$ and $1 \leq Q_0/Q \leq 4$ are satisfied.

The three-dimensional image display apparatus according to the third and sixth embodiments of the present invention including the preferred configurations and embodiments described above may be configured such that each of the pixels of the two-dimensional image formation apparatus has an opening having a rectangular shape in plan. Further, the optical apparatus in the three-dimensional image display apparatus according to the third and sixth embodiments of the present invention may particularly have any of the following structures. In particular, the optical elements preferably have a shape in plan same as or similar to a shape in plan of the openings of the corresponding pixels. Further, each of the optical elements preferably is formed from a convex lens having a positive optical power or a concave lens having a negative optical power, or from a Fresnel lens having a positive optical power or a Fresnel lens having a negative optical power. In other words, each of the optical elements is formed from a grating-like element of the refraction type. Further, the optical apparatus may be formed from a kind of microlens array and may be made of a material which may be a glass or plastic material, and therefore may be produced based on a known method for production of a microlens array. It is to be noted that the optical apparatus is disposed rearwardly in the neighborhood of the two-dimensional image formation apparatus. Where the optical apparatus is disposed rearwardly in the neighborhood of the two-dimensional image formation apparatus in this manner, the influence of a diffraction phenomenon arising from the two-dimensional image formation apparatus can be ignored. Or, for example, two convex lenses may be disposed between the two-dimensional image formation apparatus and the optical apparatus such that the two-dimensional image formation apparatus is disposed on a front focal plane of a first one of the convex lenses and a front focus of a second one of the convex lenses is positioned on the back focal plane of the first convex lens while the optical apparatus is disposed on a back focal plane of the second convex lens. Generally, diffraction gratings can be classified into two different categories, that is, an amplitude grating which periodically modulates the amplitude (intensity) of an incident light wave and by which a light amount distribution coincident with a light transmission factor distribution of the grating is obtained and a phase grating which modulates the phase of the transmission light amount, that is, which modulates the phase of light while the amplitude (intensity) of the light is maintained. The optical apparatus in the three-dimensional image display apparatus according to the third and sixth embodiments of the present invention functions as the latter phase grating.

The light source in the three-dimensional image display apparatus according to the first to eighth embodiments of the present invention including the various preferred configurations and embodiments described above (such three-dimensional image display apparatus are hereinafter referred to generally as three-dimensional image display apparatus of the present invention) may be a laser, a light emitting diode (LED) or a white light source. An illumination optical system for shaping light emitted from the light source may be disposed between the light source and the light modulation section or the two-dimensional image formation apparatus.

In a liquid crystal display apparatus which forms the two-dimensional spatial light modulator or the two-dimensional image formation apparatus, an overlapping region of a first transparent electrode and a second transparent electrode, which are hereinafter described, including a liquid crystal cell corresponds to one pixel. Then, the liquid crystal cell is caused to operate as a kind of light shutter (light valve), that is, the light transmission factor of each pixel is controlled, so that the light transmission factor of light emitted from the light source is controlled thereby to generally obtain a two-dimensional image. In the three-dimensional image display apparatus according to the first, second, fourth, fifth, seventh and eighth embodiments of the present invention, a rectangular opening is provided in each of the overlapping regions of the first electrodes and the second electrodes, and as the light emitted from the light source passes through the opening, Fraunhofer diffraction occurs for each pixel thereby to produce M $\times$ N diffracted lights.

The liquid crystal display apparatus includes, for example, a front panel on which the first transparent electrodes are provided, a rear panel on which the second transparent electrodes are provided, and a liquid crystal material interposed between the front panel and the rear panel. More particularly, the front panel includes, for example, a first substrate formed from a glass substrate or a silicon substrate, a first transparent electrode (also called common electrode and made of, for example, ITO) provided on an inner face of the first substrate, and a light polarization film provided on an outer face of the first substrate. Further, an orientation film is formed on the first transparent electrode. Meanwhile, the rear panel particularly includes, for example, a second substrate formed from a glass substrate or a silicon substrate, switching elements formed on an inner face of the second substrate, second transparent electrodes (also called pixel electrodes and made of, for example, ITO) which are controlled to be rendered conducting/non-conducting by the switching elements, and a light polarizing film provided on an outer face of the second substrate. The various members and the liquid crystal materials which form the liquid crystal display apparatus of the transmission type can each be made of a known member or a known material. It is to be noted that the switching elements may each be formed from a three-terminal element such as a MOS type FET or a thin film transistor (TFT) or a two-terminal element such as a MIM element, a barrister element or a diode formed on a single crystal silicon semiconductor substrate. Or, the liquid crystal display apparatus may have a matrix electrode configuration wherein a plurality of scanning electrodes extend in a first direction and a plurality of data electrodes extend in a second direction. In a liquid crystal display apparatus of the transmission type, light from the light source comes in from the second substrate and goes out from the first substrate. On the other hand, in a liquid crystal display apparatus of the reflection type, light from the light source comes in from the first substrate and is reflected, for example, by the second electrodes (pixel electrodes) formed on the inner face of the second substrate, whereafter it goes out from the first substrate. The openings can be produced, for example, by forming an insulating material layer opaque to the light from the light source, for example, between the second transparent electrodes and the orientation film and forming openings in the insulating material layer. It is to be noted that, as the liquid crystal display apparatus of the reflection type, a LCoS (Liquid Crystal on Silicon) type liquid crystal display apparatus may be used.

Further, the one-dimensional spatial light modulator (one-dimensional image formation apparatus) may more particularly be an apparatus (which may be hereinafter referred to as diffraction grating-light modulation apparatus) wherein diffraction grating-light modulation elements (GLV: Grating Light Valve) are disposed one-dimensionally in an array.

The three-dimensional image display apparatus according to the first, third, fourth, sixth and seventh embodiments of the present invention may be configured such that it further includes an optical section for projecting a conjugate image formed by the conjugate image formation section or further includes an optical section disposed rearwardly of the third lens for projecting an image formed by the third lens. Further, the three-dimensional image display apparatus according to the second, fifth and eighth embodiments of the present invention may be configured such that it further includes an optical section for projecting a conjugate image formed by the conjugate image formation section or further includes an optical section disposed rearwardly of the fifth lens for projecting an image formed by the fifth lens.

In the three-dimensional image display apparatus of the present invention, where the number $P \times Q$ of the pixels of a two-dimensional image is represented by (P, Q), several resolutions for image display such as VGA (640, 480), S-VGA (800, 600), XGA (1024, 768), APRC (1152, 900), S-XGA (1280, 1024), U-XGA (1600, 1200), HD-TV (1920, 1080) and Q-XGA (2048, 1536) as well as (1920, 1035), (720, 480) and (1280, 960) can be applied as the value of (P, Q). However, the value of (P, Q) is not limited to the values given above.

In the three-dimensional image display apparatus according to the first, fourth and seventh embodiments of the present invention, two-dimensional images are produced by the light modulation section, the two-dimensional image formation apparatus or the like, and a spatial frequency of the produced two-dimensional images is emitted along diffraction angles corresponding to a plurality of diffraction orders produced from each pixel or the diffracted light production section. The spatial frequency is Fourier transformed by the Fourier transform image formation section or the first lens to produce Fourier transform images whose number corresponds to the number of diffraction orders, and a Fourier transform image corresponding to a desired diffraction order from among the produced Fourier transform images whose number is equal to the number of diffraction orders is selected in synchronism with a formation timing of the two-dimensional images. Then, a conjugate image of the Fourier transform image selected by the Fourier transform image selection section or the spatial filter is formed by the conjugate image formation section (second lens and third lens) and is finally observed by an observer. The series of operations described is successively repeated in a time series. Consequently, light-ray groups corresponding to a plurality of diffraction orders can be produced and scattered in a spatially high density and in a state distributed in a plurality of directions. As a result, a three-dimensional image of a high feel of material which is proximate to that of an article in the real world can be obtained based on the light ray reproduction method which is not conventionally available and utilizes a light diffraction phenomenon efficiently without increasing the scale of the entire three-dimensional image display apparatus.

In the three-dimensional image display apparatus according to the second, fifth and eighth embodiments of the present invention, two-dimensional images are produced by the light modulation section (two-dimensional image formation apparatus), and a spatial frequency of the produced two-dimensional images is emitted along diffraction angles corresponding to a plurality of diffraction orders produced from each of the pixels and is Fourier transformed by the image limitation and production section (first lens) to produce Fourier transform images whose number corresponds to the number of diffraction orders. Then, only a predetermined one of the Fourier transform images is selected by the image limitation and production section (image limitation opening section), and a conjugate image of the Fourier transform image is produced by the image limitation and production section (second lens). Then, a spatial frequency of the conjugate image of the two-dimensional image is emitted along diffraction angles corresponding to a plurality of diffraction orders produced from each opening region from the oversampling filter. The spatial frequency is Fourier transformed by the Fourier transform image formation section (third lens) to produce Fourier transform images whose number corresponds to the number of diffraction orders produced from each of the opening regions. Then, a Fourier transform image corresponding to a desired diffraction order from among the number of produced Fourier transform images whose number corresponds to the number of diffraction orders produced from each opening region is selected in synchronism with a formation timing of the two-dimensional images by the Fourier transform image selection section (spatial filter). Then, a conjugate image of the Fourier transform image selected by the Fourier transform image selection section (spatial filter) is formed by the conjugate image formation section (second lens and third lens) and is finally observed by the observer. The series of operations described is successively repeated in a time series. Consequently, light-ray groups corresponding to a plurality of diffraction orders produced from each of the opening regions of the oversampling filter can be produced and scattered in a spatially high density and in a state distributed in a plurality of directions. As a result, a three-dimensional image of a high feel of material which is proximate to that of an article in the real world can be obtained based on the light ray reproduction method which is not conventionally available and utilizes a light diffraction phenomenon efficiently without increasing the scale of the entire three-dimensional image display apparatus. Besides, in the three-dimensional image display apparatus according to the second, fifth and eighth embodiments of the present invention, a read out image (conjugate image of a two-dimensional image) is newly sampled spatially by disposing the oversampling filter, that is, independently of the light modulation section (two-dimensional image formation apparatus). Therefore, the size and the angular field of view of an image to be obtained finally can be controlled independently of each other. Accordingly, the scale (size) of a three-dimensional image to be displayed can be increased while the region of a three-dimensional image to be observed is expanded.

In the three-dimensional image display apparatus according to the third and sixth embodiments of the present invention, two-dimensional images are produced by the two-dimensional image formation apparatus, and a spatial frequency of the produced two-dimensional images is emitted along diffraction angles corresponding to a plurality of diffraction orders by the optical apparatus which is an aggregate of optical elements each formed from a grating-like element of the refraction type. Then, the spatial frequency is Fourier transformed by the Fourier transform image formation section or the first lens to produce a number Fourier transform image equal to the number of diffraction orders. Then, a Fourier transform image corresponding to a desired diffraction order from among the number of produced Fourier transform images whose number corresponds to the number of diffraction orders is selected in synchronism with a formation timing of the two-dimensional images by the Fourier transform image selection section or the spatial filter. Then, a conjugate image of the Fourier transform image selected by the Fourier transform image selection section or the spatial filter is formed by the conjugate image formation section (second lens and third lens) and is finally observed by the observer. The series of operations described is successively repeated in a time series. Consequently, light-ray groups corresponding to a plurality of diffraction orders can be produced and scattered in a spatially high density and in a state distributed in a plurality of directions. As a result, a three-dimensional image of a high feel of material which is proximate to that of an article in the real world can be obtained based on the light ray reproduction method which is not conventionally available and utilizes a light diffraction phenomenon efficiently without increasing the scale of the entire three-dimensional image display apparatus.

Where a spatial frequency of a two-dimensional image produced by a two-dimensional image formation apparatus is emitted along diffraction angles corresponding to a plurality of diffraction orders by an amplitude grading which has rectangular openings and causes Fraunhofer diffraction to occur based on the rectangular openings, it is sometimes difficult to produce the amplitude grating such that it has a high numerical aperture. Further, since the light utilization efficiency relies upon the numerical aperture of openings, there is the possibility that it may be difficult to achieve a high light utilization efficiency. On the other hand, when a spatial frequency of a two-dimensional image is Fourier transformed to produce Fourier transform images, the uniformity among the number of Fourier transform images whose number corresponds to the number of diffraction orders (uniformity in light intensity among the diffraction orders) enhances as the opening side decreases. In the three-dimensional image display apparatus according to the third and sixth embodiments of the present invention, where an optical apparatus which is an aggregate of optical elements each formed not from an amplitude grating but from a grating-type element of the refraction type, a high numerical aperture can be provided to the optical elements themselves. Consequently, enhancement of the light utilization efficiency can be implemented. Besides, since light incident to the light elements is condensed almost to one point, equivalently a small opening is obtained, and a high degree of uniformity can be achieved among the Fourier transform images corresponding to the diffraction orders. Besides, where optimization of the optical apparatus is achieved, much energy can be distributed also to diffraction of high diffraction orders. It is to be noted that, for example, if a phase grating wherein a large number of recesses are formed on a flat glass plate is adopted, then it is possible to raise the light utilization efficiency. However, although it is possible in the case of pattern production by phase modulation to produce an arbitrary pattern in a particular plane, in a system wherein an image formed from rays of light is produced in an arbitrary plane, it is very difficult to produce a particular pattern in an arbitrary plane. In the three-dimensional image display apparatus according to the third or sixth embodiment of the present invention, such problems of a phase grating as described above can be eliminated if an optical apparatus which is an aggregate of optical elements formed not from a phase grating but from a grating-like element of the refraction type is adopted.

The above and other objects, features and advantages of the present invention will become apparent from the following description and the appended claims, taken in conjunction with the accompanying drawings in which like parts or elements denoted by like reference symbols.

BRIEF DESCRIPTION OF THE DRAWINGS

FIG. 1 is a schematic view illustrating a concept of a three-dimensional image display apparatus according to a first working example of the present invention along a yz plane;

FIG. 2 is a schematic view illustrating a concept of the three-dimensional image display apparatus of FIG. 1 but as viewed in an oblique direction;

FIG. 3 is a schematic view showing an arrangement state of components of the three-dimensional image display apparatus of FIG. 1;

FIG. 4 is a schematic front elevational view of a spatial filter as an example of a Fourier transform image selection section of the three-dimensional image display apparatus of FIG. 1;

FIG. 5 is a schematic view illustrating a manner of production of diffracted lights of a plurality of diffraction orders by a two-dimensional image formation apparatus as an example of a light modulation section of the three-dimensional image display apparatus of FIG. 1;

FIG. 6 is a schematic view illustrating a light condensing state of a first lens $L_1$ as an example of a Fourier transform image formation section and an image formation state of the spatial filter as an example of the Fourier transform image selection section in the three-dimensional image display apparatus of FIG. 1;

FIGS. 7A and 7B are schematic front elevational view of the two-dimensional image formation apparatus as an example of a light conversion section in a state wherein the spatial frequency of two-dimensional images formed by the two-dimensional image formation apparatus as an example of the light modulation section in the three-dimensional image display apparatus of FIG. 1 is lowest and another state wherein the spatial frequency is highest, respectively;

FIGS. 8A and 8B are diagrammatic views illustrating frequency characteristics of the light intensity after the Fourier transform in a state wherein the spatial frequency of two-dimensional images formed by the two-dimensional image formation apparatus as an example of the light modulation section in the three-dimensional image display apparatus of FIG. 1 is lowest and another state wherein the spatial frequency is highest, respectively;

FIG. 9A is a diagrammatic view illustrating a distribution after the Fourier transform on an xy plane of the spatial filter as an example of the Fourier transform image selection section and FIGS. 9B and 9C are diagrammatic views illustrating light intensity distributions after the Fourier transform on the $\times$ axis;

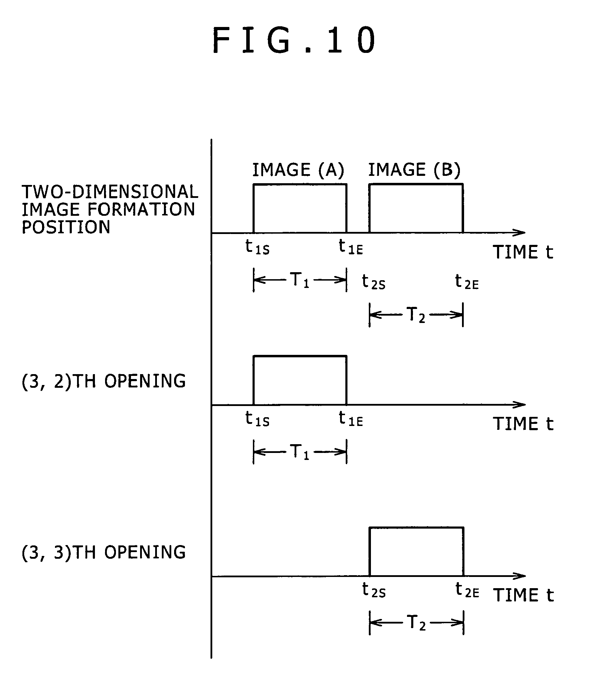

FIG. 10 is a diagrammatic view illustrating a formation timing of a two-dimensional image by the two-dimensional image formation apparatus as an example of the light modulation section and an opening/closing timing of an opening of the spatial filter as an example of the Fourier transform image selection section, and wherein a formation timing of a two-dimensional image by the two-dimensional image formation apparatus as an example of the light modulation section is illustrated at an upper stage while opening and closing timings of the opening of the spatial filter as an example of the Fourier transform image selection section are illustrated at medium and lower stages;

FIG. 11 is a schematic view illustrating a concept of spatial filtering by the spatial filter as an example of the Fourier transform image selection section in a time series;

FIG. 12 is a schematic view illustrating an image obtained by the spatial filtering illustrated in FIG. 11;

FIGS. 13A, 13B and 13C are schematic views showing first, second and third examples, respectively, of a configuration of a light source and an illumination optical system of the three-dimensional display apparatus of FIG. 1;

FIGS. 14A and 14B are schematic views showing fourth and fifth examples, respectively, of a configuration of the light source and the illumination optical system of the three-dimensional display apparatus of FIG. 1;

FIG. 15 is a schematic view illustrating a concept of a three-dimensional image display apparatus according to a second working example of the present invention along a yz plane;

FIG. 16 is a schematic view illustrating a concept of the three-dimensional image display apparatus of FIG. 15 but as viewed in an oblique direction;

FIG. 17 is a schematic view showing the arrangement of components of the three-dimensional image display apparatus of FIG. 15;

FIG. 18 is a schematic view illustrating a manner of production of diffracted lights of a plurality of diffraction orders by a two-dimensional image display apparatus as an example of a light modulation section of the three-dimensional image display apparatus of FIG. 15;

FIG. 19 is a schematic view illustrating a light condensing state of a third lens $L_3$ as an example of a Fourier transform image formation section and an image formation state of the spatial filter as an example of the Fourier transform image selection section in the three-dimensional image display apparatus of FIG. 15;

FIG. 20 is a schematic view illustrating a concept of a three-dimensional image display apparatus according to a third working example of the present invention along a yz plane;

FIG. 21 is a schematic view illustrating a concept of operation and action of an optical apparatus of the three-dimensional image display apparatus of FIG. 20;

FIG. 22 is a schematic view illustrating a concept of the three-dimensional image display apparatus of FIG. 20 as viewed in an oblique direction;

FIG. 23 is a schematic view showing an arrangement state of components of the three-dimensional image display apparatus of FIG. 20;

FIG. 24 is a schematic view illustrating a manner of production of diffracted lights of a plurality of diffraction orders by a two-dimensional image formation apparatus of the three-dimensional image display apparatus of FIG. 20;

FIG. 25 is a schematic view illustrating a light condensing state of a first lens $L_1$ as an example of a Fourier transform image formation section and an image formation state of the spatial filter as an example of a Fourier transform selection section in the three-dimensional image display apparatus of FIG. 20;

FIG. 26 is a schematic view illustrating a concept of a three-dimensional image display apparatus according to a fourth working example of the present invention;

FIG. 27 is a schematic sectional view illustrating the arrangement of a lower electrode, a fixed electrode and a movable electrode which compose a diffraction grating-light modulation element in the three-dimensional image display apparatus of FIG. 26;

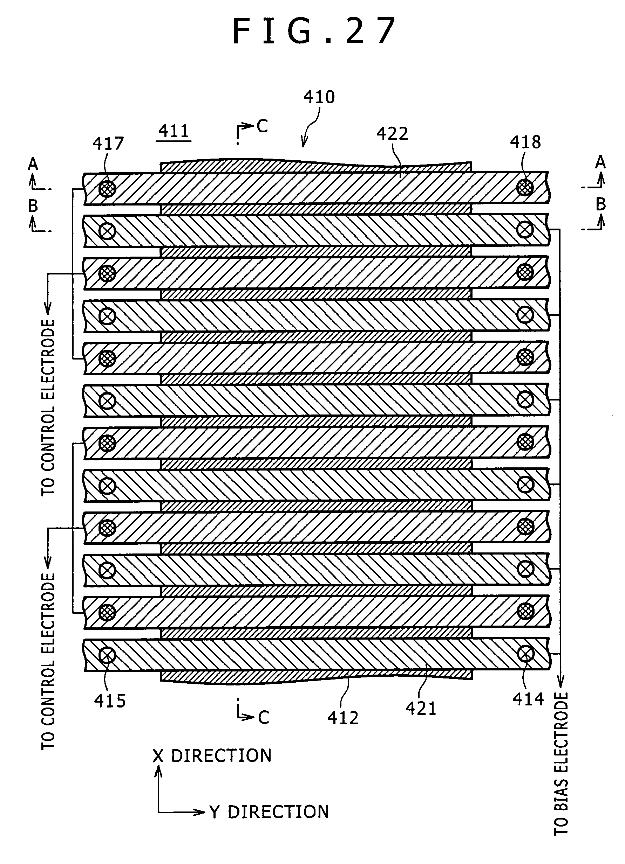

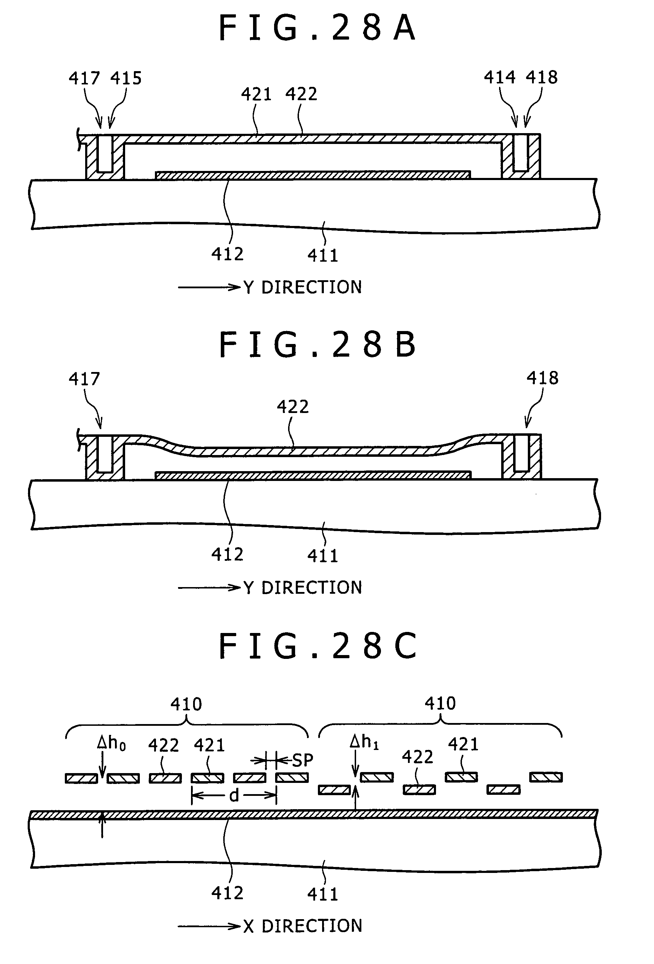

FIG. 28A is a schematic sectional view of the fixed electrode and so forth taken along line B-B of FIG. 27 and is a schematic sectional view of the movable electrode and so forth taken along line A-A of FIG. 27 where the diffraction grating-light modulation element is in an inoperative state, FIG. 28B is a schematic sectional view of the movable electrode and so forth taken along line A-A of FIG. 27 where the diffraction grating-light modulation element is in an operative state, and FIG. 28C is a schematic sectional view of the fixed electrode, movable electrode and so forth taken along line C-C of FIG. 27;

FIG. 29 is a schematic view illustrating a concept of part of a two-dimensional image formation apparatus as an example of a light modulation section and so forth in the three-dimensional image display apparatus of FIG. 26;

FIG. 30 is a schematic view illustrating a concept of a three-dimensional image display apparatus according to a fifth working example of the present invention;

FIG. 31 is a schematic view illustrating a concept of a three-dimensional image display apparatus according to a sixth working example of the present invention;

FIG. 32 is a schematic view illustrating a concept of part of a three-dimensional image display apparatus according to a seventh working example of the present invention along a yz plane;

FIGS. 33A and 33B are schematic views illustrating part of a modification to the three-dimensional image display apparatus of FIG. 1 along the yz plane;

FIG. 34 is a schematic view illustrating part of another modification to the three-dimensional image display apparatus of FIG. 1 along the yz plane;

FIG. 35 is a schematic view showing a configuration of a multi-unit three-dimensional image display apparatus formed from a combination of such three-dimensional image display apparatus as shown in FIG. 1; and

FIG. 36 is a schematic perspective view showing an example of a configuration of a conventional three-dimensional image display apparatus.

DETAILED DESCRIPTION OF THE PREFERRED EMBODIMENTS

First Working Example

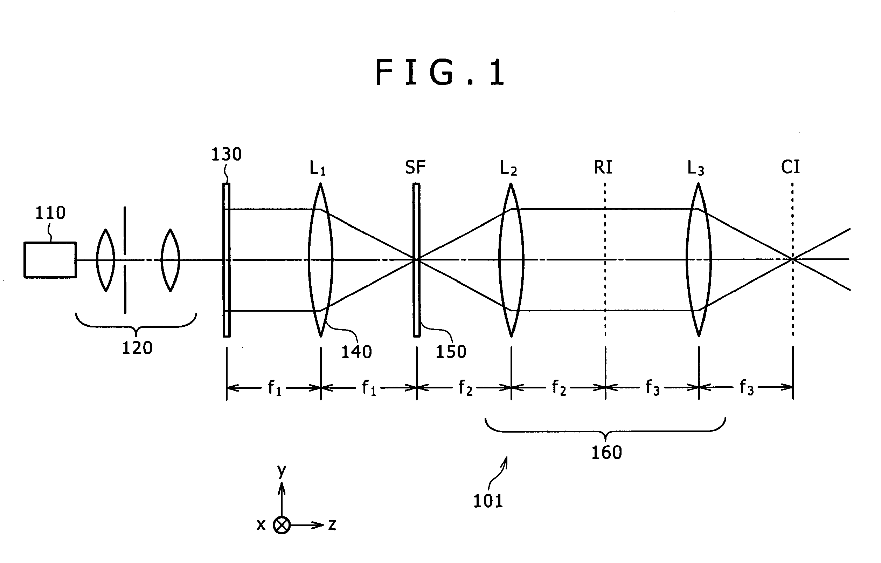

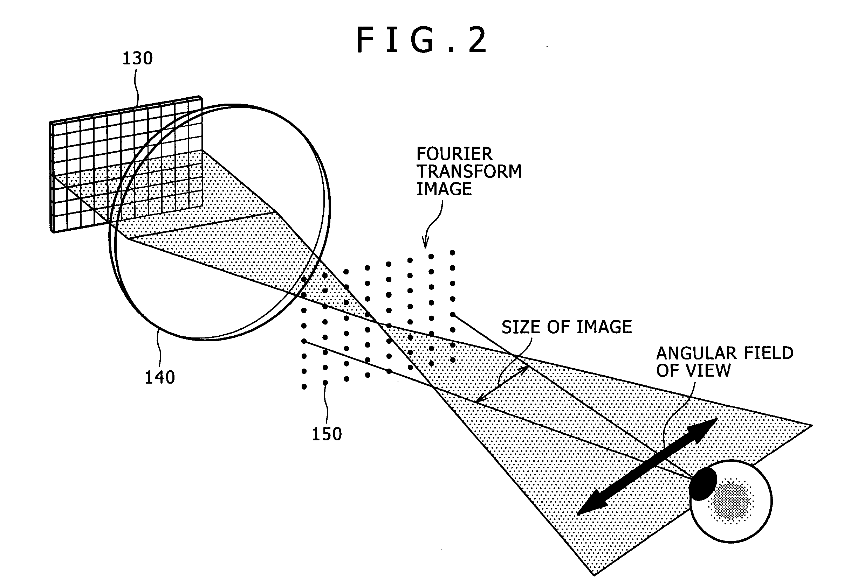

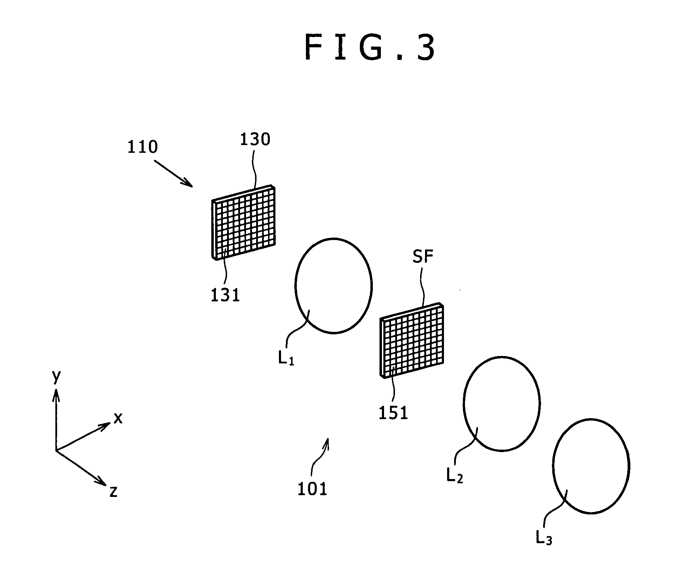

Referring first to FIGS. 1 to 3, there is shown a three-dimensional image display apparatus according to a first working example of the present invention which corresponds to the first and fourth embodiments of the present invention. The three-dimensional image display apparatus is formed as a three-dimensional image display apparatus of a single color display type. It is to be noted that, in the following description, an optical axis of the three-dimensional display apparatus is defined as a z axis while coordinate axes of a rectangular coordinate system in a plane perpendicular to the z axis are defined as an x axis and a y axis. Further, a direction parallel to the x axis is defined as an X direction, and a direction parallel to the y axis is defined as a Y direction. The X direction is, for example, a horizontal direction of the three-dimensional image display apparatus, and the Y direction is, for example, a vertical direction of the three-dimensional image display apparatus. FIG. 1 shows the three-dimensional image display apparatus of the first working example along the yz plane. Also a conceptive view of the three-dimensional image display apparatus of the first working example along the xz plane is substantially similar to FIG. 1. Meanwhile, FIG. 2 illustrates a concept when the three-dimensional image display apparatus of the first working example is viewed in an oblique direction, and FIG. 3 schematically illustrates an arrangement state of components of the three-dimensional image display apparatus of the first working example.

In display of a three-dimensional image according to the conventional light ray reproduction method, in order to emit a plurality of rays of light from a virtual origin on the surface of a virtual article existing at an arbitrary position, it is necessary to prepare an apparatus which can provide rays of light at various angles in advance. In particular, for example, in the apparatus described hereinabove with reference to FIG. 36, a large number of (for example, M × N) projector units 701 must be disposed in a juxtaposed relationship in the horizontal direction and the vertical direction.

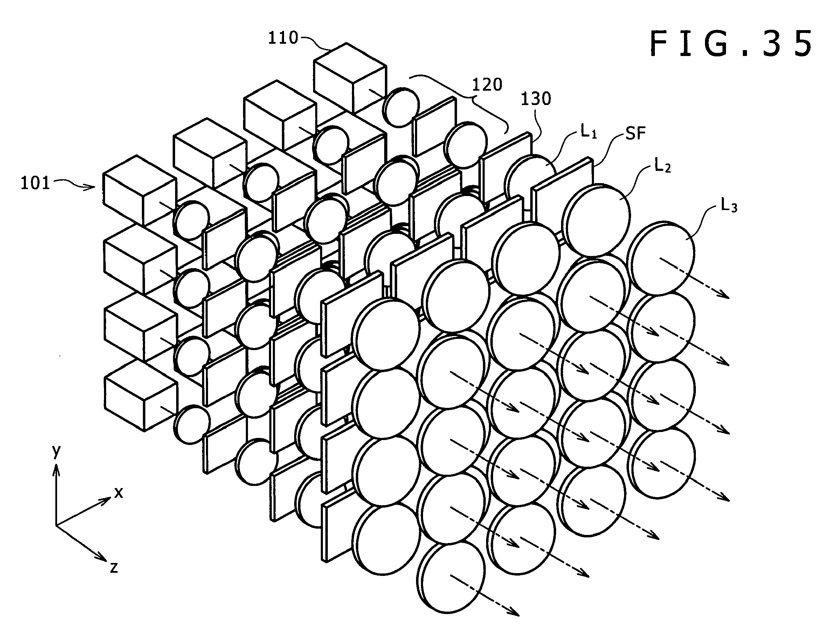

On the other hand, in the three-dimensional image display apparatus 101 of the first working example, the three-dimensional image display apparatus itself which includes the components shown in FIGS. 1 to 3 can produce and form a large number of light ray groups which have a higher spatial density than that of the prior art apparatus. The three-dimensional image display apparatus 101 of the first working example by itself has functions equivalent to those of an apparatus wherein a large number of (M × N) projector units 701 described hereinabove with reference to FIG. 36 are disposed in a juxtaposed relationship in the horizontal direction and the vertical direction. It is to be noted that, for example, where a multi-unit configuration is adopted, the three-dimensional image display apparatus may include a number of three-dimensional image display apparatus 101 of FIG. 1 equal to the number of divisional three-dimensional images. FIG. 35 shows an apparatus which includes 4 × 4 = 16 three-dimensional image display apparatus 101 of the first working example. Thus, the 16 three-dimensional image display apparatus 101 as a whole reproduce one image. In other words, according to the multi-unit configuration, the single three-dimensional image display apparatus 101 reproduces a 1/16 portion of one image as a whole. This similarly applies also to three-dimensional image display apparatus of the second to seventh working examples hereinafter described.

The three-dimensional image display apparatus 101 of the first working example includes:

(A) a light source 110;
(B) a light modulation section 130 having a plurality of pixels 131 for modulating light from the light source 110 by means of the pixels 131 to produce two-dimensional images and emitting a spatial frequency of the produced two-dimensional images along diffraction angles corresponding to a plurality of (totaling M × N) diffraction orders produced from each of the pixels 131;
(C) a Fourier transform image formation section 140 for performing Fourier transform of the spatial frequency of the two-dimensional images emitted from the light modulation section 130 to produce Fourier transform images whose number corresponds to the number of (totaling M × N) diffraction orders;
(D) a Fourier transform image selection section 150 for selecting one of the Fourier transform images produced by the Fourier transform image formation section which corresponds to the number of diffraction orders which corresponds to a desired diffraction order; and
(E) a conjugate image formation section 160 for forming a conjugate image of the Fourier transform image selected by the Fourier transform image selection section 150.

The conjugate image formation section 160 includes an inverse Fourier transform section (particularly a second lens $L_2$ hereinafter described) for inverse Fourier transforming the Fourier transform image selected by the Fourier transform image selection section 150 to form real images of the two-dimensional images produced by the light modulation section 130. Further, the Fourier transform image formation section 140 is formed from a lens, and the light modulation section 130 is disposed on a front focal plane of the lens while the Fourier transform image selection section 150 is disposed on a back focal plane of the lens. The Fourier transform image selection section 150 has a number of openings 151 equal to the number of diffraction orders which can be controlled to be opened and closed.

The spatial frequency of the two-dimensional images corresponds to image information whose carrier frequency is the spatial frequency of the pixel structure.

Meanwhile, according to the fourth embodiment of the present invention, the three-dimensional image display apparatus 101 of the first working example includes:

(A) a light source 110;
(B) a light modulation section 130 having P × Q (P and Q are arbitrary positive integers) openings disposed in a two-dimensional matrix along the X direction and the Y direction for producing a two-dimensional image through control of passage of light from the light source 110 for each of the openings and producing, based on the two dimensional images, for each of the openings, totaling $M \times N$ diffracted lights including M diffracted lights from the mth order to the m'th order diffracted lights along the X direction (m and m' are integers and M is a positive integer) and N diffracted lights from the nth order to the n'th order diffracted lights along the Y direction (n and n' are integers and N is a positive integer);

(C) a first lens $L_1$ (more particularly, a convex lens in the first working example) having a front focal plane on which the two-dimensional image formation apparatus 130 is disposed;

(D) a spatial filter SF disposed on a back focal plane of the first lens $L_1$ and having $M \times N$ openings 151 including M openings 151 disposed along the X direction and N openings 151 disposed along the Y direction, the openings 151 being capable of being controlled between open and closed states;

(E) a second lens $L_2$ (more particularly, a convex lens in the first working example) having a front focal plane on which the spatial filter SF is disposed; and

(F) a third lens $L_3$ (more particularly, a convex lens in the first working example) having a front focus positioned at a back focus of the second lens $L_2$.

In the three-dimensional image display apparatus 101 of the first working example and three-dimensional image display apparatus of the fourth and seventh working examples hereinafter described, P = 1,024 and Q = 768, and m = -5, m' = 5, M = m' - M + 1 = 11, n = -5, n' = 5, and N = n' - n + 1 = 11. However, the values of the variables mentioned are not limited to those specifically given as above. Further, the z axis (which corresponds to the optical axis) passes the center of the components of the three-dimensional image display apparatus of the first working example or any of the second to seventh working examples and besides extends perpendicularly to the components of the three-dimensional image display apparatus. If the components of the three-dimensional image display apparatus of the first working example of the present invention are compared with the components of the three-dimensional image display apparatus of the fourth embodiment or the seventh embodiment of the present invention, then the light modulation section 130 corresponds to the two-dimensional image formation apparatus 130; the Fourier transform image formation section 140 corresponds to the first lens $L_1$; the Fourier transform image selection section 150 corresponds to the spatial filter SF; the inverse Fourier transform section corresponds to the second lens $L_2$; and the conjugate image formation section 160 corresponds to the second lens $L_2$ and the third lens $L_3$. Therefore, the following description is given with the terms of the two-dimensional image formation apparatus 130, first lens $L_1$, spatial filter SF, second lens $L_2$ and third lens $L_3$.

An illumination optical system 120 for shaping light emitted from the light source 110 is interposed between the light source 110 and the two-dimensional image formation apparatus 130. Thus, the two-dimensional image formation apparatus 130 is illuminated with light (illumination light) emitted from the light source 110 and passing through the illumination optical system 120. For the illumination light, for example, light emitted from the light source 110 having high spatial coherence and shaped into parallel light by the illumination optical system 120 is used. It is to be noted that a property of the illumination light and a particular example of a configuration for obtaining the illumination light are hereinafter described.

The two-dimensional image formation apparatus 130 is formed from a two-dimensional spatial light modulator having a plurality of pixels 131 arrayed two-dimensionally and each having an opening. In particular, the two-dimensional image formation apparatus 130 or two-dimensional spatial light modulator is formed from a liquid crystal display apparatus of the transmission type having $P \times^* Q$ pixels 131 arrayed two-dimensionally, that is, in a two-dimensional matrix along the X and Y directions, and each of the pixels 131 has an opening.

One pixel 131 is formed from an overlapping region of a first transparent electrode and a second transparent electrode including a liquid crystal cell. Then, the liquid crystal cell operates as a kind of light shutter (light valve), that is, the light transmission factor of each pixel 131 is controlled, to control the light transmission factor of light emitted from the light source 110 so that two-dimensional images are obtained as a whole. A rectangular opening is provided in the overlapping region of the first transparent electrode and the second transparent electrode, and when light emitted from the light source 110 passes through the opening, Fraunhofer diffraction occurs. As a result, $M \times N = 121$ diffracted lights are produced by each pixel 131. In other words, it can be considered that, since the number of pixels 131 is $P \times Q$, totaling $P \times Q \times M \times N$ diffracted lights are produced. In the two-dimensional image formation apparatus 130, a spatial frequency of the two-dimensional images is emitted from the two-dimensional image formation apparatus 130 along diffraction angles corresponding to a plurality of (totaling $M \times N$) diffraction orders produced from each of the pixels 131. It is to be noted that the diffraction angle differs also depending upon the spatial frequency of the two-dimensional images.

The two-dimensional image formation apparatus 130 is disposed on the front focal plane (plane of the focus on the light source side) of the first lens $L_1$ which has a focal distance $f_1$, and the spatial filter SF is disposed on the back focal plane (plane of the focus on the observer side). $M \times N = 121$ Fourier transform images whose number is equal to the number of diffraction orders are produced by the first lens $L_1$ and formed on the spatial filter SF. It is to be noted that, in FIG. 2, 64 Fourier transform images are indicated as dots for the convenience of illustration.

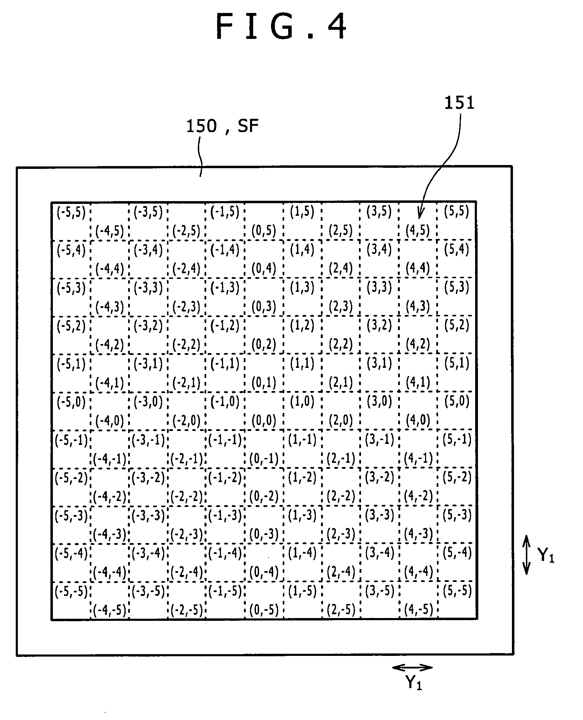

The spatial filter SF particularly is a spatial filter which allows temporal opening and closing control thereof for

spatially and temporally filtering Fourier transform images. More particularly, the spatial filter SF has a number of openings 151 equal to the number of (particularly, M × N = 121) diffraction orders which can be controlled to open and close. Then, in the spatial filter SF, a desired one of the openings 151 is placed into an open state in synchronism with a production timing of two-dimensional images by the two-dimensional image formation apparatus 130 to select one Fourier transform image corresponding to a desired diffraction order. More particularly, the spatial filter SF can be formed, for example, from a liquid crystal display apparatus of the transmission type or the reflection type which is formed using ferroelectric liquid crystal and has M × N pixels or an MEMS of the two-dimensional type including an apparatus in which movable mirrors are disposed in a two-dimensional matrix. It is to be noted that a schematic front elevational view of the spatial filter SF where it is formed from a liquid crystal display apparatus is shown in FIG. 4. Referring to FIG. 4, numerical values $(m_0, no)$ indicate a number of the opening 151 and simultaneously indicate a diffraction order. In particular, to the (3, 2)th opening 151, a Fourier transform image having a diffraction order number of $m_0 = 3$ and no = 2 comes.

As described hereinabove, the conjugate image formation section 160 is particularly formed from the second lens $L_2$ and the third lens $L_3$. Then, the second lens $L_2$ having a focal distance $f_2$ inverse Fourier transforms Fourier transform images filtered by the spatial filter SF to form real images RI of the two-dimensional images formed by the two-dimensional image formation apparatus 130. Further, the third lens $L_3$ having a focal distance $f_3$ forms conjugate images CI of the Fourier transform images filtered by the spatial filter SF.

The second lens $L_2$ is disposed such that the spatial filter SF is positioned on the front focal plane thereof and real images RI of two-dimensional images formed by the two-dimensional image formation apparatus 130 are formed on the back focal plane thereof. The magnification of the real images RI obtained here with respect to the two-dimensional image formation apparatus 130 can be varied by arbitrarily selecting the focal distance $f_2$ of the second lens $L_2$.

Meanwhile, the third lens $L_3$ is disposed such that the front focal plane thereof coincides with the back focal plane of the second lens $L_2$ and conjugate images CI of the Fourier transform images are formed on the back focal plane thereof. Here, since the back focal plane of the third lens $L_3$ is a conjugate plane of the spatial filter SF, two-dimensional images produced by the two-dimensional image formation apparatus 130 are equivalently outputted from a portion on the spatial filter SF corresponding to one opening 151. Then, the amount of rays of light produced and outputted finally can be defined as an amount calculated by multiplying the number of rays of light equal to the number of pixels (P × Q) by the number of (particularly, M × N) diffraction orders having passed through the optical system. Further, while the conjugate images CI of the Fourier transform images are formed on the back focal plane of the third lens $L_3$, it can be considered that the light ray groups are disposed regularly two-dimensionally on the back focal plane of the third lens $L_3$. In other words, generally a number of projector units shown in FIG. 36 equal to the number of (particularly M × N) diffraction orders are disposed equivalently on the back focal plane of the third lens $L_3$.

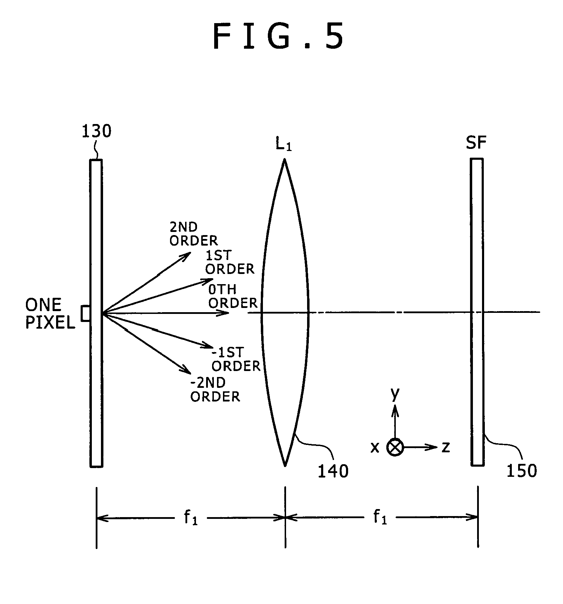

As schematically shown in FIGS. 2 and 5, one pixel 131 of the two-dimensional image formation apparatus 130 produces 11 different diffracted lights from the -5th to +5th orders along the X direction and 11 different diffracted lights from the -5th to +5th orders along the Y direction and consequently produces totaling M × N = 121 different diffracted lights. It is to be noted that, while only the zeroth order light (no = 0), ±1st order lights (no = ±1) and ±2nd order lights (no = ±2) are illustrated as representative diffracted lights in FIG. 5, actually also higher order diffracted lights are produced, and a three-dimensional image is finally formed from the diffracted lights. Here, the diffracted light (light flux) of each diffraction order intensively includes all image information (information of all of the pixels) of the two-dimensional images formed by the two-dimensional image formation apparatus 130. All of rays of light of a light ray group (group of 11 × 11 = 121 rays of light) produced by diffraction from the same pixel on the two-dimensional image formation apparatus 130 have the same image information at the same point of time. In other words, in the two-dimensional image formation apparatus 130 formed from a liquid crystal display apparatus of the transmission type having the P × Q pixels 131, light from the light source 110 is modulated by the pixels 131 to produce two-dimensional images, and a spatial frequency of the produced two-dimensional images is emitted along diffraction angles corresponding to a plurality of diffraction orders (totaling M × N diffraction orders) produced from each of the pixels 131. In other words, a kind of M × N copies of the two-dimensional images are emitted along the diffraction angles corresponding to the number of diffraction orders (totaling M × N diffraction orders) from the two-dimensional image formation apparatus 130.

Then, the spatial frequency of the two-dimensional images formed by the two-dimensional image formation apparatus 130 in which all pixel information of the two-dimensional image is intensively included is Fourier transformed by the first lens $L_1$ to produce Fourier transform images whose number corresponds to the number of diffraction orders (totaling M × N diffraction orders). The Fourier transform images are formed on the spatial filter SF. Since the Fourier transform images of the spatial frequency of the two-dimensional images emitted along diffraction angles corresponding to a plural number of diffraction orders are produced by the first lens $L_1$, Fourier transform images of a spatially high frequency can be obtained.

Here, where the wavelength of light (illumination light) emitted from the light source 110 is represented by λ (mm), the spatial frequency of the two-dimensional images formed by the two-dimensional image formation apparatus 130 by ν (lp/mm), and the focal distance of the first lens $L_1$ by $f_1$ (mm), light (Fourier transform images) having the spatial

frequency $\nu$ appears at the position of a distance $Y_1$ (mm) from the optical axis on the back focal plane of the first lens $L_1$.

$$Y_1 \; = \; f_1 \cdot \lambda \cdot \nu \qquad\qquad\qquad (1)$$

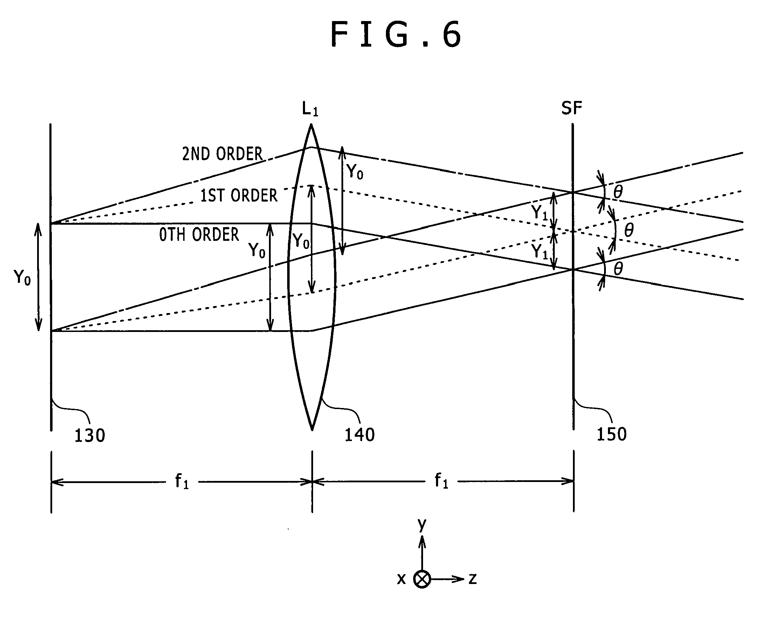

A condensation state of the first lens $L_1$ is schematically illustrated in FIG. 6. It is to be noted that, in FIG. 6, "$Y_0$" represents the length in the y axis direction of the two-dimensional images formed by the two-dimensional image formation apparatus 130, and "$Y_1$" represents the distance in the y axis direction of Fourier transform images on the spatial filter SF based on the two-dimensional images formed by the two-dimensional image formation apparatus 130. Further, a zeroth-order diffracted light is indicated by a solid line and a 1st-order diffracted light is indicated by a dotted line while a second-order diffracted light is indicated by an alternate long and short dash line. The diffracted lights of the diffraction orders, that is, a number of produced Fourier transform images whose number corresponds to the number of diffraction orders, are condensed at the different openings 151 of the spatial filter SF by the first lens $L_1$ (refer also to FIG. 2). The number of openings 151 is $M \times N = 121$ as described hereinabove. The condensing angles $\theta$ on the spatial filter SF (scattering angles after emitted from the spatial filter SF) are equal with regard to the $P \times Q$ pixels 131 on Fourier transform images (or diffracted lights) having the same diffraction order number. The distance between Fourier transform images of adjacent diffraction orders can be determined in accordance with the expression (1) given above. From the expression (1), the position of a Fourier transform image (image forming position on the spatial filter SF) can be varied by arbitrarily selecting the focal distance $f_1$ of the first lens $L_1$.

In order for the first lens $L_1$ to pass therethrough a spatial frequency of two-dimensional images emitted along diffraction angles corresponding to a plural number of diffraction orders, it is necessary to select the numerical aperture NA of the first lens $L_1$ in accordance with a diffraction order number to be utilized, and it is demanded that the aperture number of all lenses succeeding the first lens $L_1$ be greater than the numerical aperture NA of the first lens $L_1$ irrespective of the focal distance.

The size of the openings 151 may be set equal to the value of $Y_1$ in the expression (1). As an example, where the wavelength $\lambda$ of the illumination light is 532 nm, the focal distance $f_1$ of the first lens $L_1$ is 50 mm and the size of one pixel 131 of the two-dimensional image formation apparatus 130 is approximately 13 to 14 $\mu$m, the value of $Y_1$ is approximate 2 mm. This signifies that Fourier transform images corresponding to the diffraction orders can be obtained in a high density of a distance of approximately 2 mm. In other words, $11 \times 11 = 121$ Fourier transform images can be obtained at distances of approximately 2 mm in both of the X and Y directions on the spatial filter SF.

The spatial frequency $\nu$ of the two-dimensional images formed by the two-dimensional image formation apparatus 130 has a period formed from two successive pixels 131 of the two-dimensional image formation apparatus 130 at the highest because the two-dimensional images are formed by the two-dimensional image formation apparatus 130 formed from $P \times Q$ pixels 131.

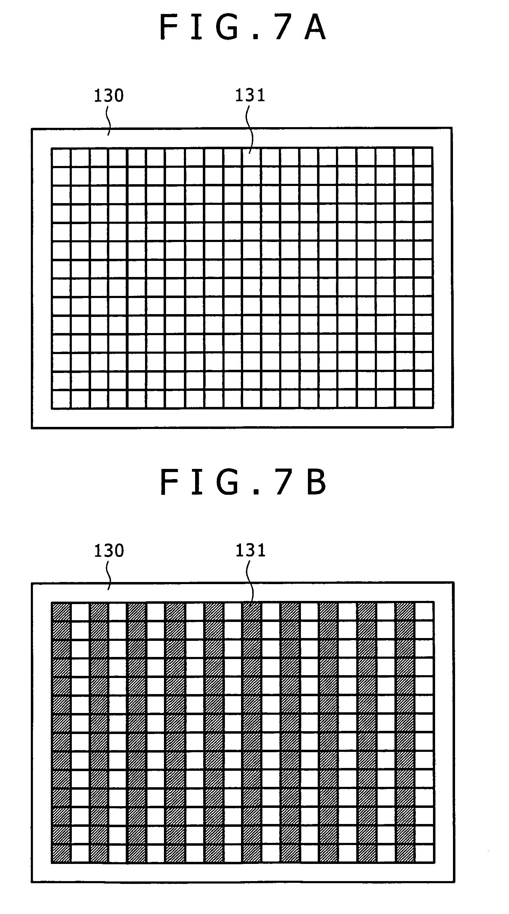

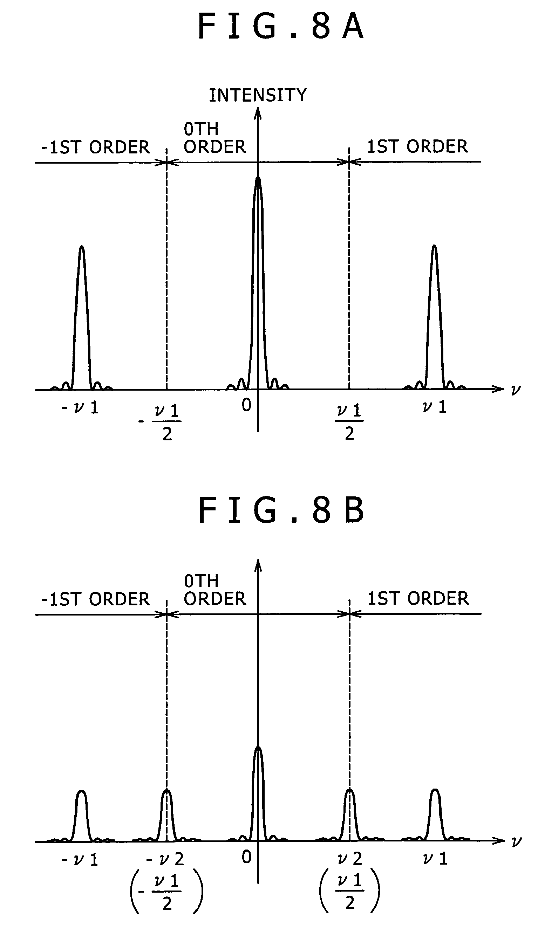

FIG. 7A shows a schematic front elevational view of the two-dimensional image formation apparatus 130 in a state wherein the spatial frequency of the two-dimensional images formed by the two-dimensional image formation apparatus 130 is lowest. Here, the state wherein the spatial frequency is lowest is a state wherein all pixels display the black or the white, and the spatial frequency of the two-dimensional images in this instance has only a plane wave component (DC component). It is to be noted that FIG. 7A illustrates a state wherein all of the pixels display the white. A frequency characteristic of the light intensity of a Fourier transform image formed by the first lens $L_1$ in this instance is schematically illustrated in FIG. 8A. As seen in FIG. 8A, peaks of the light intensity of the Fourier transform image appear at the distances of the frequency $\nu_1$.

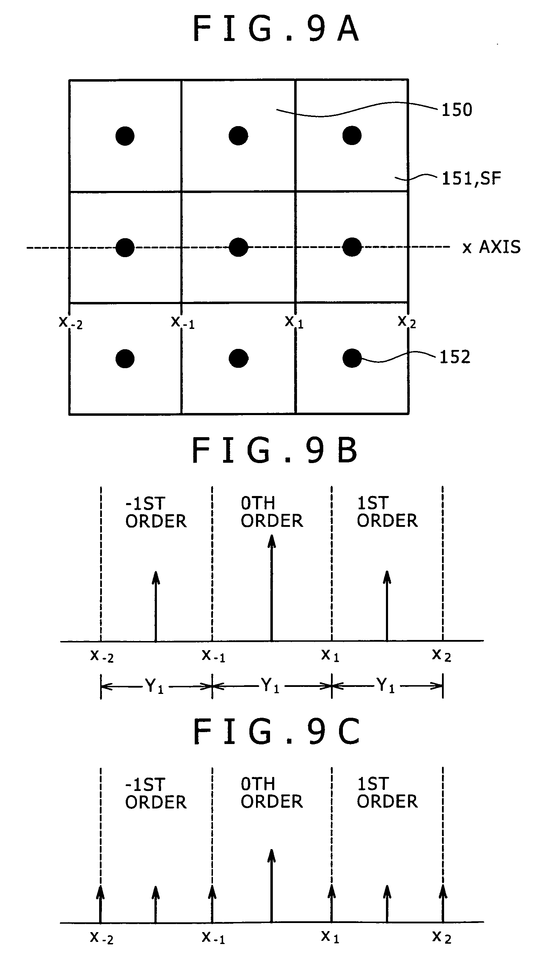

Meanwhile, FIG. 7B shows a schematic front elevational view of the two-dimensional image formation apparatus 130 in a state wherein the spatial frequency of the two-dimensional images formed by the two-dimensional image formation apparatus 130 is highest. Here, the state wherein the spatial frequency is highest is a case wherein all pixels alternately display the black and the white. A frequency characteristic of the light intensity of a Fourier transform image formed by the first lens $L_1$ is schematically illustrated in FIG. 8B. In FIG. 8B, peaks of the light intensity of the Fourier transform image appear at the distances of a frequency $\nu_2$ ($= \nu_1/2$). FIG. 9A schematically illustrates a distribution of Fourier transform images on the spatial filter SF (on the xy plane), and FIGS. 9B and 9C schematically illustrate light intensity distributions of the Fourier transform images on the x axis (indicated by a dotted line) of FIG. 9A. It is to be noted that FIG. 9B illustrates the lowest spatial frequency component (plane wave component) while FIG. 9C illustrates the highest spatial frequency component.

The shape in plan of the openings 151 of the spatial filter SF may be determined based on the shape of a Fourier transform image. Further, each opening 151 may be provided for each diffraction order so that a peak position of a plane wave component of a Fourier transform image may be the center of the opening 151. Consequently, a peak of the light intensity of a Fourier transform image is positioned at the central position 152 of each opening 151. In particular, each opening 151 should be formed so that all of positive and negative highest spatial frequencies of a two-dimensional image centered at a cyclical pattern of Fourier transform images where the spatial frequency of the two-dimensional images is the lowest spatial frequency component (plane wave component) may pass through the opening 151.

Incidentally, the state wherein the spatial frequency is highest is a case wherein all of the pixels alternately display the black and the white as seen in FIG. 7B. Further, the spatial frequency of the pixel structure of the two-dimensional image formation apparatus 130 and the spatial frequency of the two-dimensional images have the following relationship. In particular, if it is assumed that the openings occupy all of the pixels (that is, the aperture ratio is 100%), then the highest spatial frequency of the two-dimensional images is 1/2 the spatial frequency of the pixel structure. On the other hand, where the openings occupy a certain ratio of the pixels (lower than 100%), the highest spatial frequency of the two-dimensional images is lower than 1/2 the spatial frequency of the pixel structure. Therefore, all of the spatial frequencies of the two-dimensional images appear up to a position of one half of a distance between cyclic patterns arising from the pixel structure and appearing on the spatial filter SF. From this, all of the openings 151 can be disposed such that they do not interfere with each other spatially. In particular, the Fourier transform image having the diffraction order number of $m_0 = 3$ and no = 2 comes to the (3, 2)th opening 151 while the Fourier transform image having the diffraction order number of $m_0 = 3$ and no = 2 does not come to the other openings 151. Consequently, a spatial frequency of two-dimensional images formed by the two-dimensional image formation apparatus 130 exists in a Fourier transform image positioned in one opening 151 on the spatial filter SF having the openings 151 which are independent of each other for individual Fourier transform images while a miss of a spatial frequency of the two-dimensional images formed by the two-dimensional image formation apparatus 130 by spatial limitation of the openings 151 does not occur. It is to be noted that the spatial frequency of the pixel structure can be regarded as a carrier frequency, and the spatial frequency of the two-dimensional images corresponds to image information where the spatial frequency of the pixel structure is the carrier frequency.

Then, in the spatial filter SF, opening/closing control of the openings 151 is performed in order to control passage/interception of M × N Fourier transform images. If the spatial filter SF is formed from, for example, a liquid crystal display apparatus, then the opening/closing control of the openings 151 can be performed by causing the liquid crystal cells to operate as a kind of light shutters (light valves).

Now, a timing of the opening/closing control of the openings 151 of the spatial filter SF is described.

In the spatial filter SF, in order to select a Fourier transform image corresponding to a desired diffraction order, opening/closing control of an opening 151 is performed in synchronism with an image output of the two-dimensional image formation apparatus 130. This operation is described with reference to FIGS. 10, 11 and 12. It is to be noted that, at the uppermost stage of FIG. 10, a timing of an image output of the two-dimensional image formation apparatus 130 is illustrated, and at the intermediate stage of FIG. 10, an opening/closing timing of the (3, 2)th opening 151 of the spatial filter SF is illustrated. Further, at the lowermost stage of FIG. 10, an opening/closing timing of the (3, 3)th opening 151 is illustrated. It is to be noted that also the three-dimensional image display apparatus of the third to seventh working examples hereinafter described operate similarly.

It is assumed that, as seen in FIG. 10, on the two-dimensional image formation apparatus 130, an image "A" is displayed, for example, within a period $T_1$ from time $t_{1S}$ to time $t_{1E}$, and another image "B" is displayed within another period $T_2$ from time $t_{2S}$ to time $t_{2E}$. At this time, in the spatial filter SF, the (3, 2)th opening 151 is controlled to an open state within the period $T_1$ and the (3, 3)th opening 151 is controlled to an open state within the period $T_2$ as seen in FIG. 10. Thus, different image information can be added to Fourier transform images produced as different diffraction orders with regard to the same pixel 131 of the two-dimensional image formation apparatus 130 and produced by the first lens $L_1$. In other words, within the period $T_1$, the Fourier transform image having the diffraction order number of $m_0 = 3$ and no = 2 and obtained with regard to the pixel 131 of the two-dimensional image formation apparatus 130 includes image information relating to the image "A". On the other hand, the Fourier transform image having the diffraction order number of $m_0 = 3$ and no = 3 and obtained with regard to the same certain pixel of the two-dimensional image formation apparatus 130 includes image information relating to the image "B".

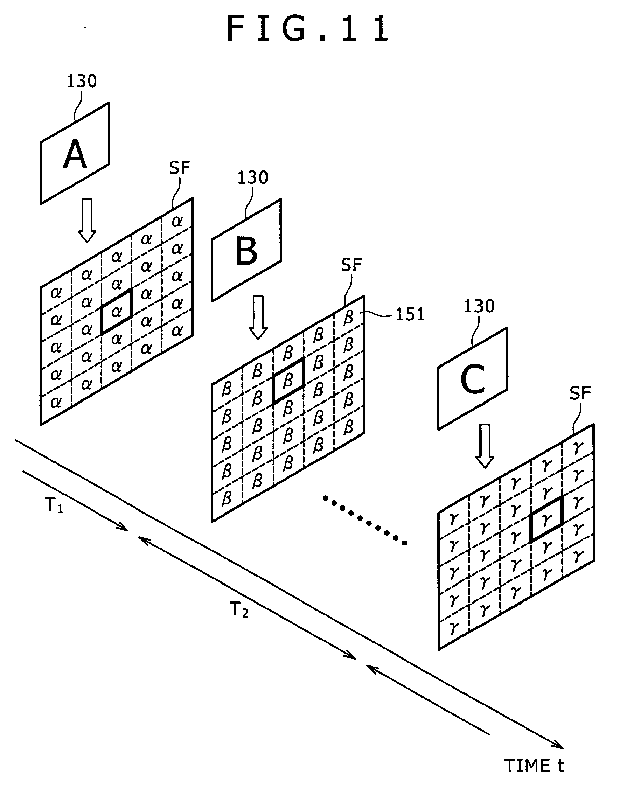

FIG. 11 schematically illustrates a timing of image formation of the two-dimensional image formation apparatus 130 and a timing of control of an opening 151. Within the period $T_1$, the image "A" is displayed on the two-dimensional image formation apparatus 130, and M × N Fourier transform images are condensed as Fourier transform images "α" at the corresponding openings 151 of the spatial filter SF. Within the period $T_1$, since only the (3, 2)th opening 151 is opened, only a Fourier transform image "α" having the diffraction order number of $m_0 = 3$ and no = 2 passes through the spatial filter SF. Within the next period $T_2$, the image "B" is displayed on the two-dimensional image formation apparatus 130, and M × N Fourier transform images are condensed as Fourier transform images "β" at the corresponding openings 151 of the spatial filter SF similarly. Within the period $T_2$, since only the (3, 3)th opening 151 is opened, only the Fourier transform image "β" having the diffraction order number of $m_0 = 3$ and no = 3 passes through the spatial filter SF. Thereafter, opening/closing control of the openings 151 of the spatial filter SF is successively performed in synchronism with image formation timings of the two-dimensional image formation apparatus 130. It is to be noted that, in FIG. 11, an opening 151 in an open state is surrounded by a solid line while any other opening 151 in a closed state is surrounded by a dotted line.

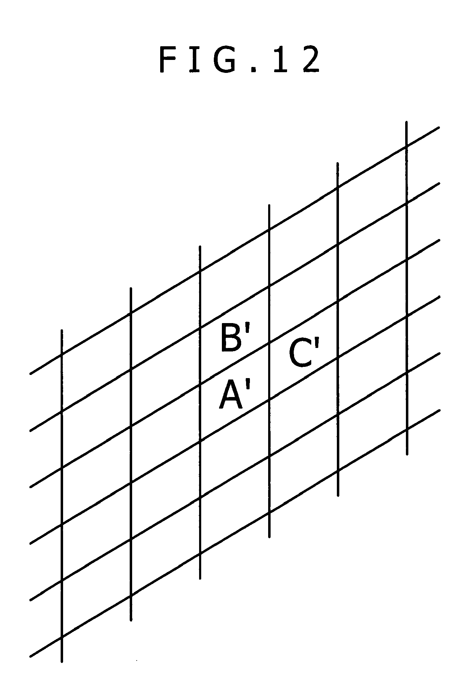

Where image formation of the two-dimensional image formation apparatus 130 and opening/closing control of the opening 151 are performed at such timings as described above, an image obtained as a final output of the three-dimensional image display apparatus is schematically shown in FIG. 12. Referring to FIG. 12, an image "A'" opens only the (3, 2)th opening 151, and therefore, only a Fourier transform image "$\alpha$" having the diffraction order number of $m_0 = 3$ and no = 2 is obtained as a result of passage thereof through the spatial filter SF. Meanwhile, another image "B'" opens only the (3, 3)th opening 151, and therefore, only a Fourier transform image "$\beta$" having the diffraction order number of $m_0 = 3$ and no = 3 is obtained as a result of passage thereof through the spatial filter SF. A further image "C'" opens only the (4, 2)th opening 151, and therefore, only a Fourier transform image "$\gamma$" having the diffraction order number of $m_0 = 4$ and no = 2 is obtained as a result of passage thereof through the spatial filter SF. It is to be noted that the image shown in FIG. 12 is observed by an observer. In FIG. 12, though different images are separated by solid lines, the solid lines are virtual solid lines. Further, although the images shown in FIG. 12 are not obtained at the same timing, since the changeover period between images is a very short period of time, the images are observed by the eyes of the observer as if they were displayed at the same time. For example, formation of images for all orders (M $\times$ N) of the two-dimensional image formation apparatus 130 and selection of an image of the spatial filter SF are performed within a display period of one frame. Further, while the images are shown two-dimensionally in FIG. 12, a three-dimensional image is actually observed by the observer.

In particular, two-dimensional images (for example, in time series, the images "A'", "B'", $\cdots$ , "C'") produced by the two-dimensional image formation apparatus 130 are outputted from the back focal plane of the third lens $L_3$ as described hereinabove. In particular, as a whole, a number of projector units shown in FIG. 36 equal to the number of diffraction orders (in particular, M $\times$ N projector units) are disposed on the back focal plane of the third lens $L_3$, and this is equivalent if, in a time series, the image "A'" is outputted from a certain projector unit and the image "B'" is outputted from another projector unit and then the image "C'" is outputted from a further projector unit. Then, for example, if the two-dimensional image formation apparatus 130 reproduces images in time series based on data of a large number of images of a certain article picked up from various positions (angles) (or images produced by a computer), then a three-dimensional image can be obtained based on the images.

It is to be noted that, where the brightness of an image obtained differs depending upon the number of diffraction orders, a darkening filter for darkening bright images with reference to the darkest image may be disposed on the back focal plane of the third lens $L_3$. This similarly applies also to the three-dimensional image display apparatus of the second to seventh working examples hereinafter described.

Further, the opening/closing control of the openings 151 provided on the spatial filter SF need not necessarily be performed for all of the openings 151. In particular, for example, the opening/closing control of the openings 151 may be performed for alternate ones of the openings 151 or only for those of the openings 151 which are positioned at desired positions. This similarly applies also to the three-dimensional image display apparatus of the second to seventh working examples hereinafter described.

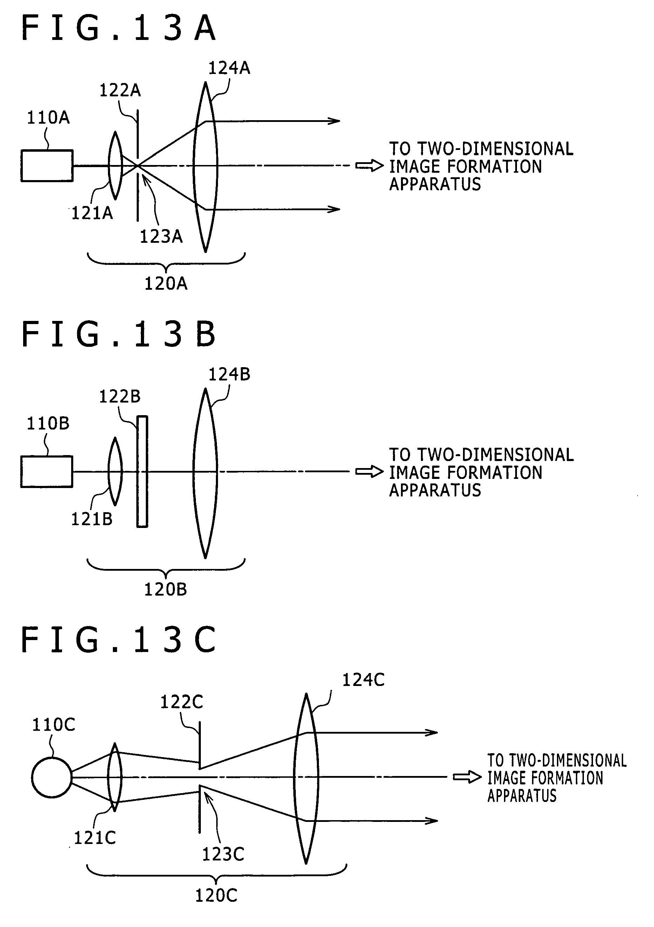

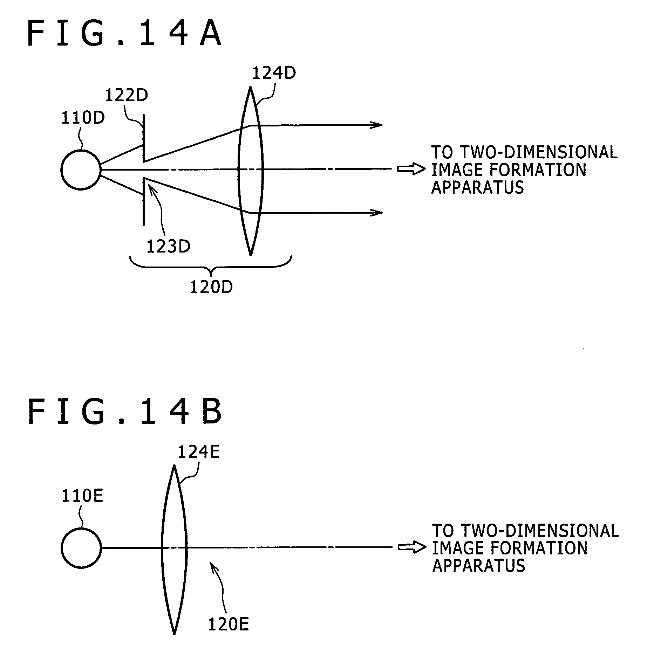

Examples of the light source and the illumination optical system are shown in FIGS. 13A to 13C and 14A and 14B. Here, a characteristic of light (illumination light) emitted from a light source and shaped by an illumination optical system for illuminating the two-dimensional image formation apparatus 130 is described below in connection with spatial coherence.

The spatial coherence indicates interference of light which occurs in a sectional plane in an arbitrary space, and the degree of the interference can be indicated by a contrast of interference fringes produced. In a production process of interference fringes, an interference fringe having the highest contrast is produced by interference of a plane wave or a spherical wave which can be exchanged optically for a plane wave. From this, it can be recognized that light having the highest spatial coherence is a plane wave (or a spherical wave). For example, a plane wave having only a component in one advancing direction has the highest spatial coherence, and as the degree of the spatial coherence decreases, an increasing plural number of components having different advancing directions appear. Argument of the distribution of advancing direction components of light is equivalent to argument of the spatial magnitude of the origin of light emission or a secondary light emitting point. From the foregoing, the spatial coherence can be argued based on the spatial magnitude of the origin of light emission or a secondary light emitting point. The spatial coherence, that is, the spatial magnitude of the light source, makes a factor which determines a spatial frequency characteristic of an image in the three-dimensional image display apparatus. If light other than light which has full spatial coherence is used as the illumination light, then reduction of the contrast occurs in order from high frequency components. Since a demand for a spatial frequency characteristic of images to be obtained is different depending upon a particular application, particular numerical values are not mentioned here, but various configuration methods for flexibly coping with different demands are described.

In the three-dimensional image display apparatus 101 of the first working example, the configuration method for the light source and the illumination optical system is different depending upon whether or not light having high spatial coherence is used as illumination light. Further, the configuration of the illumination optical system is different depending upon the characteristic of the light source. In the following, combinations of the configuration methods for the light source and the illumination light system are described. It is to be noted that it is a precondition that, in all cases, the light source is a single color light source or an almost single color light source.

FIG. 13A shows an example as a first configuration example wherein an illumination optical system 120A generally having high spatial coherence is formed from a light source 110A having high spatial coherence. The light source 110A is formed from a laser. The illumination optical system 120A includes a lens 121A, a circular opening plate 122A and another lens 124A disposed in order from the light source side. The circular opening plate 122A has a circular aperture 123A provided at the center thereof. The aperture 123A is disposed at a light condensing position of the lens 124A. The lens 124A functions as a collimator lens.

FIG. 13B shows an example as a second configuration example wherein an illumination optical system 120B generally having spatial coherence which is not high is formed using a light source 110B having high spatial coherence. The light source 110B is formed from, for example, a laser. The illumination optical system 120B includes a lens 121B, a circular opening plate 122B and another lens 124B disposed in order from the light source side. The circular opening plate 122B may be a movable diffusion plate.

FIG. 13C and FIG. 14A show examples as a third configuration example and a fourth configuration example, respectively, wherein a illumination optical system 120C or 120D generally having high spatial coherence is formed using a light source 110C or 110D having spatial coherence which is not high. The light source 110C or 110D is formed from, for example, a light emitting diode (LED) or a white light source. The illumination optical system 120 of FIG. 13C includes a lens 121C, a circular opening plate 122C and another lens 124C disposed in order from the light source side. The circular opening plate 122C has a circular aperture 123C provided at the center thereof. The aperture 123C is disposed at a light condensing position of the lens 124C. The lens 124C functions as a collimator lens. Meanwhile, the illumination optical system 120D of FIG. 14A is different from the illumination optical system 120C of FIG. 13C in that it does not include the lens 121C, but includes a circular opening plate 122D, an aperture 123D and a lens 124D disposed in order from the light source side.

FIG. 14B shows an example as a fifth configuration example wherein an illumination optical system 120E generally having spatial coherence which is not high is formed using a light source 110E having spatial coherence which is not high. The illumination optical system 120E includes only a lens 124E in addition to the light source 110E.

In the configuration examples, where an illumination light source generally having high spatial coherence is to be configured, the secondary light emitting point is set small without relying upon the light source. On the other hand, where an illumination light source generally having spatial coherence which is not high is to be configured, the secondary light emitting point is set large without relying upon the light source. The configuration examples of the light source and the illumination optical system described above can be applied similarly also to the three-dimensional image display apparatus of the second to seventh working examples hereinafter described.

As described above, according to the three-dimensional image display apparatus 101 of the first working example, a spatial frequency of two-dimensional images produced by the light modulation section (two-dimensional image formation apparatus) 130 is emitted along diffraction angles corresponding to diffraction orders and Fourier transformed by the Fourier transform image formation section 140 (first lens $L_1$) to obtain Fourier transform images. Then, the Fourier transform images are spatially and temporally filtered by the Fourier transform image selection section 150 (spatial filter SF), and then conjugate images CI of the filtered Fourier transform images are formed. Therefore, light ray groups can be produced and scattered in a high spatial density and besides in a distributed state in a plurality of directions without increasing the scale of the entire three-dimensional image display apparatus. Further, individual light rays which are components of the light ray groups can be controlled temporally and spatially independently of each other. Consequently, a three-dimensional image formed from rays of light having quality proximate to that of an article in the real world can be obtained.

Further, according to the three-dimensional image display apparatus 101 of the first working example, since the light ray reproduction method is used, a three-dimensional image which satisfies such visual sense functions as focusing, convergence and moving parallax can be provided. Further, according to the three-dimensional image display apparatus 101 of the first working example, since high-order diffracted lights are utilized efficiently, a number of rays of light (a kind of copy of two-dimensional images) which can be controlled by a single image outputting device (two-dimensional image formation apparatus 130) equal to the number of diffraction orders (that is, M $\times$ N) can be obtained when compared with the image outputting techniques in related art. Besides, according to the three-dimensional image display apparatus 101 of the first working example, since filtering is performed spatially and temporally, a temporal characteristic of the three-dimensional image display apparatus can be converted into a spatial characteristic of the three-dimensional image display apparatus. Further, a three-dimensional image can be obtained without using a diffuser screen or the like. Further, a three-dimensional image which can be observed appropriately from any direction can be provided. Furthermore, since light ray groups can be produced and scattered in a spatially high density, a spatial image having definition proximate to a limit to visual observation can be provided.

Second Working Example

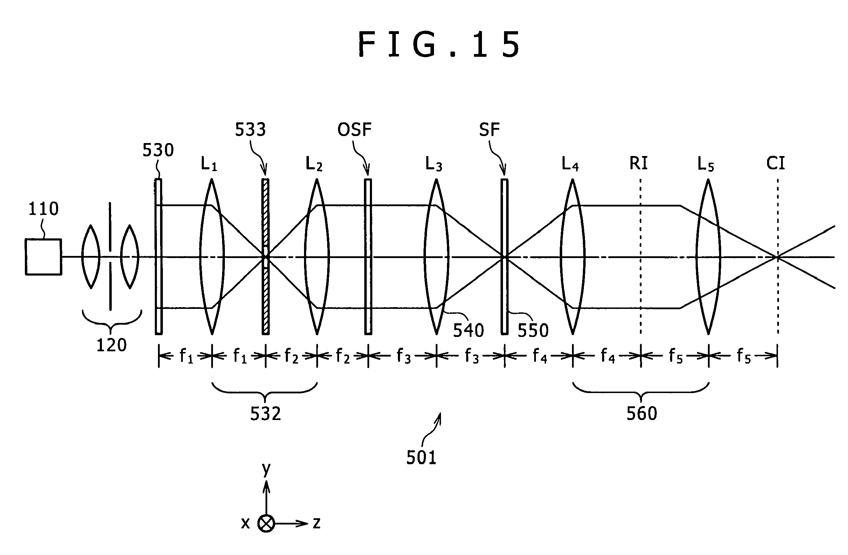

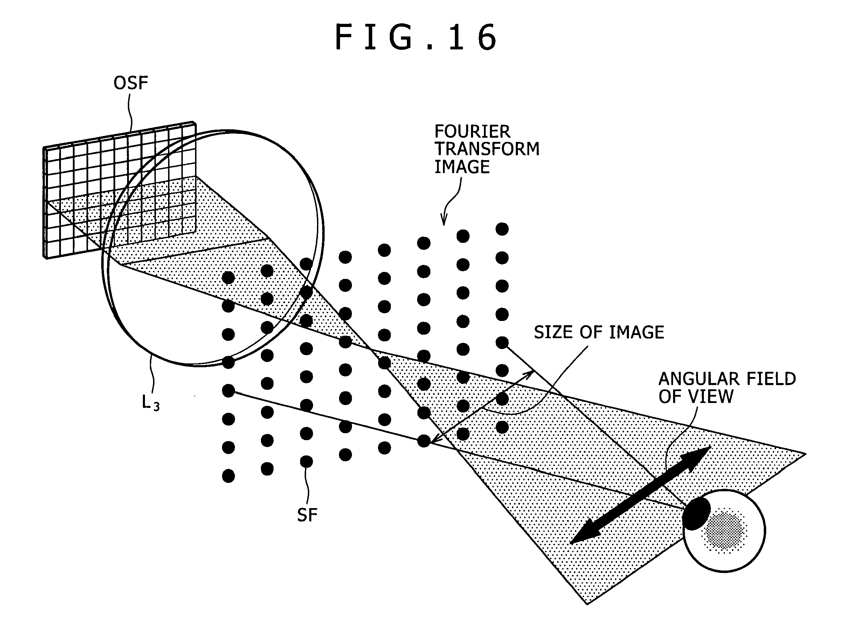

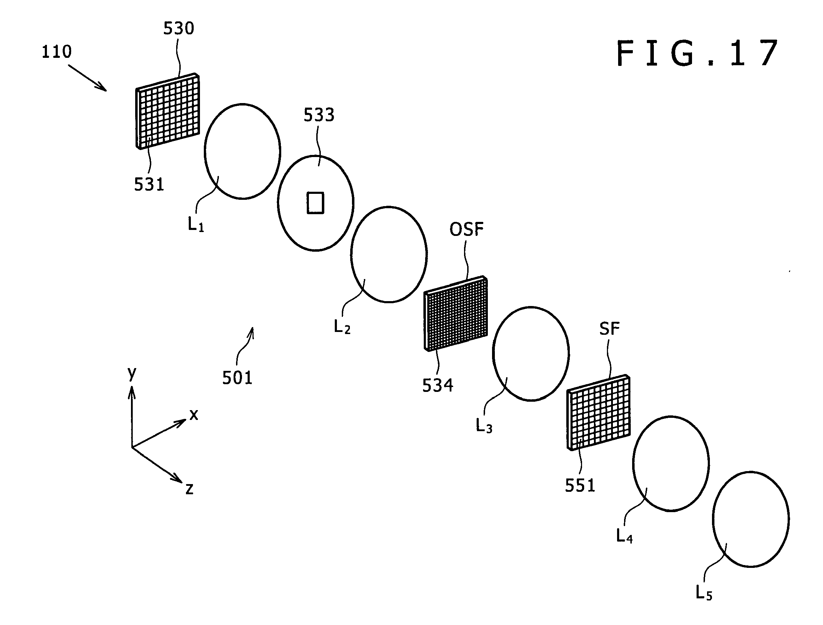

The second working example is a three-dimensional image display apparatus according to the second and fifth embodiments of the present invention. FIGS. 15, 16 and 17 illustrate a concept of the three-dimensional image display apparatus of the second working example. Also the three-dimensional image display apparatus of the second working example is formed as a three-dimensional image display apparatus of a single color display type. FIG. 15 illustrates a concept of the three-dimensional image display apparatus of the second working example along the yz plane. Also a conceptive view of the three-dimensional image display apparatus of the second working example along the xz plane is substantially similar to FIG. 15. Meanwhile, FIG. 16 illustrates a concept of the three-dimensional image display apparatus of the second working example when it is viewed in an oblique direction, and FIG. 17 schematically illustrates an arrangement state of components of the three-dimensional image display apparatus of the second working example.

Components of the three-dimensional image display apparatus according to the second embodiment of the present invention are described below. In particular, the three-dimensional image display apparatus 501 of the second working example includes:

(A) a light source 110;
(B) a light modulation section 530 having a plurality of pixels 531 for modulating light from the light source 110 by means of the pixels 531 to produce two-dimensional images and emitting a spatial frequency of the produced two-dimensional images along diffraction angles corresponding to a plurality of diffraction orders produced from each of the pixels 531;
(C) an image limitation and production section 532 for performing Fourier transform of the spatial frequency of the two-dimensional images emitted from the light modulation section 530 to produce Fourier transform images whose number corresponds to the number of diffraction orders produced from each of the pixels 531, selecting only a predetermined one of the Fourier transform images (for example, that Fourier transform image corresponding to the first order diffraction where the carrier frequency is the zeroth order diffraction light of the plane wave component) and then inverse Fourier transforming the selected Fourier transform image to produce conjugate images of the two-dimensional images (real images of the two-dimensional images) produced by the light modulation section 530;
(D) an oversampling filter (diffracted light production member) OSF having a plurality of opening regions 534 for emitting a spatial frequency of the conjugate images of the two-dimensional images along diffraction angles corresponding to a plurality of diffraction orders produced from the opening regions 534;
(E) a Fourier transform image formation section 540 for performing Fourier transform of the spatial frequency of the conjugate images of the two-dimensional images emitted from the oversampling filter OSF to produce Fourier transform images whose number corresponds to the number of diffraction orders produced from each of the opening regions 534;
(F) a Fourier transform image selection section 550 for selecting one of the Fourier transform images whose number corresponds to the diffraction orders produced from each of the opening regions 534 which corresponds to a desired diffraction order; and
(G) a conjugate image formation section 560 for forming a conjugate image of the Fourier transform image selected by the Fourier transform image selection section 550.

The conjugate image formation section 560 includes an inverse Fourier transform section (particularly a fourth lens $L_4$ hereinafter described) for inverse Fourier transforming the Fourier transform image selected by the Fourier transform image selection section 550 to form conjugate images of the two-dimensional images produced by the image limitation and production section 532 (such conjugate images as just mentioned may be hereinafter referred to merely as "conjugate images of the two-dimensional images). Further, the Fourier transform image formation section 540 is formed from a lens, and the oversampling filter OSF is disposed on a front focal plane of the lens while the Fourier transform image selection section 550 is disposed on a back focal plane of the lens. The Fourier transform image selection section 550 has a number of openings 551 equal to the number of diffraction orders produced from the opening regions 534 which can be controlled to be opened and closed.

The spatial frequency of the two-dimensional images corresponds to image information whose carrier frequency is the spatial frequency of the pixel structure. Meanwhile, the spatial frequency of the conjugate images of the two-dimensional images corresponds to a spatial frequency which is the spatial frequency of the two-dimensional images eliminated the spatial frequency of the pixel structure.

Meanwhile, components of the three-dimensional image display apparatus according to the fifth embodiment of the present invention, the three-dimensional image display apparatus 501 of the second working example includes:

(A) a light source 110;
(B) a two-dimensional image formation apparatus 530 having (quantity: $P \times Q$) openings disposed in a two-dimensional matrix along the X direction and the Y direction for producing a two-dimensional image through control of passage, reflection or diffraction of light from the light source 110 for each of the openings and producing, based on the two dimensional images, diffracted lights of a plurality of diffraction orders for each of the openings;

(C) a first lens $L_1$ having a front focal plane on which the two-dimensional image formation apparatus 530 is disposed;

(D) an image limitation opening section 533 disposed on a back focal plane of the first lens $L_1$ for allowing a diffracted light of a predetermined diffraction order (for example, a Fourier transform image corresponding to first order diffraction whose carrier frequency is the zeroth order diffraction of the plane wave component) to pass therethrough;

(E) a second lens $L_2$ having a front focal plane on which the image limitation opening section 533 is disposed;

(F) an oversampling filter (diffracted light production member) OSF disposed on a back focal plane of the second lens $L_2$ and having $P_0 \times Q_0$ ($P_0$ and $Q_0$ are arbitrary positive integers) opening regions 534 arrayed in a two-dimensional matrix along the X direction and the Y direction for producing, for each of the opening regions 534, based on conjugate images of the two-dimensional images produced by the second lens $L_2$, totaling $M \times N$ diffracted lights including M diffracted lights from the mth order to the m'th order diffracted lights along the X direction (m and m' are integers and M is a positive integer) and N diffracted lights from the nth order to the n'th order diffracted lights along the Y direction (n and n' are integers and N is a positive integer);

(G) a third lens $L_3$ having a front focus on which the oversampling filter OSF is disposed;

(H) a spatial filter SF disposed on a back focal plane of the third lens $L_3$ and having totaling $M \times N$ openings 551 including M openings 551 along the X direction and N openings 551 along the Y direction, the openings 551 being capable of being controlled between open and closed states;

(I) a fourth lens $L_4$ having a front focal plane on which the spatial filter SF is disposed; and

(J) a fifth lens $L_5$ having a front focus positioned at a back focus of the fourth lens $L_4$.

It is to be noted that, in the three-dimensional image display apparatus of the second working example, each of the first lens $L_1$, second lens $L_2$, third lens $L_3$, fourth lens $L_4$ and fifth lens $L_5$ is formed particularly from a convex lens. Further, the image limitation and production section 532 is formed from two lenses (first lens $L_1$ and second lens $L_2$) and an image limitation opening section 533 disposed between the two lenses (first lens $L_1$ and second lens $L_2$) for allowing a predetermined Fourier transform image (for example, a Fourier transform image corresponding to the first order diffraction whose carrier frequency is the zeroth order diffraction of the plane wave component) to pass therethrough. Further, the oversampling filter (diffracted light production member) OSF is formed from a lattice filter (diffraction grating filter) and particularly has a structure that $P_0 \times Q_0$ recesses (which correspond to the opening regions and have a rectangular shape in plan) are formed in a two-dimensional matrix on a glass plate. In other words, the oversampling filter (diffracted light production member) OSF is formed from a phase grating. This similarly applies also to the three-dimensional image display apparatus according to the fifth or seventh working example of the present invention.

In the three-dimensional image display apparatus of the second working example or of the fifth or seventh working example hereinafter described, $P_0$ = 2,048, $Q_0$ = 1,536, P = 1,024, Q = 768, m = -5, m' = 5, M = m' - m + 1 = 11, n = -5, n' = 5, and N = n' - n + 1 = 11. It is to be noted, however, that the values of the variables mentioned are not limited to those specifically given as above. Further, the z axis (which corresponds to the optical axis) passes the center of the components of the three-dimensional image display apparatus 501 of the second working example or any of the fifth and seventh working examples hereinafter described and besides extends perpendicularly to the components of the three-dimensional image display apparatus 501. If the components of the three-dimensional image display apparatus of the second embodiment of the present invention are compared with the components of the three-dimensional image display apparatus of the fifth embodiment or the eighth embodiment of the present invention, then the light modulation section 530 corresponds to the two-dimensional image formation apparatus 530; the image limitation and production section 532 corresponds to the first lens $L_1$, image limitation opening section 533 and second lens $L_2$; the Fourier transform image formation section 540 corresponds to the third lens $L_3$; the Fourier transform image selection section 550 corresponds to the spatial filter SF; the inverse Fourier transform section corresponds to the fourth lens $L_4$; and the conjugate image formation section 560 corresponds to the fourth lens $L_4$ and the fifth lens $L_5$. Therefore, for the convenience of description, the following description is given with the terms of the two-dimensional image formation apparatus 530, first lens $L_1$, image limitation opening section 533, second lens $L_2$, third lens $L_3$, spatial filter SF, fourth lens $L_4$ and fifth lens $L_5$.

An illumination optical system 120 for shaping light emitted from the light source 110 is interposed between the light source 110 and the two-dimensional image formation apparatus 530. Thus, the two-dimensional image formation apparatus 530 is illuminated with light (illumination light) emitted from the light source 110 and passing through the illumination optical system 120. For the illumination light, for example, light emitted from the light source 110 having high spatial coherence and shaped into parallel light by the illumination optical system 120 is used. It is to be noted that a property of the illumination light and a particular example of a configuration for obtaining the illumination light may be similar to those of the illumination optical system 120 described hereinabove.

The two-dimensional image formation apparatus 530 is formed from a two-dimensional spatial light modulator having a plurality of pixels 531 arrayed two-dimensionally and each pixel 531 having an opening. In particular, the two-dimensional image formation apparatus 530 or two-dimensional spatial light modulator is formed from a liquid crystal display apparatus of the transmission type having P $\times$ Q pixels 531 arrayed two-dimensionally, that is, in a two-dimensional matrix along the X and Y directions, and each of the pixels 531 has an opening.

One pixel 531 is formed from an overlapping region of a first transparent electrode and a second transparent electrode including a liquid crystal cell. The liquid crystal cell operates as a kind of light shutter (light valve), that is, the light transmission factor of each pixel 531 is controlled, to control the light transmission factor of light emitted from the light source 110 so that two-dimensional images are obtained as a whole. A rectangular opening is provided in the overlapping region of the first transparent electrode and the second transparent electrode, and when light emitted from the light source 110 passes through the opening, Fraunhofer diffraction occurs. As a result, M $\times$ N diffracted lights are produced by each pixel 531. In other words, it can be considered that, since the number of pixels 531 is P $\times$ Q, totaling P $\times$ Q $\times$ M $\times$ N diffracted lights are produced. In the two-dimensional image formation apparatus 530, a spatial frequency of the two-dimensional images is emitted from the two-dimensional image formation apparatus 530 along diffraction angles corresponding to a plurality of (totaling M $\times$ N) diffraction orders produced from each of the pixels 531. It is to be noted that the diffraction angle differs also depending upon the spatial frequency of the two-dimensional images.

The two-dimensional image formation apparatus 530 is disposed on the front focal plane (plane of the focus on the light source side) of the first lens $L_1$ which has a focal distance $f_1$, and the image limitation opening section 533 is disposed on the back focal plane (plane of the focus on the observer side) of the first lens $L_1$. Fourier transform images whose number corresponds to the number of diffraction orders are produced by the first lens $L_1$ and formed on a plane on which the image limitation opening section 533 is positioned. Then, only a diffracted light of a predetermined diffraction order (for example, a Fourier transform image corresponding to the first order diffraction whose carrier frequency is the zeroth order diffraction of the plane wave component) passes through the image limitation opening section 533. Further, the image limitation opening section 533 is disposed on a front focal plane of the second lens $L_2$ having a focal distance $f_2$, and an oversampling filter OSF is disposed on the back focal plane of the second lens $L_2$. Further, the oversampling filter OSF is disposed on the front focal plane of the third lens $L_3$ having a focal distance $f_3$, and the spatial filter SF is disposed on the back focal plane of the third lens $L_3$. M $\times$ N = 121 Fourier transform images whose number is equal to the number of diffraction orders produced from each of the opening regions 534 are produced by the third lens $L_3$ and are formed on the spatial filter SF. It is to be noted that, in FIG. 16, 64 Fourier transform images are indicated as dots for the convenience of illustration.

The spatial filter SF particularly is a spatial filter which allows temporal opening and closing control thereof for spatially and temporarily filtering Fourier transform images. More particularly, the spatial filter SF has a number of openings 551 equal to the number (particularly, M $\times$ N = 121) of diffraction orders produced from each of the opening regions 534 which can be controlled to be opened and closed. Then, in the spatial filter SF, a desired one of the openings 551 is placed into an open state in synchronism with a production timing of two-dimensional images by the two-dimensional image formation apparatus 530 to select one Fourier transform image corresponding to a desired diffraction order. More particularly, the spatial filter SF can be formed, for example, from a liquid crystal display apparatus of the transmission type or the reflection type which is formed using ferroelectric liquid crystal and has M $\times$ N pixels or an MEMS of the two-dimensional type including an apparatus in which movable mirrors are disposed in a two-dimensional matrix. It is to be noted that a schematic front elevational view of the spatial filter SF where it is formed from a liquid crystal display apparatus is similar to that which is shown in FIG. 4. Referring to FIG. 4, numerical values ($m_0$, no) indicate a number of the opening 551 (indicated by reference numeral 151 in FIG. 4) and simultaneously indicate a diffraction order. In particular, to the (3, 2)th opening 551, a Fourier transform image having a diffraction order number of $m_0 = 3$ and no = 2 comes.

As described hereinabove, the conjugate image formation section 560 is particularly formed from the fourth lens $L_4$ and the fifth lens $L_5$. Then, the fourth lens $L_4$ having the focal distance $f_4$ inverse Fourier transforms a Fourier transform image filtered by the spatial filter SF to form real images RI of the two-dimensional images formed by the second lens $L_2$. Further, the fifth lens $L_5$ having the focal distance $f_5$ forms conjugate images CI of the Fourier transform images filtered by the spatial filter SF.

The fourth lens $L_4$ is disposed such that the spatial filter SF is positioned on the front focal plane thereof and real images RI of conjugate images of two-dimensional images formed by the second lens $L_2$ are formed on the back focal plane thereof. The magnification of the real images RI obtained here with respect to the real images formed by the second lens $L_2$ can be varied by arbitrarily selecting the focal distance $f_4$ of the fourth lens $L_4$.

Meanwhile, the fifth lens $L_5$ is disposed such that the front focal plane thereof coincides with the back focal plane of the fourth lens $L_4$ and conjugate images CI of the Fourier transform images are formed on the back focal plane thereof. Here, since the back focal plane of the fifth lens $L_5$ is a conjugate plane of the spatial filter SF, conjugate images of two-dimensional images are equivalently outputted from a portion on the spatial filter SF which corresponds to one opening 551. Then, the amount of rays of light produced and outputted finally can be defined as an amount calculated by multiplying the number of rays of light equal to the number of pixels (P $\times$ Q) by the number of (particularly, M $\times$ N)

diffraction orders having passed through the optical system. Further, while the conjugate images CI of the Fourier transform images are formed on the back focal plane of the fifth lens $L_5$, it can be considered that the light ray groups are disposed regularly two-dimensionally on the back focal plane of the fifth lens $L_5$. In other words, generally a number of projector units 701 shown in FIG. 36 equal to the number of (particularly M × N) diffraction orders are disposed equivalently on the back focal plane of the fifth lens $L_5$.

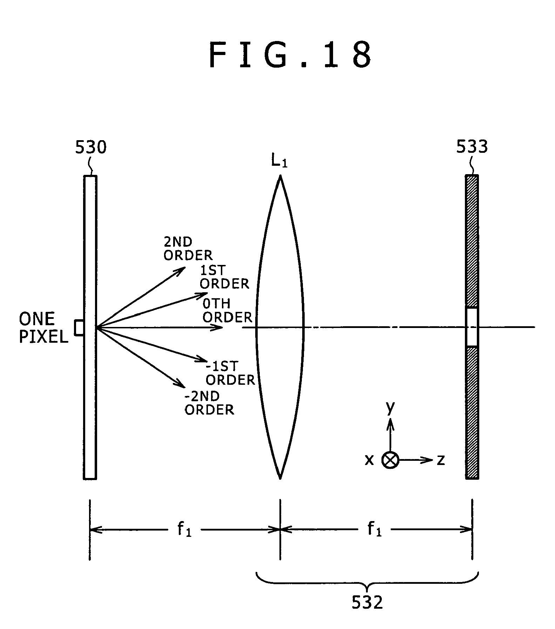

As schematically shown in FIG. 18, totaling M × N different diffracted lights along the X direction and the Y direction are produced from one pixel 531 of the two-dimensional image formation apparatus 530. It is to be noted that, while only the zeroth order light (no = 0), ±1st order lights (no = ±1) and ±2nd order lights (no = ±2) are illustrated as representative diffracted lights in FIG. 18, actually also higher order diffracted lights are produced, and a three-dimensional image is finally formed from part of the diffracted lights. Here, the diffracted light (light flux) of each diffraction order intensively includes all image information (information of all of the pixels) of the two-dimensional images formed by the two-dimensional image formation apparatus 530. A plurality of light ray groups produced by. diffraction from the same pixel on the two-dimensional image formation apparatus 530 have the same image information at the same point of time. In other words, in the two-dimensional image formation apparatus 530 formed from a liquid crystal display apparatus of the transmission type having the P × Q pixels 531, light from the light source 110 is modulated by the pixels 531 to produce two-dimensional images, and a spatial frequency of the produced two-dimensional images is emitted along diffraction angles corresponding to a plurality of diffraction orders (totaling M × N diffraction orders) produced from each of the pixels 531. In other words, a kind of M × N copies of the two-dimensional images are emitted along the diffraction angles corresponding to a plurality of diffraction orders (totaling M × N diffraction orders) from the two-dimensional image formation apparatus 530.

Then, the spatial frequency of the two-dimensional images emitted from the two-dimensional image formation apparatus 530 is Fourier transformed by the first lens $L_1$ to produce Fourier transform images whose number corresponds to the number of diffraction orders to be produced from each of the pixels 531. Then, only a predetermined one of the Fourier transform images (for example, a Fourier transform image corresponding to the first order diffraction whose carrier frequency is the zeroth order diffraction of the plane wave component) passes through the image limitation opening section 533. Then, the selected Fourier transform image is inverse Fourier transformed by the second lens $L_2$ to form conjugate images of the two-dimensional images produced by the two-dimensional image formation apparatus 530, and the conjugate images of the two-dimensional images are formed on the oversampling filter OSF. It is to be noted that, while the spatial frequency of the two-dimensional images corresponds to image information whose carrier frequency is the spatial frequency of the pixel structure, only region of the image information whose carrier frequency is the zeroth order plane wave (that is, spatial frequencies up to a frequency equal to 1/2 the spatial frequency of the pixel structure in the maximum) is obtained as the first order diffraction whose carrier frequency is the zeroth order diffraction of the plane wave component, and spatial frequencies below one half the spatial frequency of the pixel structure (opening structure) of the light modulation section pass through the image limitation opening section 533. In this manner, the conjugate images of the two-dimensional images formed on the oversampling filter OSF do not include the pixel structure of the two-dimensional image formation apparatus 530 while they include all of spatial frequencies of the two-dimensional images produced by the two-dimensional image formation apparatus 530.

The spatial frequency of the conjugate images of the two-dimensional images in which all image information of the two-dimensional images formed by the two-dimensional image formation apparatus 530 is intensively included is emitted along the diffraction angles corresponding to a plurality of diffraction orders produced from each of the opening regions 534 of the oversampling filter OSF. Then, the spatial frequency is Fourier transformed by the third lens $L_3$ to produce Fourier transform images whose number corresponds to the number of (totaling M × N) diffraction orders, and the Fourier transform images are formed on the spatial filter SF. Since Fourier transform images of the spatial frequency of the conjugate images of the two-dimensional images emitted along the diffraction angles corresponding to the number of diffraction orders are formed by the third lens $L_3$, the Fourier transform images can be obtained in a spatially high density.

Here, where the wavelength of light (illumination light) emitted from the light source 110 is represented by $\lambda$ (mm), the spatial frequency of the conjugate images of the two-dimensional images formed by the second lens $L_2$ by $v_0$ (lp/mm), and the focal distance of the third lens $L_3$ by $f_3$ (mm), light (Fourier transform image) having the spatial frequency $v_0$ appears at the position of a distance $Y_1$ (mm) given by the following expression (2) from the optical axis on the back focal plane of the third lens $L_3$.

$$Y_1 = f_3 \cdot \lambda \cdot v_0 \qquad (2)$$

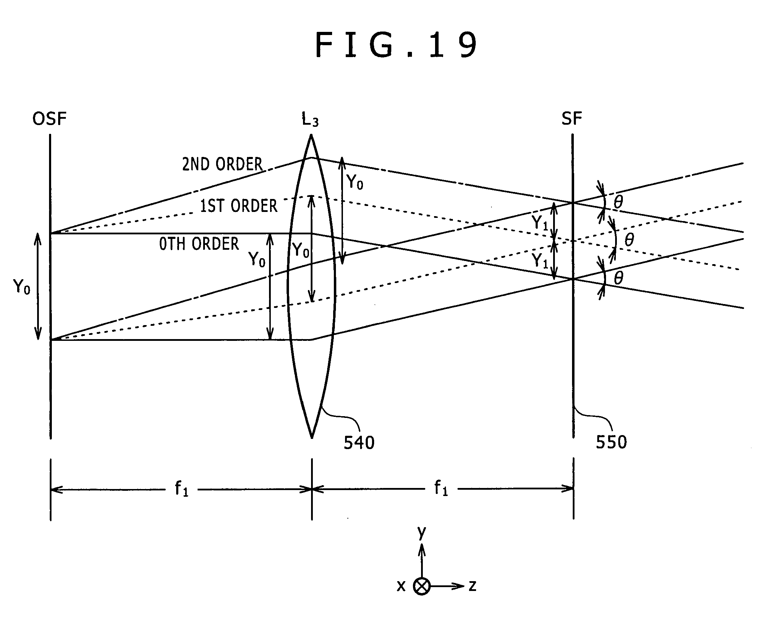

A condensation state of the third lens $L_3$ is schematically illustrated in FIG. 19. It is to be noted that, in FIG. 19, "$Y_0$" represents the length in the y axis direction of a two-dimensional image formed by the second lens $L_2$, and "$Y_1$" represents the distance in the y axis direction of a Fourier transform image on the spatial filter SF based on a conjugate image of a two-dimensional image formed by the second lens $L_2$. Further, a zeroth-order diffracted light is indicated by a solid line and a first-order diffracted light is indicated by a dotted line while a second-order diffracted light is indicated by an alternate long and short dash line. The diffracted lights of the diffraction orders, that is, a number of produced Fourier transform images whose number corresponds to the number of diffraction orders, are condensed at the different openings 551 of the spatial filter SF by the third lens $L_3$ (refer also to FIG. 16). The number of openings 551 is M $\times$ N = 121 as described hereinabove. The condensing angles $\theta$ on the spatial filter SF (scattering angles after emitted from the spatial filter SF and also angular fields of view) are equal with regard to the $P_0 \times Q_0$ opening regions 534 on Fourier transform images (or diffracted lights) having the same diffraction order number. The condensing angles $\theta$ can be determined from the following expression (3):

$$\theta = 2 \times \arctan \ (w/2f_3) \qquad\qquad (3)$$

where "w" is the length in the Y direction of the conjugate image of the two-dimensional image projected on the oversampling filter OSF and can be varied by arbitrarily selecting the focal distance $f_2$ of the second lens $L_2$. The distance between Fourier transform images of adjacent diffraction orders on the spatial filter SF can be determined in accordance with the expression (2) given hereinabove. From the expression (2), the position of a Fourier transform image (image forming position on the spatial filter SF) can be varied by arbitrarily selecting the focal distance $f_3$ of the third lens $L_3$.

In order for the third lens $L_3$ to pass therethrough a spatial frequency of conjugate images of two-dimensional images emitted along diffraction angles corresponding to a plural number of diffraction orders produced from each of the opening regions 534, it is necessary to select the numerical aperture NA of the third lens $L_3$ in accordance with a diffraction order number to be utilized, and it is demanded that the aperture number of all lenses succeeding the third lens $L_3$ be equal to or greater than the numerical aperture NA of the third lens $L_3$ irrespective of the focal distance.

The size of the openings 551 may be set equal to the value of $Y_1$ in the expression (2). As an example, where the wavelength $\lambda$ of the illumination light is 532 nm, the focal distance $f_3$ of the third lens $L_3$ is 50 mm and the size of the opening regions 534 of the oversampling filter OSF is approximately 13 to 14 $\mu$m, the value of $Y_1$ is approximately 2 mm. This signifies that Fourier transform images corresponding to the diffraction orders can be obtained in a high density of a distance of approximately 2 mm. In other words, 11 $\times$ 11 = 121 Fourier transform images can be obtained at distances of approximately 2 mm in both of the X and Y directions on the spatial filter SF.

The spatial frequency $v_0$ of the conjugate images of the two-dimensional images has a period formed from two successive opening regions 534 of the oversampling filter OSF at the highest because the oversampling filter OSF is formed from $P_0 \times Q_0$ opening regions 534.

The two-dimensional image formation apparatus 530 which is in a state wherein the spatial frequency of the two-dimensional images is lowest has a front elevation similar to that as shown in FIG. 7A. In this instance, the light intensity of Fourier transform images formed by the third lens $L_3$ has a frequency characteristic similar to that illustrated in FIG. 8A. On the other hand, the two-dimensional image formation apparatus 530 which is in a state wherein the spatial frequency of the two-dimensional images is highest has a front elevation similar to that as shown in FIG. 7B. In this instance, the light intensity of Fourier transform images formed by the third lens $L_3$ has a frequency characteristic similar to that illustrated in FIG. 8B. Furthermore, the distribution of Fourier transform images on the spatial filter SF (xy plane) is similar to those shown in FIGS. 9A to 9C.

The shape in plan of the openings 551 of the spatial filter SF may be determined based on the shape of Fourier transform images. Further, an opening 551 may be provided for each diffraction order so that a peak position of a plane wave component of a Fourier transform image may be the center of the opening 551. Consequently, a peak of the light intensity of each Fourier transform image is positioned at the central position of an opening 551. In particular, each opening 551 should be formed so that all of the positive and negative highest spatial frequencies of conjugate images of two-dimensional images centered at a cyclical pattern of Fourier transform images where the spatial frequency of the two-dimensional images is the lowest spatial frequency component (plane wave component) may pass through the opening 551.

Incidentally, the state wherein the spatial frequency is highest is a case wherein all of the pixels alternately display the black and the white as seen in FIG. 7B. Further, the spatial frequency of the opening region structure of the oversampling filter OSF and the spatial frequency of the conjugate images of the two-dimensional images have the following relationship. In particular, if it is assumed that the aperture ratio of the opening regions 534 is 100%, then the highest spatial frequency of the conjugate images of the two-dimensional images is 1/2 the spatial frequency of the opening region structure. On the other hand, where the aperture ratio of the opening regions 534 has a certain rate (lower than 100%), the highest spatial frequency of the conjugate images of the two-dimensional images is lower than 1/2 the spatial frequency of the opening region structure. Therefore, all of the spatial frequencies of the conjugate images of the two-dimensional images appear up to a position of one half of a distance between cyclic patterns arising from the opening region structure and appearing on the spatial filter SF. From this, all of the openings 551 can be disposed such that they do not interfere with each other spatially. In particular, the Fourier transform image having the diffraction order number of $m_0 = 3$ and no = 2 comes to the (3, 2)th opening 551 while the Fourier transform image having the diffraction order number of $m_0 = 3$ and no = 2 does not come to the other openings 551. Consequently, a spatial frequency of conjugate images of two-dimensional images exists in a Fourier transform image positioned in one opening 551 on the spatial filter SF which has the openings 551 which are independent of each other for individual Fourier transform images while a miss of a spatial frequency of the conjugate images of the two-dimensional images by spatial limitation of the openings 551 does not occur. It is to be noted that the spatial frequency of the opening region structure can be regarded as a carrier frequency, and the spatial frequency of the two-dimensional images corresponds to image information where the spatial frequency of the opening region structure is the carrier frequency.

Then, in the spatial filter SF, opening/closing control of the openings 551 is performed in order to control passage/interception of M × N Fourier transform images. If the spatial filter SF is formed from, for example, a liquid crystal display apparatus, then the opening/closing control of the openings 551 can be performed by causing the liquid crystal cells to operate as a kind of light shutter (light valve).

A three-dimensional image display apparatus formed by removing the oversampling filter OSF from the three-dimensional image display apparatus according the second working example is assumed. It is to be noted that such a three-dimensional image display apparatus as just described is hereinafter referred to as comparative three-dimensional image display apparatus for the convenience of description. The three-dimensional image display apparatus of the second working example and the comparative three-dimensional image display apparatus are described below in comparison with each other.

It is to be noted that the wavelength of light (illumination light) emitted from the light source 110 is represented by $\lambda$ (mm), and the spatial frequency of two-dimensional images formed by the two-dimensional image formation apparatus 530 is represented by $\nu$ (lp/mm).

Incidentally, the projection angle (angular field of view) $\theta$ is a significant parameter which determines a region of a three-dimensional image to be observed. Meanwhile, the positions of and the distance ($Y_1$) between Fourier transform images on the spatial filter SF are significant parameters which determine the continuity of the parallax of motion and a three-dimensional image to be displayed, and the scale (magnitude) of the three-dimensional image to be displayed. Then, the value of the projection angle (angular field of view) $\theta$ and the value of $Y_1$ which corresponds to the positions of and the distance between Fourier transform images on the spatial filter SF preferably have values as high as possible.

Incidentally, from the expression (2) given hereinabove, the variables which controls $Y_1$ are the wavelength $\lambda$ of light (illumination light) and the focal distance $f_3$ of the third lens $L_3$ as well as the spatial frequency $\nu$ of two-dimensional images formed by the two-dimensional image formation apparatus 530 on which the spatial frequency $\nu_0$ is based. Here, the wavelength $\lambda$ of light (illumination light) cannot really assume an arbitrary value because a variation appears with the color tone of the image. Besides, the wavelength of visible rays ranges from approximately 400 nm to approximately 700 nm, and the variation amount is 1.75 times to the utmost and the operation region is small. Further, while, in order to raise the value of the spatial frequency $\nu$, it is necessary to make the pitch of pixels of the two-dimensional image formation apparatus 530 finer, it is actually difficult to make the pitch of pixels of the two-dimensional image formation apparatus 530 finer. Accordingly, in order to raise the value of $Y_1$ in the expression (2), it is most realistic to increase the focal distance $f_3$ of the third lens $L_3$. However, if the focal distance $f_3$ is increased, then from the expression (3), where the length w in Y direction of the conjugate image of the two-dimensional image projected on the oversampling filter OSF is fixed, that is, where the focal distance $f_2$ of the second lens $L_2$ is fixed, the value of the projection angle (angular field of view) $\theta$ decreases. In other words, the expression (2) and the expression (3) do not have a relationship independent of each other, but the value of $Y_1$ and the value of the projection angle (angular field of view) $\theta$ have a tradeoff relationship to each other.

Incidentally, while, in the three-dimensional image display apparatus 501 of the second working example, two-dimensional images are formed by the light modulation section or two-dimensional image formation apparatus 530, the spatial frequency $\nu$ of the two-dimensional images has a value which depends upon the opening structure of the openings used to form the two-dimensional image formation apparatus. Meanwhile, because the spatial frequency $\nu_0$ of the conjugate images of the two-dimensional images relies upon the opening region structure of the opening regions 534 of the oversampling filter OSF and $P_0 > P$ and $Q_0 > Q$ are satisfied, the spatial frequency (carrier frequency) of the opening region structure of the oversampling filter OSF is higher than the spatial frequency (carrier frequency) of the pixel structure (opening structure) of the two-dimensional image formation apparatus 530 and $\nu_0 > \nu$. It is to be noted that, since the oversampling filter OSF can be produced, for example, by forming a grating pattern directly of a glass plate, the carrier frequency of the oversampling filter OSF can be raised if the pitch of the grating pattern is made finer, and the value of the spatial frequency $\nu_0$ of the conjugate images of the two-dimensional images to be produced by the oversampling filter OSF can be raised readily thereby. Accordingly, the value of the spatial frequency $\nu_0$ can be raised readily, and the value of $Y_1$ determined from the expression (2) can be raised. It is to be noted that, even if the focal distance $f_3$ of the third lens $L_3$ is set shorter, the value of $Y_1$ determined from the expression (2) can be raised. On the other hand, since the focal distance $f_3$ of the third lens $L_3$ can be set shorter, the value of the angular field $\theta$ of view can be raised. Or, the value of w can be increased by suitably setting the focal distance $f_2$ of the second lens $L_2$, and as a result, the value of the angular field $\theta$ of view determined from the expression (3) can be increased.

In this manner, in the three-dimensional image display apparatus 501 of the second working example, the value of $Y_1$ and the value of the projection angle (angular field of view) $\theta$ can be controlled independently of each other. Accordingly, it is possible to increase the scale (magnitude) of a three-dimensional image to be displayed while the region of the three-dimensional image to be observed is increased. Besides, there is no necessity to vary the wavelength of light from the light source and no variation in color tone is caused by variation of the wavelength. Further, essentially there is no necessity to vary the focal distance $f_3$ of the third lens $L_3$.

For example, it is assumed that, in the comparative three-dimensional image display apparatus, the size of the two-dimensional image formation apparatus 530 is 0.7 inch in width across corner and has openings ($P \times Q = 1{,}024 \times 768$) having a square shape in plan. Further, where the distance between the openings is 14 $\mu$m, the wavelength $\lambda$ of light emitted from the light source 110 is 532 nm and $f_2 = f_3 = f_4 = f_5 = 50$ mm, the distance between conjugate images on the conjugate plane of the spatial filter SF after they pass the fifth lens $L_5$ is 1.9 mm and the angular field $\theta_Y$ of view of the two-dimensional image formation apparatus 530 corresponding to the Y direction is 16.1 degrees while the angular field $\theta_X$ of view of the two-dimensional image formation apparatus 530 corresponding to the X direction is 12.1 degrees.

Further, if the focal distance $f_2$ of the second lens $L_2$ in the comparative three-dimensional image display apparatus is set to 100 mm in order to increase the size of the conjugate images of the two-dimensional images formed by the second lens $L_2$, then the angular field $\theta_Y$ of view becomes 31.5 degrees and the angular field $\theta_X$ of view becomes 23.9 degrees. In this manner, the angular fields of view can be increased. However, since the size of the conjugate images of the two-dimensional images increases to twice, the value of $\nu_0$ in the expression (2) decreases to one half, and therefore, the distance between the conjugate images on the conjugate plane of the spatial filter SF after they pass the fifth lens $L_5$ becomes 0.95 mm. In this instance, although light rays group having a higher spatial density than an ordinary level are produced, since the production area per one light ray of the light ray group decreases to 1/4, the size of an image to be observed becomes 1/4.

Thus, if the oversampling filter OSF formed from a diffraction filter having a tetragonal lattice having a distance ($= Y_0$) of 14 $\mu$m is disposed, then new spatial sampling of conjugate images of two-dimensional images enlarged to twice is performed with a spatial frequency similar to that of the original pixel distance of the two-dimensional image formation apparatus 530. Consequently, the angular field $\theta_Y$ of view becomes 31.5 degrees and the angular field $\theta_X$ of view becomes 23.9 degrees, and consequently, the angular fields of view can be increased. Further, the distance between the conjugate images on the conjugate plane of the spatial filter SF after they pass the fifth lens $L_5$ can be made 1.9 mm. In other words, in this instance, light ray groups having a spatial density higher than an ordinary level are produced and besides the production area per one ray of light of a light ray group does not vary and also the size of an image to be observed does not vary. The oversampling filter OSF can be produced only by drawing lattice elements disposed in a two-dimensional matrix of a pitch of 14 $\mu$m on a glass plate.

As described above, with the three-dimensional image display apparatus 501 of the second working example, a spatial frequency of two-dimensional images produced by the light modulation section two-dimensional image formation apparatus 530 is emitted along diffraction angles corresponding to a plurality of diffraction orders, and only a Fourier transform image corresponding to a predetermined diffraction order is selected by the image limitation and production section 532. Then, conjugate images of the two-dimensional images produced by the second lens $L_2$ are Fourier transformed by the Fourier transform image formation section 540 (third lens $L_3$) to obtain Fourier transform images. The Fourier transform images are spatially and temporally filtered and then conjugate images CI of the filtered Fourier transform images are formed by the Fourier transform image selection section 550 (spatial filter SF). Consequently, light ray groups can be produced and scattered in a high spatial density and besides in a distributed state in a plurality of directions without increasing the scale of the entire three-dimensional image display apparatus. Further, since the two-dimensional image formation apparatus 530 and the oversampling filter OSF are provided, the scale (size) of a three-dimensional image to be displayed can be increased while the region of the three-dimensional image to be observed is expanded. Besides, individual rays of light which are components of the light ray group can be temporally and spatially controlled independently of each other. Consequently, a three-dimensional image formed from rays of light having quality proximate to those of an article in the real world can be obtained.

Further, with the three-dimensional image display apparatus 501 of the second working example, since the light ray reproduction method is utilized, a three-dimensional image which satisfies such visual senses as focusing, convergence and parallax of motion can be provided. Further, with the three-dimensional image display apparatus 501 of the second working example, since high order diffraction lights are utilized efficiently, a number of rays of light (a kind of copy of two-dimensional images) which can be controlled by a single image outputting device (two-dimensional image formation apparatus 530) equal to the number of diffraction orders (that is, $M \times N$ rays of light) can be obtained by the oversampling filter OSF when compared with image outputting techniques in related art. Besides, with the three-dimensional image display apparatus 501 of the second working example, since it performs filtering spatially and temporarily, a temporal characteristic of the three-dimensional image display apparatus can be converted into a spatial characteristic of the three-dimensional image display apparatus. Further, a three-dimensional image can be obtained without using a diffuser screen or the like. Furthermore, a three-dimensional image which is appropriate to observation from any direction can be provided. Further, since a light ray group can be produced and scattered in a spatially high density, a spatial image of a high definition proximate to a limitation to recognition can be provided.

Further, with the three-dimensional image display apparatus 501 of the working example 2, the magnitude and the projection angle (angular field of view) of conjugate images on the conjugate plane of the spatial filter SF after they pass the fifth lens can be controlled independently of each other. Accordingly, the scale (size) of a three-dimensional image to be displayed can be increased while the region of the three-dimensional image to be observed is expanded.

Third Working Example

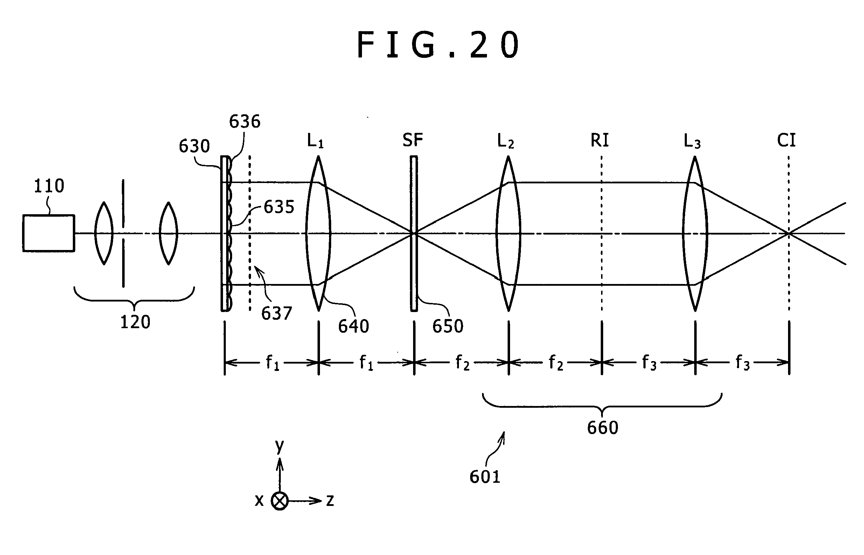

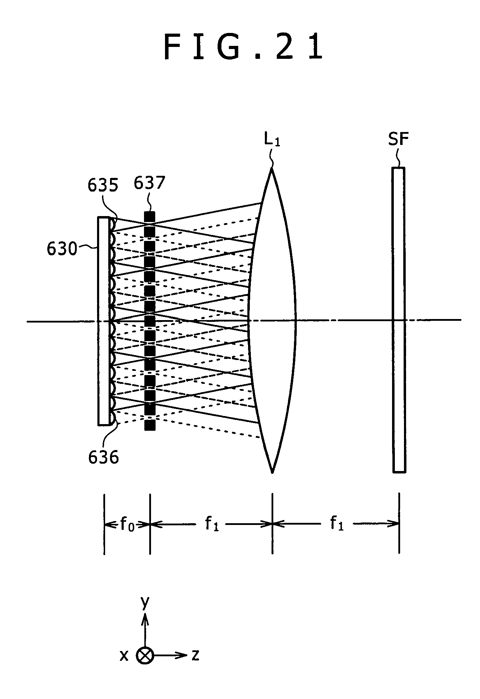

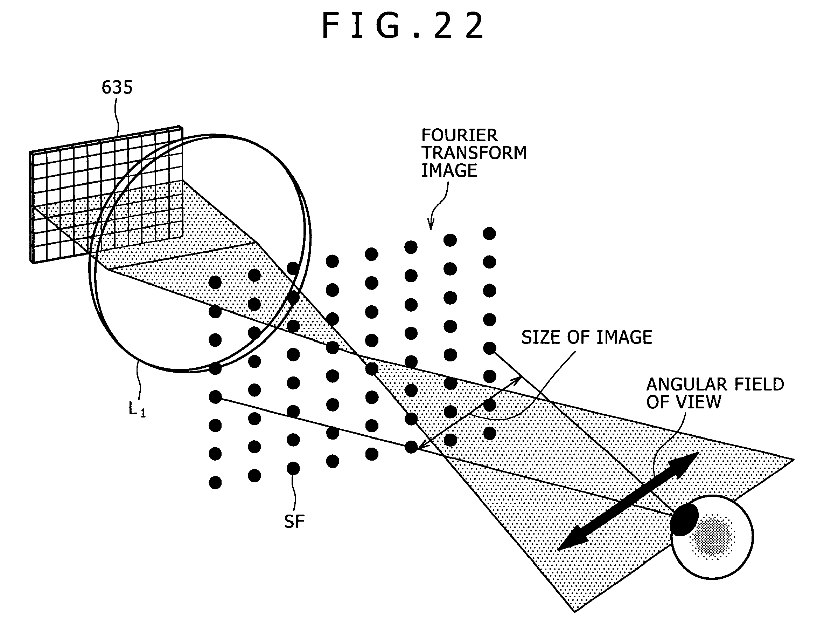

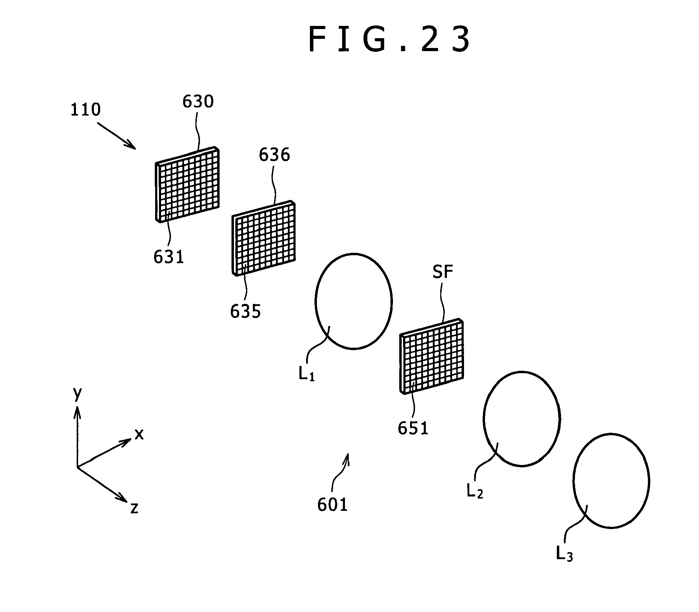

The third working example is a three-dimensional image display apparatus according to the third and sixth embodiments of the present invention. FIGS. 20, 21, 22 and 23 illustrate a concept of the three-dimensional image display apparatus of the third working example. Also the three-dimensional image display apparatus of the third working example is formed as a three-dimensional image display apparatus of a single color display type. FIG. 20 illustrates a concept of the three-dimensional image display apparatus of the third working example along the yz plane. Also a conceptive view of the three-dimensional image display apparatus of the third working example along the xz plane is substantially similar to FIG. 20. Meanwhile, FIG. 21 illustrates a concept of operation and action of an optical apparatus of the three-dimensional image display apparatus of the third working example. Further, FIG. 22 illustrates a concept of the three-dimensional image display apparatus of the third working example when it is viewed in an oblique direction, and FIG. 23 schematically illustrates an arrangement state of components of the three-dimensional image display apparatus of the third working example.

Components of the three-dimensional image display apparatus according to the third embodiment of the present invention are described below. In particular, the three-dimensional image display apparatus 601 of the third working example includes:

(A) a light source 110;

(B) a two-dimensional image formation apparatus 630 having a plurality of pixels 631 for producing a two-dimensional image based on light from the light source 110;

(C) an optical apparatus 635 including a plurality of optical elements 636 disposed in a two-dimensional matrix and each having an optical power of refracting light incident thereto to condense the light to a substantially one point, and having a function as a phase grating of modulating a phase of light transmitting therethrough for emitting a spatial frequency of the two-dimensional images incident from the two-dimensional image formation apparatus 630 along diffraction angles corresponding to a plurality of diffraction orders (totaling $M \times N$ diffraction orders);

(D) a Fourier transform image formation section 640 for performing Fourier transform of the spatial frequency of the two-dimensional images emitted from the optical apparatus 635 to produce Fourier transform images whose number corresponds to the number of diffraction orders (totaling $M \times N$ diffraction orders);

(E) a Fourier transform image selection section 650 for selecting one of the produced Fourier transform images produced by the Fourier transform image formation section 640 which corresponds to a desired diffraction order (totaling $M \times N$ diffraction orders); and

(F) a conjugate image formation section 660 for forming a conjugate image of the Fourier transform image selected by the Fourier transform image selection section 650.

The conjugate image formation section 660 includes an inverse Fourier transform section (particularly a second lens $L_2$ hereinafter described) for inverse Fourier transforming the Fourier transform image selected by the Fourier transform image selection section 650 to form real images of the two-dimensional images produced by the two-dimensional image formation section 630. Further, the Fourier transform image formation section 640 is formed from a lens, and the lens has a front focal plane on which the focuses (in the third working example, the back focuses) of the optical elements 636 which compose the optical apparatus 635 are positioned. Further, the Fourier transform image selection section 650 is disposed on a back focal plane of the lens. The Fourier transform image selection section 650 has a number of openings 651, capable of being controlled to be opened and closed, equal to the number of diffraction orders (totaling $M \times N$ diffraction orders).

The spatial frequency of the two-dimensional images corresponds to image information whose carrier frequency is the spatial frequency of the pixel structure of the two-dimensional image formation apparatus 630.

Meanwhile, according to the sixth embodiment of the present invention, the three-dimensional image display apparatus 601 of the third working example includes:

(A) a light source 110;

(B) a two-dimensional image formation apparatus 630 having a plurality of (P $\times$ Q) pixels 631 for producing a two-dimensional image based on light from the light source 110;

(C) an optical apparatus 635 including $P_0 \times Q_0$ optical elements 636 ($P_0$ and $Q_0$ are arbitrary positive integers) disposed in a two-dimensional matrix along an X direction and a Y direction and each having an optical power of refracting light incident thereto to condense the light to a substantially one point, and having a function as a phase grating of modulating a phase of light transmitting therethrough for emitting a spatial frequency of the two-dimensional images incident thereto along diffraction angles corresponding to a plurality of diffraction orders (totaling M $\times$ N diffraction orders);

(D) a first lens $L_1$ (more particularly, in the third working example, a convex lens) having a front focal plane on which the focus (in the third working example, a back focus) of the optical elements 636 which compose the optical apparatus 635 is positioned;

(E) a spatial filter SF disposed on a back focal plane of the first lens $L_1$ and having M $\times$ N openings 651 including M openings 651 disposed along the X direction and N openings 651 disposed along the Y direction and capable of being controlled to be opened and closed;

(F) a second lens $L_2$ (more particularly, in the third working example, a convex lens) having a front focal plane on which the spatial filter SF is disposed; and

(G) a third lens $L_3$ (more particularly, in the third working example, a convex lens) having a front focus on which a back focus of the second lens $L_2$ is positioned.

Here, in the two-dimensional image formation apparatus of the third working example or any of the sixth and seventh working examples, the optical apparatus 635 produces totaling M $\times$ N diffracted lights including M diffracted lights from the mth order to the m'th order diffracted lights along the X direction (m and m' are integers and M is a positive integer) and N diffracted lights from the nth order to the n'th order diffracted lights along the Y direction (n and n' are integers and N is a positive integer). Here, P = $P_0$ = 1,024, Q = $Q_0$ = 768, m = -5, m' = 5, M = m' - m + 1 = 11, n = -5, n' = 5, and N = n' - n + 1 = 11. It is to be noted, however, that the values of the variables mentioned are not limited to those specifically given as above. Further, the z axis (which corresponds to the optical axis) passes the center of the components of the three-dimensional image display apparatus 601 of the third working example or any of the sixth and seventh working examples hereinafter described and besides extends perpendicularly to the components of the three-dimensional image display apparatus 601. If the components of the three-dimensional image display apparatus of the third embodiment of the present invention are compared with the components of the three-dimensional image display apparatus of the sixth embodiment, then the Fourier transform image formation section 640 corresponds to the first lens $L_1$; the Fourier transform image selection section 650 corresponds to the spatial filter SF; the inverse Fourier transform section corresponds to the second lens $L_2$; and the conjugate image formation section 660 corresponds to the second lens $L_2$ and the third lens $L_3$. Therefore, for the convenience of description, the following description is given with the terms of the two-dimensional image formation apparatus 630, first lens $L_1$, spatial filter SF, second lens $L_2$, and third lens $L_3$.

An illumination optical system 120 for shaping light emitted from the light source 110 is interposed between the light source 110 and the two-dimensional image formation apparatus 630. Thus, the two-dimensional image formation apparatus 630 is illuminated with light (illumination light) emitted from the light source 110 and passing through the illumination optical system 120. For the illumination light, for example, light emitted from the light source 110 having high spatial coherence and shaped into parallel light by the illumination optical system 120 is used. It is to be noted that a property of the illumination light and a particular example of a configuration for obtaining the illumination light may be similar to those of the illumination optical system 120 described hereinabove.

The two-dimensional image formation apparatus 630 has a plurality of pixels 631 arrayed two-dimensionally thereon and each having an opening. In particular, the two-dimensional image formation apparatus 630 is formed from a liquid crystal display apparatus of the transmission type having P $\times$ Q pixels 631 arrayed two-dimensionally, that is, in a two-dimensional matrix along the X and Y directions, and each of the pixels 631 has an opening.

One pixel 631 is formed from an overlapping region of a first transparent electrode and a second transparent electrode including a liquid crystal cell. The liquid crystal cell operates as a kind of light shutter (light valve), that is, the light transmission factor of each pixel 631 is controlled, to control the light transmission factor of light emitted from the light source 110 so that two-dimensional images are obtained as a whole. A rectangular opening is provided in the overlapping region of the first transparent electrode and the second transparent electrode, and light emitted from the light source 110 passes through such openings to produce two-dimensional images.

The optical apparatus 635 is disposed rearwardly of the two-dimensional image formation apparatus 630 in a neighboring relationship (for example, in close contact with or in a spaced relationship by a small distance from the two-dimensional image formation apparatus 630). Where the optical apparatus 635 is disposed in a neighboring relationship with the two-dimensional image formation apparatus 630, the influence of a diffraction phenomenon arising from light passing the openings of the pixels 631 which compose the two-dimensional image formation apparatus 630 can be ignored. Here, the shape in plan of the optical elements 636 which compose the optical apparatus 635 in the third working example is a rectangular shape similar to the shape in plan of the openings of the corresponding pixels 631, and the optical elements 636 are each formed from a lattice-like element of the refraction type having a positive optical power, in particular, from a convex lens (focal distance $f_0$). Further, the optical apparatus 635 is formed from a kind of microlens array and made of glass based on a known method of producing a microlens array.

The optical apparatus 635 functions as a phase grating. In particular, light emitted from each of the pixels 631 and forming a two-dimensional image produced by the two-dimensional image formation apparatus 630 enters a corresponding one of the optical elements 636 of the optical apparatus 635 disposed in a neighboring relationship with the two-dimensional image formation apparatus 630. Then, the light entering the optical elements 636 is refracted by the optical elements 636 such that it is condensed to a substantially one point at the focal distance $f_0$ and further advances rearwardly from the point. If this situation is viewed from another point of view, then it seems as if a rectangular opening region (a kind of pinhole) 637 corresponding to each of the optical elements 636 exists at a position of the focal distance $f_0$ rearwardly of the optical apparatus 635 as seen in a conceptive view of FIG. 21 and the light emitted from the optical elements 636 passes the virtual opening regions 637. As a result, a phenomenon equivalent to Fraunhofer diffraction occurs, and $M \times N = 121$ diffracted lights are produced by an optical element 636 corresponding to each of the pixels 631 (more particularly, by a virtual opening region 637 corresponding to each of the optical elements 636). In other words, since the number of the pixels 631 and the optical elements 636 is $P_0 \times Q_0 = P \times Q$, it can be considered also that totaling $P \times Q \times M \times N$ diffraction lights are produced by the optical apparatus 635. Then, a spatial frequency of the two-dimensional images is emitted from the optical apparatus 635 along diffraction angles corresponding to the number of diffraction orders (totaling $M \times N$ diffraction orders) produced from each of the optical elements 636. It is to be noted that the diffraction angle differs also depending upon the spatial frequency of the two-dimensional images. Although the value of the focal distance $f_0$ may essentially be an arbitrary value, a large number of optical elements 636 which compose the optical apparatus 635 have the same focal distance $f_0$. While light emitted from each of the optical apparatus 635 propagates at an angle which depends upon the numerical aperture of the optical elements 636 as seen in FIG. 21, such a situation that the propagating light expands and little suffers from loss of the light amount can be obtained. Here, where the arrayed pitch or size of the optical elements 636 is represented by do, the width D of parallel light of a wavelength $\lambda$ when the light is condensed by an optical element 636 of a size do and a focal distance $f_0$ can be represented by

$$D = 2.44\lambda/\sin(\arctan(d_0/2f_0))$$

From this, although the optical numerical aperture can be represented by $D^2/d_0^2$ by using the optical elements 636, loss of the light amount caused by decrease of the numerical aperture does not occur.

The back focuses (focal distance $f_0$) of the optical elements 636 which compose the optical apparatus 635 are positioned on the front focal plane (focal plane on the light source side) of the first lens $L_1$ which has the focal distance $f_1$, and the spatial filter SF is disposed on the back focal plane (focal plane on the observer side) of the first lens $L_1$. $M \times N = 121$ Fourier transform images whose number corresponds to the number of diffraction orders are produced by the first lens $L_1$ and are formed on the spatial filter SF. It is to be noted that, in FIG. 22, 64 Fourier transform images are indicated as dots for the convenience of illustration.

The spatial filter SF particularly is a spatial filter which allows temporal opening and closing control thereof for spatially and temporarily filtering Fourier transform images. More particularly, the spatial filter SF has a number of openings 651 equal to the number of (particularly, $M \times N = 121$) diffraction orders which can be controlled to be opened and closed. Then, in the spatial filter SF, a desired one of the openings 651 is placed into an open state in synchronism with a production timing of two-dimensional images by the two-dimensional image formation apparatus 630 to select one Fourier transform image corresponding to a desired diffraction order. More particularly, the spatial filter SF can be formed, for example, from a liquid crystal display apparatus of the transmission type or the reflection type which is formed using ferroelectric liquid crystal and has $M \times N$ pixels or an MEMS of the two-dimensional type including an apparatus in which movable mirrors are disposed in a two-dimensional matrix. It is to be noted that a schematic front elevational view of the spatial filter SF where it is formed from a liquid crystal display apparatus is similar to that which is shown in FIG. 4. Referring to FIG. 4, numerical values ($m_0$, no) indicate a number of the opening 651 (indicated by reference numeral 151 in FIG. 4) and simultaneously indicate a diffraction order. In particular, to the (3, 2)th opening 651, a Fourier transform image having a diffraction order number of $m_0 = 3$ and no = 2 comes.

As described hereinabove, the conjugate image formation section 660 is particularly formed from the second lens $L_2$ and the third lens $L_3$. Then, the second lens $L_2$ having the focal distance $f_2$ inverse Fourier transforms a Fourier transform image filtered by the spatial filter SF to form real images RI of the two-dimensional images formed by the two-dimensional image formation apparatus 630. Further, the third lens $L_3$ having the focal distance $f_3$ forms conjugate

images CI of the Fourier transform images filtered by the spatial filter SF.

The second lens $L_2$ is disposed such that the spatial filter SF is positioned on the front focal plane thereof and real images RI of two-dimensional images formed by the two-dimensional image formation apparatus 630 are formed on the back focal plane thereof. The magnification of the real images RI obtained here with respect to the two-dimensional image formation apparatus 630 can be varied by arbitrarily selecting the focal distance $f_2$ of the second lens $L_2$.

Meanwhile, the third lens $L_3$ is disposed such that the front focal plane thereof coincides with the back focal plane of the second lens $L_2$ and conjugate images CI of the Fourier transform images are formed on the back focal plane thereof. Here, since the back focal plane of the third lens $L_3$ is a conjugate plane of the spatial filter SF, two-dimensional images produced by the two-dimensional image formation apparatus 630 are equivalently outputted from a portion on the spatial filter SF which corresponds to one opening 651. Then, the amount of rays of light produced and outputted finally can be defined as an amount calculated by multiplying the number of rays of light equal to the number of pixels ($P \times Q$) by the number of (particularly, $M \times N$) diffraction orders having passed through the optical system. Further, while the conjugate images CI of the Fourier transform images are formed on the back focal plane of the third lens $L_3$, it can be considered that the light ray groups are disposed regularly two-dimensionally on the back focal plane of the third lens $L_3$. In other words, generally a number of projector units shown in FIG. 36 equal to the number of (particularly $M \times N$) diffraction orders are disposed equivalently on the back focal plane of the third lens $L_3$.

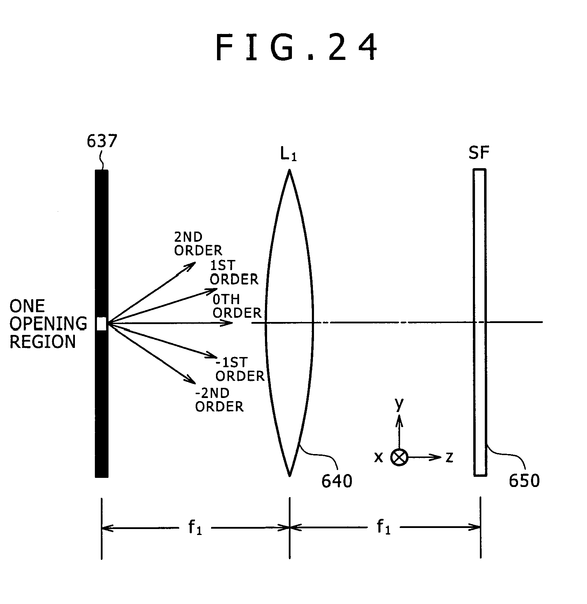

As schematically shown in FIGS. 22 and 24, totaling $M \times N = 121$ different diffracted lights including 11 diffracted lights from the -5th order to the +5th order diffracted lights along the X direction and 11 diffracted lights from the -5th order to the +5th order diffracted lights along the Y direction are produced by one optical element 636 of the optical apparatus 635 (more particularly, by a virtual opening region 637 positioned at the back focus of the optical element 636). It is to be noted that, while only the zeroth order light (no = 0), $\pm$1st order lights (no = $\pm$1) and $\pm$2nd order lights are illustrated as representative diffracted lights in FIG. 24, actually also higher order diffracted lights are produced, and a three-dimensional image is finally formed from the diffracted lights. Here, the diffracted light (light flux) of each diffraction order intensively includes all image information (information of all of the pixels) of the two-dimensional images formed by the two-dimensional image formation apparatus 630. A plurality of light ray groups ($11 \times 11 = 121$ light ray groups) produced by diffraction from the same pixel on the two-dimensional image formation apparatus 630 have the same image information at the same point of time. In other words, in the two-dimensional image formation apparatus 630 formed from a liquid crystal display apparatus of the transmission type having the $P \times Q$ pixels 631, two-dimensional images are produced based on light from the light source 110, and a spatial frequency of the produced two-dimensional images is emitted from the optical apparatus 635 along diffraction angles corresponding to a plurality of diffraction orders (totaling $M \times N$ diffraction orders) produced by each of the optical elements 636. In other words, a kind of $M \times N$ copies of the two-dimensional images are emitted along the diffraction angles corresponding to a plurality of diffraction orders (totaling $M \times N$ diffraction orders) from the two-dimensional image formation apparatus 630.

Then, the spatial frequency of the two-dimensional images in which all image information of the two-dimensional images formed by the two-dimensional image formation apparatus 630 is intensively included is Fourier transformed by the first lens $L_1$ to produce Fourier transform images whose number corresponds to the number of diffraction orders (totaling $M \times N$ diffraction orders). Then, the Fourier transform images are formed on the spatial filter SF. Since Fourier transform images of the spatial frequency of two-dimensional images emitted along the diffraction angles corresponding the number of diffraction orders are produced by the first lens $L_1$, the Fourier transform images can be obtained in a spatially high density.

Here, where the wavelength of light (illumination light) emitted from the light source 110 is represented by $\lambda$ (mm), the spatial frequency of the two-dimensional images formed by the two-dimensional image formation apparatus 630 by $\nu$ (lp/mm), and the focal distance of the first lens $L_1$ by $f_1$ (mm), light (Fourier transform images) having the spatial frequency $\nu$ appears at the position of a distance $Y_1$ (mm) from the optical axis on the back focal plane of the first lens $L_1$ in accordance with the expression (1).

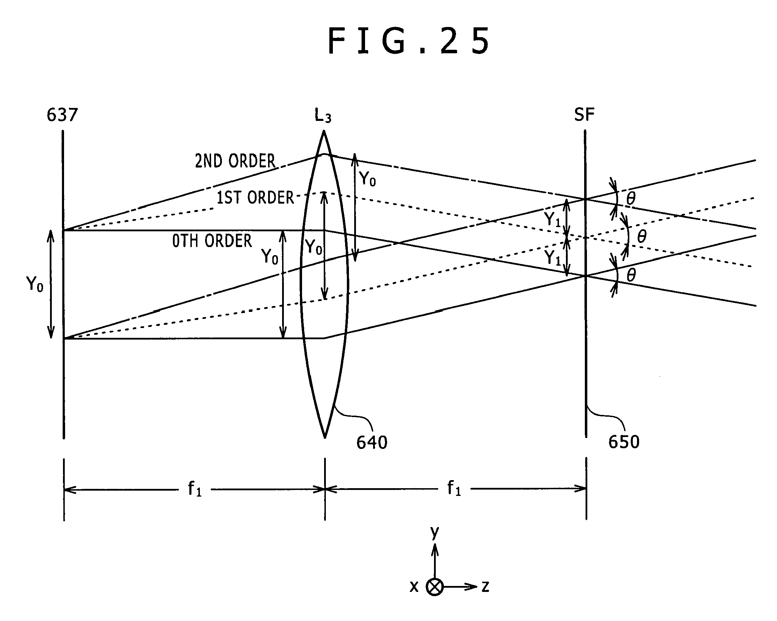

A condensing state of the first lens $L_1$ is schematically illustrated in FIG. 25. It is to be noted that, in FIG. 25, "$Y_0$" represents the length in the y axis direction of a two-dimensional image formed by the two-dimensional image formation apparatus 630, and "$Y_1$" represents the distance in the y axis direction of a Fourier transform image on the spatial filter SF based on a two-dimensional image formed by the two-dimensional image formation apparatus 630. Further, a zeroth-order diffracted light is indicated by a solid line and a 1st-order diffracted light is indicated by a dotted line while a second-order diffracted light is indicated by an alternate long and short dash line. The diffracted lights of the diffraction orders, in other words, a number of produced Fourier transform images whose number corresponds to the number of diffraction orders, are condensed at the different openings 651 of the spatial filter SF by the first lens $L_1$ (refer also to FIG. 22). The number of openings 651 is $M \times N = 121$ as described hereinabove. The condensing angles $\theta$ on the spatial filter SF (scattering angles after emitted from the spatial filter SF) are equal with regard to the $P \times Q$ opening regions 631 on Fourier transform images (or diffracted lights) which have the same diffraction order number. The distance between Fourier transform images of adjacent diffraction orders on the spatial filter SF can be determined in accordance with the expression (1) given hereinabove. From the expression (1), the position of a Fourier transform image (image forming position on the spatial filter SF) can be varied by arbitrarily selecting the focal distance $f_1$ of the first lens $L_1$.

In order for the first lens $L_1$ to pass therethrough a spatial frequency of two-dimensional images emitted along diffraction angles corresponding to a plural number of diffraction orders, it is necessary to select the numerical aperture NA of the first lens $L_1$ in accordance with a diffraction order number to be utilized, and it is demanded that the aperture number of all lenses succeeding the first lens $L_1$ be greater than the numerical aperture NA of the first lens $L_1$ irrespective of the focal distance.

The size of the openings 651 may be set equal to the value of $Y_1$ in the expression (1). As an example, where the wavelength $\lambda$ of the illumination light is 532 nm, the focal distance $f_1$ of the first lens $L_1$ is 50 mm and the size of the pixels 631 of the two-dimensional image formation apparatus 630 is approximately 13 to $14\mu$ m, the value of $Y_1$ is approximately 2 mm. This signifies that Fourier transform images corresponding to the diffraction orders can be obtained in a high density of a distance of approximately 2 mm. In other words, $11 \times 11 = 121$ Fourier transform images can be obtained at distances of approximately 2 mm in both of the X and Y directions on the spatial filter SF.

The spatial frequency $\nu$ of the two-dimensional images formed by the two-dimensional image formation apparatus 630 has a period formed from two successive pixels 631 of the two-dimensional image formation apparatus 630 at the highest because the two-dimensional images are formed by the two-dimensional image formation apparatus 630 formed including $P \times Q$ pixels 631.

The two-dimensional image formation apparatus 630 which is in a state wherein the spatial frequency of the two-dimensional images is lowest has a front elevation similar to that shown in FIG. 7A. Further, the light intensity of Fourier transform images formed by the first lens $L_1$ has a frequency characteristic similar to that illustrated in FIG. 8A. On the other hand, the two-dimensional image formation apparatus 630 which is in a state wherein the spatial frequency of conjugate images of the two-dimensional images is highest has a front elevation similar to that shown in FIG. 7B. Further, the light intensity of Fourier transform images formed by the first lens $L_1$ has a frequency characteristic similar to that illustrated in FIG. 8B. Furthermore, the distribution of Fourier transform images on the spatial filter SF (xy plane) is similar to those shown in FIGS. 9A to 9C.

The shape in plan of the openings 651 of the spatial filter SF may be determined based on the shape of Fourier transform images. Further, an opening 651 may be provided for each diffraction order so that a peak position of a plane wave component of a Fourier transform image may be the center of the opening 651. Consequently, a peak of the light intensity of each Fourier transform image is positioned at the central position of an opening 651. In particular, each opening 651 should be formed so that all of the positive and negative highest spatial frequencies of two-dimensional images centered at a cyclical pattern of Fourier transform images where the spatial frequency of the two-dimensional images is the lowest spatial frequency component (plane wave component) may pass through the opening 651.

Incidentally, the state wherein the spatial frequency is highest is a case wherein all of the pixels alternately display the black and the white as seen in FIG. 8B. Further, the spatial frequency of the pixel structure of the two-dimensional image formation apparatus 630 and the spatial frequency of the two-dimensional images have the following relationship. In particular, if it is assumed that the openings occupy the entire pixels (that is, the aperture ratio is 100%), then the highest spatial frequency of the two-dimensional images is 1/2 the spatial frequency of the pixel structure. On the other hand, where the openings occupy a certain rate of the pixels (lower than 100%), the highest spatial frequency of the two-dimensional images is lower than 1/2 the spatial frequency of the pixel structure. Therefore, all of the spatial frequencies of the two-dimensional images appear up to a position of one half of a distance between cyclic patterns arising from the opening region structure and appearing on the spatial filter SF. From this, all of the openings 651 can be disposed such that they do not interfere with each other spatially. In particular, the Fourier transform image having the diffraction order number of $m_0 = 3$ and no = 2 comes to the (3, 2)th opening 651 while the Fourier transform image having the diffraction order number of $m_0 = 3$ and no = 2 does not come to the other openings 651. Consequently, a spatial frequency of two-dimensional images formed by the two-dimensional image formation apparatus 630 exists in a Fourier transform image positioned in one opening 651 on the spatial filter SF which has the openings 651 which are independent of each other for individual Fourier transform images while a miss of a spatial frequency of the two-dimensional images formed by the two-dimensional image formation apparatus 630 by spatial limitation of the openings 651 does not occur. It is to be noted that the spatial frequency of the pixel structure can be regarded as a carrier frequency, and the spatial frequency of the two-dimensional images corresponds to image information where the spatial frequency of the pixel structure is the carrier frequency.

Then, in the spatial filter SF, opening/closing control of the openings 651 is performed in order to control passage/interception of $M \times N$ Fourier transform images. If the spatial filter SF is formed from, for example, a liquid crystal display apparatus, then the opening/closing control of the openings 651 can be performed by causing the liquid crystal cells to operate as a kind of light shutter (light valve).

As described above, with the three-dimensional image display apparatus 601 of the third working example, a spatial frequency of two-dimensional images produced by the two-dimensional image formation apparatus 630 is emitted along diffraction angles corresponding to a plurality of diffraction orders, and Fourier transform images obtained by Fourier transforming the spatial frequency by means the Fourier transform image formation section 640 (first lens $L_1$)

are spatially and temporally filtered by the Fourier transform image selection section 650 (spatial filter SF). Then, conjugate images CI of the filtered Fourier transform images are formed. Consequently, light ray groups can be produced and scattered in a high spatial density and besides in a distributed state in a plurality of directions without increasing the scale of the entire three-dimensional image display apparatus. Further, individual rays of light which are components of the light ray groups can be temporally and spatially controlled independently of each other. Consequently, a three-dimensional image formed from rays of light having quality proximate to those of an article in the real world can be obtained.

Further, with the three-dimensional image display apparatus 601 of the third working example, since the light ray reproduction method is utilized, a three-dimensional image which satisfies such visual senses as focusing, convergence and parallax of motion can be provided. Further, with the three-dimensional image display apparatus 601 of the third working example, since high order diffraction lights are utilized efficiently, a number of rays of light (a kind of copy of two-dimensional images) which can be controlled by a single image outputting device (two-dimensional image formation apparatus 630) equal to the number of diffraction orders (that is, $M \times N$ rays of light) can be obtained when compared with conventional image outputting techniques. Besides, with the three-dimensional image display apparatus 601 of the third working example, since it performs filtering spatially and temporally, a temporal characteristic of the three-dimensional image display apparatus can be converted into a spatial characteristic of the three-dimensional image display apparatus. Further, a three-dimensional image can be obtained without using a diffuser screen or the like. Furthermore, a three-dimensional image which is appropriate to observation from any direction can be provided. Further, since light ray groups can be produced and scattered in a spatially high density, a spatial image of a high definition proximate to a limitation to recognition can be provided. Fourth Working Example

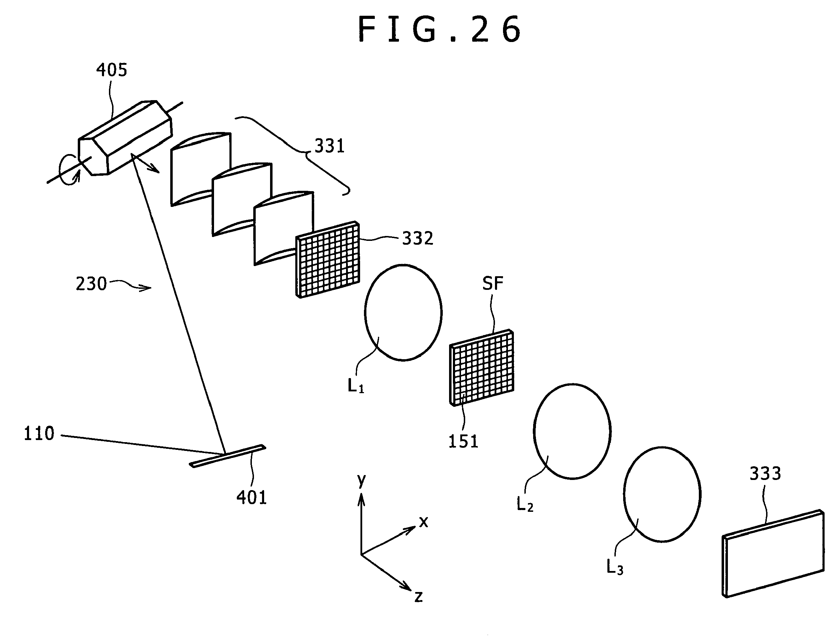

The fourth working example is a modification to the first working example and is a three-dimensional image display apparatus according to the first and seventh embodiments of the present invention. The three-dimensional image display apparatus of the fourth working example is shown in a conceptual view of FIG. 26.

Referring to FIG. 26, the three-dimensional image display apparatus of the fourth working example includes a light modulation section 230 different from the liquid crystal display apparatus of the three-dimensional image display apparatus of the first working example. In particular, the light modulation section 230 includes a one-dimensional spatial light modulator (particularly a diffraction grating-light modulation apparatus 401) for forming a one-dimensional image partitioned into P (for example, 1,920) partitions, a scanning optical system (particularly a scanning mirror 405) for two-dimensionally expanding (scanning) the one-dimensional image formed by the one-dimensional spatial light modulator (diffraction grating-light modulation apparatus 401) and partitioned in P partitions to form a two-dimensional image partitioned into $P \times Q$ partitions, and a lattice filter (diffraction grating filter) 332 disposed on a formation plane of the two-dimensional image for emitting a spatial frequency of the produced two-dimensional image along diffraction angles corresponding to a plurality of diffraction orders (particularly, totaling $M \times N$ diffraction orders). Here, $M \times N$ diffracted lights are produced by the lattice filter 332 for each partition of the two-dimensional image formed by the optical scanning system (scanning mirror 405) and partitioned in $P \times Q$ partitions. It is to be noted that the lattice filter 332 may otherwise be formed from an amplitude grading or a phase grating.

Components of the three-dimensional image display apparatus according to the seventh embodiment of the present invention are described below. In particular, the three-dimensional image display apparatus 101 of the fourth working example includes:

(A) a light source 110;

(B) a two-dimensional image formation apparatus 230 including a one-dimensional spatial light modulator (particularly a diffraction grating-light modulation apparatus 401) having P pixels along an X direction for producing a one-dimensional image, a scanning optical system (particularly a scanning mirror 405) for two-dimensionally expanding the one-dimensional image produced by the one-dimensional spatial light modulator to produce a two-dimensional image, and a diffracted light production section (particularly a lattice filter 332) disposed on a production plane of the two-dimensional image for producing, for each pixel, M diffracted lights from mth to m'th orders (where m and m' are integers and M is a positive integer);

(C) a first lens (particularly, in the fourth working example, a convex lens) $L_1$ having a front focal plane on which the diffracted light production section is disposed;

(D) a spatial filter SF disposed on a back focal plane of the first lens $L_1$ and having totaling $M \times N$ openings 151 including M openings 151 along the X direction and N (N is a positive integer) openings 151 along a Y direction, the openings 151 being capable of being controlled to be opened and closed;

(E) a second lens (particularly, in the fourth working example, a convex lens) $L_2$ having a front focal plane on which the spatial filter SF is disposed; and

(F) a third lens (particularly, in the fourth working example, a convex lens) $L_3$ having a front focus positioned at a back focus of the second lens $L_2$.

Here, it is assumed that the one-dimensional image extends in the X direction. Further, it is assumed that the scanning direction is the Y direction and the two-dimensional image is formed along the X direction and the Y direction. However, alternatively the X direction and the Y direction may be exchanged. It is to be noted that, in FIG. 26, the illumination optical system 120 is omitted. This similarly applies to the fifth and sixth working examples.

The one-dimensional spatial light modulator (diffraction grating-light modulation apparatus 401) diffracts light from the light source 110 to form a one-dimensional image. More particularly, the diffraction grating-light modulation apparatus 401 includes diffraction grating-light modulation elements (GLV) 410 arrayed in a one-dimensional array. The diffraction grating-light modulation elements 410 are manufactured applying a micromachine manufacturing technique and are formed from diffraction gratings of the reflection type such that they have a light switching function and are electrically controlled to effect on/off control of light to display an image. Then, in the light modulation section 230, lights emitted from the diffraction grating-light modulation elements 410 are scanned by means of a scanning mirror 405 formed from a galvano mirror or a polygon mirror to obtain a two-dimensional image. Accordingly, in order to display a two-dimensional image formed from P $\times$ Q (for example, 1,920 $\times$ 1,080) pixels, the diffraction grating-light modulation apparatus 401 may be formed from P (= 1,920) diffraction grating-light modulation elements 410.

It is necessary to produce diffracted lights based on the two-dimensional image obtained by scanning by means of the scanning mirror 405. To this end, a filter of the amplitude type or the phase type is disposed on the two-dimensionally expansion plane to produce diffracted lights. More particularly, the two-dimensional image obtained by scanning by means of the scanning mirror 405 passes through a scanning lens system 331 and enters a lattice filter (diffraction grating filter) 332 disposed on the two-dimensional image production plane. Thus, the lattice filter 332 produces M $\times$ N diffracted lights for each of the P $\times$ Q partitions of the two-dimensional image. In particular, a spatial frequency of the produced two-dimensional image is emitted from the lattice filter 332 along diffraction angles corresponding to a plurality of diffraction orders produced from the partitions (corresponding to the pixels) of the lattice filter 332. The lattice filter 332 is disposed on a front focal plane of the first lens $L_1$ which has a focal distance $f_1$.

Where a one-dimensional spatial light modulator is used, since the image to be formed is a one-dimensional image, also diffraction occurs in a one-dimensional space. Accordingly, an optical system for diffusing the resulting diffracted lights in the Y direction is required. In the three-dimensional image display apparatus of the fourth working example or the sixth working example which is hereinafter described, a member 333 (also called anisotropic diffusion filter, anisotropic diffusion film or anisotropic diffusion sheet) for causing anisotropic light diffusion of diffusing diffracted lights produced in a one-dimensional direction into two-dimensional directions to occur is disposed on the downstream side (observer side) with respect to the third lens $L_3$ (conjugate image formation section 160).

Except the foregoing, the three-dimensional image display apparatus of the fourth working example may be similar in configuration and structure to the three-dimensional image display apparatus described hereinabove in connection with the first working example. Therefore, overlapping description of the configuration and structure of the three-dimensional image display apparatus of the fourth working example is omitted herein to avoid redundancy.

Now, the configuration and the structure of the diffraction grating-light modulation elements 410 are described.

Each of the diffraction grating-light modulation elements 410 includes a lower electrode 412, fixed electrodes 421, movable electrodes 422 and so forth which are arranged in such a manner as schematically shown in FIG. 27. It is to be noted that, in FIG. 27, the lower electrode 412, fixed electrodes 421, movable electrodes 422 and supporting portions 414, 415, 417 and 418 are indicated by slanting lines so that they may be seen clearly.

Referring to FIG. 27, the diffraction grating-light modulation element 410 particularly includes a lower electrode 412, belt- or ribbon-shaped fixed electrodes 421 and belt- or ribbon-shaped movable electrodes 422. The lower electrode 412 is formed on a support member 411. Meanwhile, the fixed electrodes 421 are supported on the supporting portions 414 and 415 and is supported and extends above the lower electrode 412. Further, the movable electrodes 422 are supported on the supporting portions 417 and 418 and is supported and extends above the lower electrode 412 in a juxtaposed relationship with the fixed electrodes 421. In the example shown in FIG. 27, one diffraction grating-light modulation element 410 includes three fixed electrodes 421 and three movable electrodes 422. The three movable electrodes 422 are connected collectively to a control electrode which is connected to a connection terminal section not shown. Meanwhile, the three fixed electrodes 421 are connected collectively to a bias electrode. The bias electrode is provided commonly to the diffraction grating-light modulation elements 410 and is grounded through a bias electrode terminal section not shown. Also the lower electrode 412 is provided commonly to the diffraction grating-light modulation elements 410 and grounded through a lower electrode terminal section not shown.

If a voltage is applied to the movable electrodes 422 through the connection terminal section and the control electrode and another voltage is applied to the lower electrode 412 (actually the lower electrode 412 is in a grounded state), then Coulomb force is generated between the movable electrodes 422 and the lower electrode 412. Then, the movable electrodes 422 are displaced downwardly toward the lower electrode 412 by the Coulomb force. It is to be noted that the movable electrodes 422 in a state before the displacement are shown in FIG. 28A and on the left side in FIG. 28C while the movement electrodes 422 in another state after the displacement are shown in FIG. 28B and on the right side of FIG. 28C. Then, a diffraction grating of the reflection type is formed by the movable electrodes 422 and the fixed electrodes 421 based on such displacement of the movable electrodes 422. Here, FIG. 28A is a schematic sectional view of a fixed electrode and so forth taken along line B-B of FIG. 27 and also is a schematic sectional view of a movable electrode and so forth taken along line A-A of FIG. 27 (in a state wherein the diffraction grating-light modulation element is not in an operative state). Meanwhile, FIG. 28B is a schematic view of the movable electrode and so forth taken along line A-A of FIG. 27 (but in a state wherein the diffraction grating-light modulation element is in an operative state), and FIG. 28C is a schematic sectional view of the fixed electrode, movable electrodes and so forth taken along line C-C of FIG. 27.

Where the distance between adjacent ones of the fixed electrodes 421 is represented by d (refer to FIG. 28C) and the wavelength of light (incidence angle: $\theta_1$) incident to the movable electrodes 422 and the fixed electrodes 421 is represented by $\lambda$ and the diffraction angle is represented by $\theta_m$, they have a relationship represented by

$$d[\sin(\theta_i) - \sin(\theta_m)] = m_{Dif} \cdot \lambda$$

where $m_{Dir}$ is the order number and assumes the values $0, \pm 1, \pm 2, \cdots$ .

The light intensity of the diffracted light exhibits the highest value when the difference $\Delta h_1$ (refer to FIG. 28c) in height between the top face of the movable electrodes 422 and the top face of the fixed electrodes 421 is $\lambda/4$.

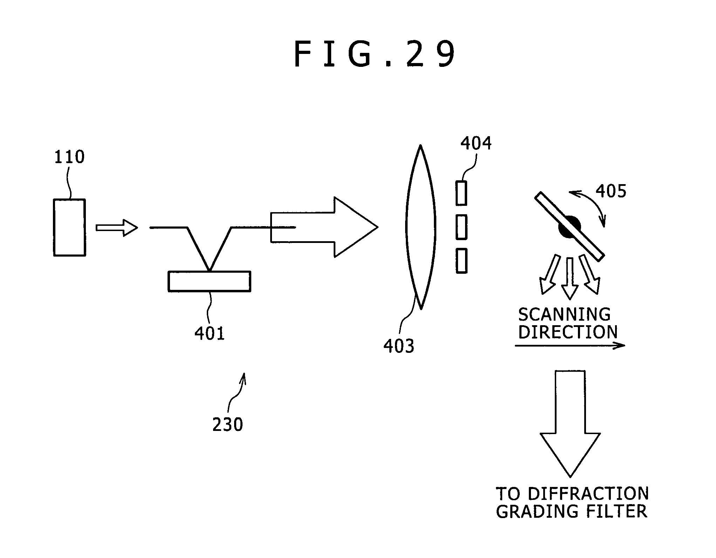

A conceptive view of the light modulation section (two-dimensional image formation apparatus) 230 which includes such a diffraction grating-light modulation apparatus as described above is shown in FIG. 29. Referring to FIG. 29, the light modulation section 230 of the fourth working example includes a light source 110 for emitting laser light, a condenser lens (not shown) for condensing the light emitted from the light source 110, a diffraction grating-light modulation apparatus 401 to which the light having passed the condenser lens is introduced, a lens 403 and a spatial filter 404 through which light emitted from the diffraction grating-light modulation apparatus 401 passes, an image forming lens (not shown) for forming an image from a single flux of light having passed through the spatial filter 404, and a scanning mirror 405 for scanning the flux of light having passed through the image forming lens.

In the light modulation section 230 having such a configuration as described above, when the diffraction grating-light modulation elements 410 is in an inoperative state in which the movable electrodes 422 are in a state shown in FIG. 28A and on the left side of FIG. 28C, light reflected by the top faces of the movable electrodes 422 and the fixed electrodes 421 is intercepted by the spatial filter 404. On the other hand, when the diffraction grating-light modulation elements 410 is in an operative state in which the movable electrodes 422 are in a state shown in FIG. 28B and on the right side of FIG. 28C, $\pm$1st order ($m_{Dif} = \pm 1$) diffracted lights diffracted by the movable electrodes 422 and the fixed electrodes 421 pass through the spatial filter 404. Such a configuration as just described allows on/off control of light. The difference $\Delta h_i$ in height between the top face of the movable electrodes 422 and the top face of the fixed electrodes 421 can be varied by varying the voltage to be applied to the movable electrodes 422. As a result, the intensity of the diffracted lights can be varied to achieve gradation control.

Fifth Working Example

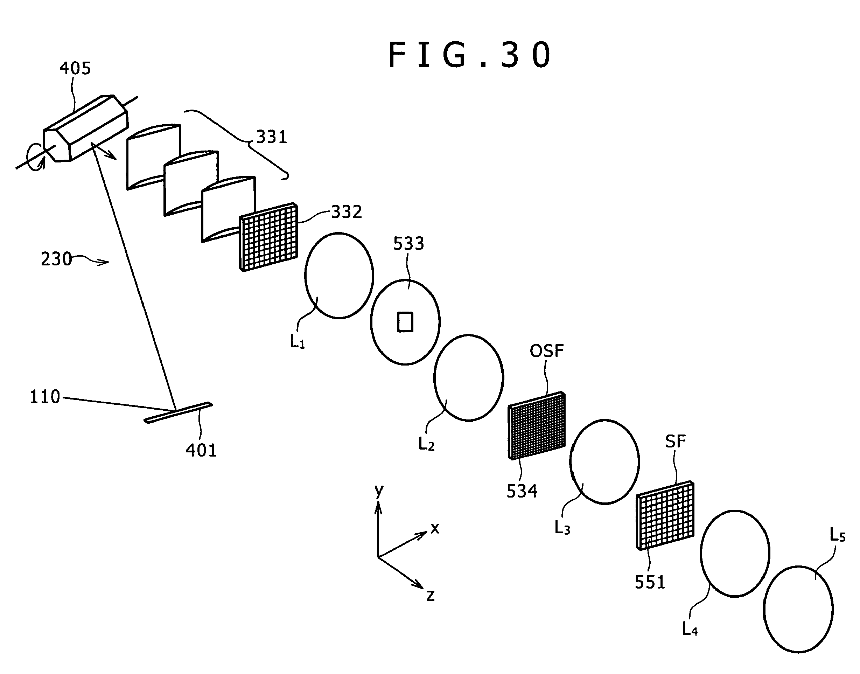

The fifth working example is a modification to the second working example and is a three-dimensional image display apparatus according to the second and eighth embodiments of the present invention. The three-dimensional image display apparatus of the fifth working example is shown in a conceptive view of FIG. 30.

Referring to FIG. 30, the three-dimensional image display apparatus of the fifth working example includes a light modulation section 230 different from the liquid crystal display apparatus of the three-dimensional image display apparatus of the second working example. In particular, the light modulation section 230 includes a one-dimensional spatial light modulator (particularly a diffraction grating-light modulation apparatus 401) for forming a one-dimensional image partitioned into P (for example, 1,920) partitions, a scanning optical system (particularly a scanning mirror 405) for two-dimensionally expanding (scanning) the one-dimensional image formed by the one-dimensional spatial light modulator (diffraction grating-light modulation apparatus 401) and partitioned in P partitions to form a two-dimensional image partitioned into P $\times$ Q partitions, and a lattice filter (diffraction grating filter) 332 disposed on a formation plane of the two-dimensional image for emitting a spatial frequency of the produced two-dimensional image along diffraction angles corresponding to a plurality of diffraction orders (particularly, totaling M $\times$ N diffraction orders). Here, M $\times$ N diffracted lights are produced by the lattice filter 332 for each partition of the two-dimensional image formed by the optical scanning system (scanning mirror 405) and partitioned in P $\times$ Q partitions. It is to be noted that the lattice filter 332 may otherwise be formed from an amplitude grading or a phase grating.

Components of the three-dimensional image display apparatus according to the eighth embodiment of the present invention are described below. In particular, the three-dimensional image display apparatus 501 of the fifth working example includes:

(A) a light source 110;

(B) a two-dimensional image formation apparatus 230 including a one-dimensional spatial light modulator (particularly a diffraction grating-light modulation apparatus 401) for producing a one-dimensional image, a scanning optical system (particularly a scanning mirror 405) for two-dimensionally expanding the one-dimensional image produced by the one-dimensional spatial light modulator to produce a two-dimensional image, and a diffracted light production section (particularly a lattice filter 332) disposed on a production plane of the two-dimensional image for producing, for each pixel, diffracted lights of a plurality of diffraction orders;

(C) a first lens $L_1$ having a front focal plane on which the diffracted light production section (lattice filter 332) is disposed;

(D) an image limitation opening section 533 disposed on a back focal plane of the first lens $L_1$ for allowing a diffracted light of a predetermined diffraction order (for example, a Fourier transform image corresponding to first order diffraction whose carrier frequency is the zeroth order diffraction of the plane wave component) to pass therethrough;

(E) a second lens $L_2$ having a front focal plane on which the image limitation opening section 533 is disposed;

(F) an oversampling filter OSF disposed on a back focal plane of the second lens $L_2$ and having $P_0 \times Q_0$ ($P_0$ and $Q_0$ are arbitrary positive integers and $P_0 > P$) openings arrayed in a two-dimensional matrix along the X direction and the Y direction for producing, for each of the openings, based on a conjugate image of the two-dimensional image formed by the second lens $L_2$, totaling $M \times N$ diffracted lights including M diffracted lights from the mth order to the m'th order diffracted lights along the X direction (m and m' are integers and M is a positive integer) and N diffracted lights from the nth order to the n'th order diffracted lights along the Y direction (n and n' are integers and N is a positive integer);

(G) a third lens $L_3$ having a front focus on which the oversampling filter OSF is disposed;

(H) a spatial filter SF disposed on a back focal plane of the third lens $L_3$ and having totaling $M \times N$ openings 551 including M openings 551 along the X direction and N openings 551 along the Y direction, the openings 551 being capable of being controlled between open and closed states;

(I) a fourth lens $L_4$ having a front focal plane on which the spatial filter SF is disposed; and

(J) a fifth lens $L_5$ having a front focus positioned at a back focus of the fourth lens $L_4$.

Except the foregoing, the three-dimensional image display apparatus of the fifth working example may be similar in configuration and structure to the three-dimensional image display apparatus described hereinabove in connection with the second working example. It is to be noted that the one-dimensional spatial light modulator (diffraction grating-light modulation apparatus 401), scanning lens system 331, lattice filter (diffraction grating filter) 332 and diffraction grating-light modulation element 410 in the fifth working example may be configured similarly to the one-dimensional spatial light modulator (diffraction grating-light modulation apparatus 401), scanning lens system 331, lattice filter (diffraction grating filter) 332 and diffraction grating-light modulation element 410 in the fourth working example, respectively.

Sixth Working Example

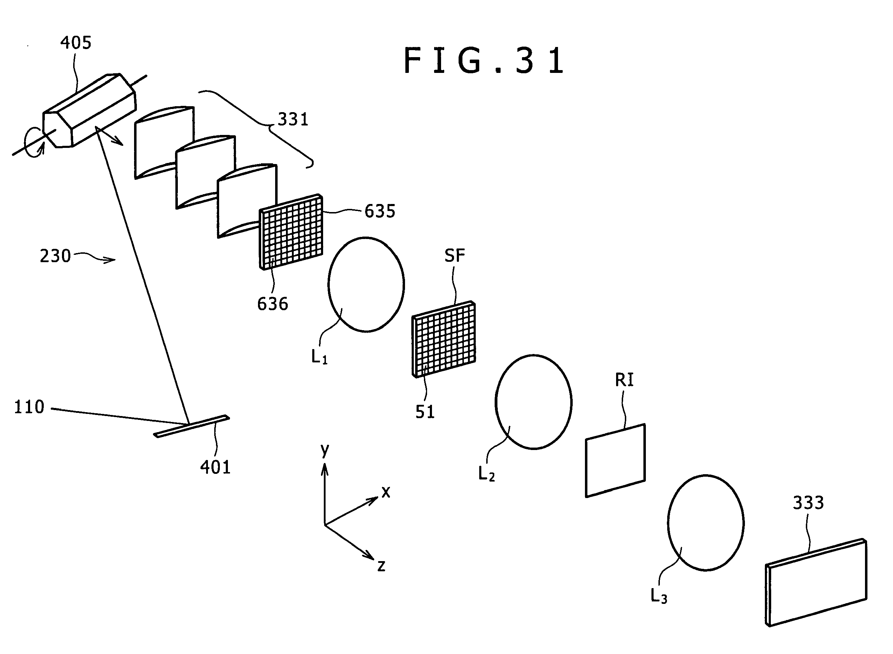

The sixth working example is a modification to the third working example. The three-dimensional image display apparatus of the sixth working example is shown in a conceptive view of FIG. 31.

Referring to FIG. 31, the three-dimensional image display apparatus of the sixth working example includes a light modulation section 230 different from the liquid crystal display apparatus of the three-dimensional image display apparatus of the third working example. In particular, the light modulation section 230 includes a one-dimensional spatial light modulator (particularly a diffraction grating-light modulation apparatus 401) for forming a one-dimensional image partitioned into P (for example, 1,920) partitions, and a scanning optical system (particularly a scanning mirror 405) for two-dimensionally expanding (scanning) the one-dimensional image formed by the one-dimensional spatial light modulator (diffraction grating-light modulation apparatus 401) and partitioned in P partitions to form a two-dimensional image partitioned into $P \times Q$ partitions. Further, an optical apparatus 635 is disposed rearwardly of the scanning optical system. The optical apparatus 635 is disposed on a production plane of the two-dimensional image and emits a spatial frequency of the produced two-dimensional image along diffraction angles corresponding to a plurality of diffraction orders (particularly $M \times N$ diffraction orders.

Except the foregoing, the three-dimensional image display apparatus of the sixth working example may be similar in configuration and structure to the three-dimensional image display apparatus described hereinabove in connection with the third working example. Therefore, overlapping description of the configuration and structure of the three-dimensional image display apparatus of the seventh working example is omitted herein to avoid redundancy. It is to be noted that the one-dimensional spatial light modulator (diffraction grating-light modulation apparatus 401), scanning lens system 331, lattice filter (diffraction grating filter) 332 and diffraction grating-light modulation element 410 in the sixth working example may be configured similarly to the one-dimensional spatial light modulator (diffraction grating-light modulation apparatus 401), scanning lens system 331, lattice filter (diffraction grating filter) 332 and diffraction grating-light modulation element 410 in the fourth working example, respectively.

Seventh Working Example

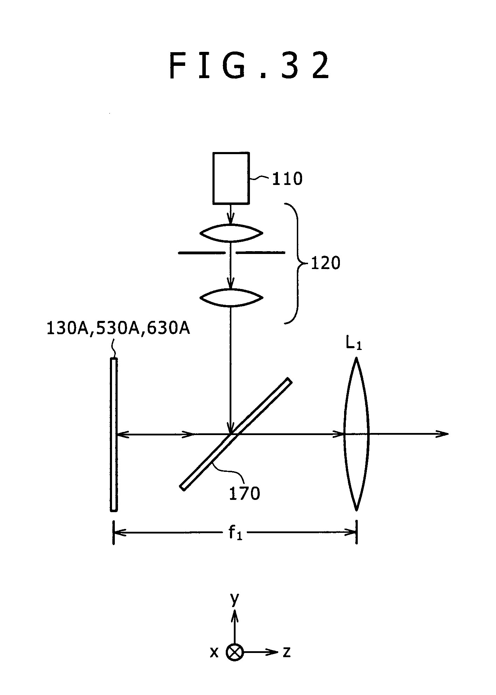

The seventh working example is a modification to the first, second or third working example. A conceptive view of the three-dimensional image display apparatus of the seventh working example is shown in FIG. 32. In the three-dimensional image display apparatus of the first, second or third working example, the two-dimensional image formation apparatus 130, 530 or 630 of the light transmission type is used. On the other hand, in the three-dimensional image display apparatus of the seventh working example, a light modulation section (two-dimensional image formation apparatus) 130A, 530A or 630A of the reflection type is used. The light modulation section light modulation section (two-dimensional image formation apparatus) 130A, 530A or 630A of the reflection type may be formed, for example, from a liquid crystal display apparatus of the reflection type or may have a configuration wherein a movable mirror is provided in each opening (configuration formed from a two-dimensional MEMS in which movable mirrors are arrayed two-dimensionally). A two-dimensional image is formed by shifting/non-shifting of the movable mirrors, and besides Fraunhofer diffraction is generated by the openings. It is to be noted that the optical apparatus is omitted in FIG. 32.

Further, in the three-dimensional image display apparatus of the seventh working example, a beam splitter 170 is provided on the z axis (optical axis). The beam splitter 170 has a function of passing therethrough or reflecting light depending upon the difference of a polarized light component. The beam splitter 170 reflects light emitted from the light source 110 toward the light modulation section (two-dimensional image formation apparatus) 130A, 530A or 630A of the reflection type. Further, the beam splitter 170 passes therethrough the reflected light from the light modulation section (two-dimensional image formation apparatus) 130A, 530A or 630A. Except this, the three-dimensional image display apparatus of the seventh working example may be similar in configuration and structure to the three-dimensional image display apparatus described hereinabove in connection with the first, second or third working example. Therefore, overlapping description of the configuration and structure of the three-dimensional image display apparatus of the seventh working example is omitted herein to avoid redundancy.

While the image reproduction apparatus of the present invention is described above based on the preferred working examples, the image reproduction apparatus of the present invention is not limited to them. Further, while the three-dimensional image display apparatus of the present invention is described above based on the preferred working examples, the three-dimensional image display apparatus is not limited to the first to seventh workings. While, in the working examples, a lattice filter which forms an oversampling filter is formed from a phase grating, it may alternatively be formed from an amplitude grating.

Also it is possible to dispose, between the two-dimensional image formation apparatus 630 and the optical apparatus 635, for example, two convex lenses such that the two-dimensional image formation apparatus 630 is disposed on a front focal plane of a first one of the convex lenses and a front focus of a second one of the convex lenses is positioned on the back focal plane of the first convex lens while the optical apparatus 635 is disposed on a back focal plane of the second convex lens. Also it is possible to form each of the optical elements 636, which form the optical apparatus 635, alternatively from a concave lens. In this instance, the virtual opening regions 637 are positioned forwardly (on the light source side) of the two-dimensional image formation apparatus 630. Further, the optical elements 636 may be formed from a Fresnel lens in place of an ordinary lens.

In the first, fourth and seventh working examples, the light modulation section (two-dimensional image formation apparatus) 130 or 130A or the diffracted light production section is disposed on the front focal plane of a lens (first lens $L_1$) which forms the Fourier transform image formation section 140, and the Fourier transform image selection section is disposed on the back focal plane of the lens (first lens $L_1$). However, as occasion demands, the light modulation section (two-dimensional image formation apparatus) 130 or 130A or the diffracted light production section may be disposed at a position displaced from the front focal plane of the lens (first lens $L_1$) which forms the Fourier transform image formation section 140 if degradation which occurs with a three-dimensional image to be obtained finally because of crosstalk which appears with a spatial frequency of two-dimensional images is permitted. Further, each of the first lens $L_1$, second lens $L_2$ and third lens $L_3$ is not limited to a convex lens but may be selectively formed from a suitable lens. Further, in the second, fifth and seventh working examples, the oversampling filter OSF is disposed on the front focal plane of a lens (third lens $L_3$) which forms the Fourier transform image formation section 540, and the Fourier transform image selection section 550 (spatial filter SF) is disposed on the back focal plane of the lens (third lens $L_3$). However, as occasion demands, the oversampling filter OSF may be disposed at a position displaced from the front focal plane of a lens (third lens $L_3$) which forms the Fourier transform image formation section 540 or the Fourier transform image selection section 550 (spatial filter SF) may be disposed at a position displaced from the back focal plane of the lens (third lens $L_3$) if degradation which occurs with a three-dimensional image to be obtained finally because of crosstalk which appears with a spatial frequency of two-dimensional images is permitted. Further, each of the first lens $L_1$, second lens $L_2$, third lens $L_3$, fourth lens $L_4$ or fifth lens $L_5$ is not limited to a convex lens but may be selectively formed from a suitable lens. Furthermore, in the third, sixth and seventh working examples, the focuses of the optical elements 636 which form the optical apparatus 635 are positioned on the front focal plane of a lens (first lens $L_1$) which forms the Fourier transform image formation section 640, and a Fourier transform image selection section is disposed on the back focal plane of the lens (first lens L$_1$). However, as occasion demands, the focuses of the optical elements 636 which form the optical apparatus 635 may be positioned at a position displaced from the front focal plane of a lens (first lens L$_1$) which forms the Fourier transform image formation section 640 or the Fourier transform image selection section may be disposed at a position displaced from the back focal plane of the lens (first lens L$_1$) if degradation which occurs with a three-dimensional image to be obtained finally because of crosstalk which appears with a spatial frequency of two-dimensional images is permitted. Further, each of the first lens L$_1$, second lens L$_2$ and third lens L$_3$ is not limited to a convex lens but may be selectively formed from a suitable lens.

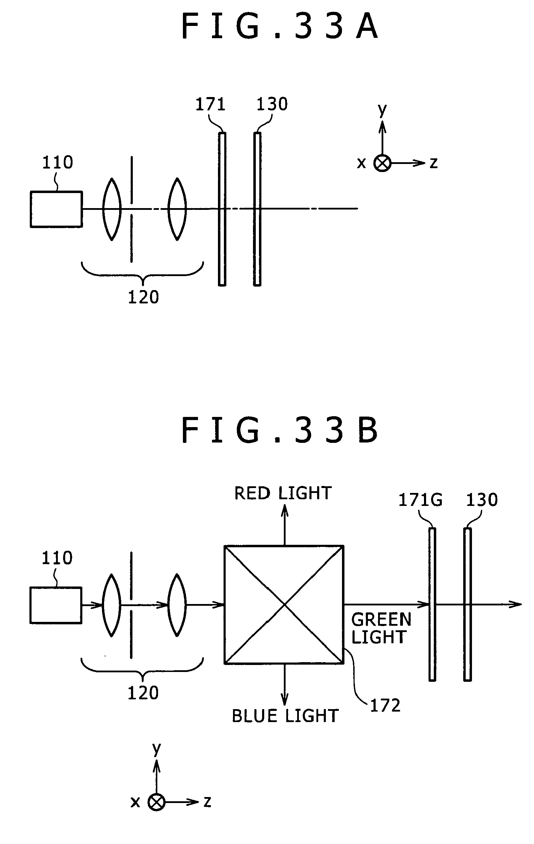

Although it is presumed that, in the first to seventh working examples, the light source in all cases is formed as a light source which emits single color light or almost single color light, the light source is not limited to that of such a configuration as just described. The wavelength band of the light source 110 may extend over a plurality of bands. However, in this instance, for example, if the three-dimensional image display apparatus of the first working example is taken as an example, preferably a narrow band filter 171 which performs wavelength selection is disposed between the illumination optical system 120 and the light modulation section (two-dimensional image formation apparatus) 130 as shown in FIG. 33A. By this, the wavelength band can be classified and selected to extract single color light.

Or the wavelength band of the light source 110 may extend over a wide band. However, in this instance, a dichroic prism 172 and a narrow band filter 171G which performs wavelength selection are preferably disposed between the illumination optical system 120 and the light modulation section (two-dimensional image formation apparatus) 130 as seen in FIG. 33B. In particular, the dichroic prism 172 reflects, for example, red light and blue light in different directions from each other and passes a ray of light including green light therethrough. The narrow band filter 171G for classifying and selecting the green light is disposed on the outgoing side of the dichroic prism 172 from which the ray of light including the green light goes out.

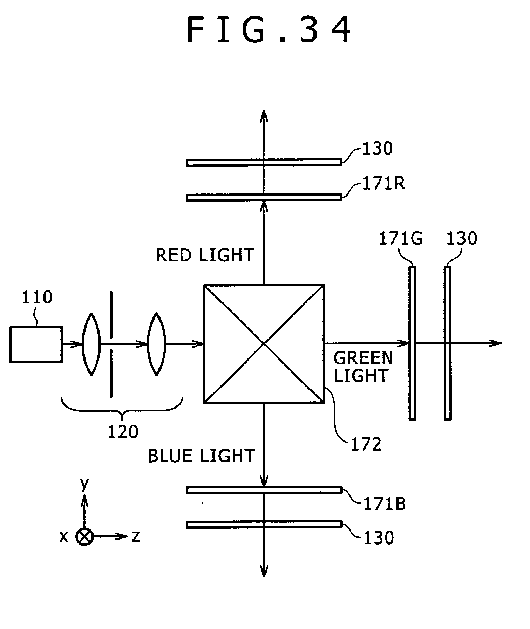

Further, if the narrow band filter 171G for classifying and selecting green light is disposed on the outgoing side of the dichroic prism 172 from which a ray of light including green light goes out and a narrow band filter 171R for classifying and selecting red light is disposed on the outgoing side of the dichroic prism 172 from which a ray of light including red light goes out while a narrow band filter 171B for classifying and selecting blue light is disposed on the outgoing side of the dichroic prism 172 from which a ray of light including blue light goes out as seen in FIG. 34, then a light source for three three-dimensional image display apparatuses which display the three primary colors can be configured. If the three three-dimensional image display apparatus having the configuration described above are used or a combination of a light source which emits red light and a three-dimensional image display apparatus, another combination of another light source which emits green light and another three-dimensional image display apparatus and a further combination of a further light source which emits blue light and a further three-dimensional image display apparatus are used such that images from the three three-dimensional image display apparatus are combined using, for example, a light combining prism, then color display can be implemented. It is to be noted that a dichroic mirror may be used in place of the dichroic prism. Further, such modifications to the three-dimensional image display apparatus as described above can naturally be applied also to the second to seventh working examples.

Further, the three-dimensional image display apparatus according to the second or fifth embodiment of the present invention and the three-dimensional image display apparatus according to the third or sixth embodiment may be combined with each other.

While preferred working examples of the present invention have been described using specific terms, such description is for illustrative purposes only, and it is to be understood that changes and variations may be made without departing from the spirit or scope of the following claims.

**Claims**

1.  A three-dimensional image display apparatus, comprising:

    (A) a light source;
    (B) a light modulation section having a plurality of pixels for modulating light from said light source by means of said pixels to produce a two-dimensional image and emitting a spatial frequency of the produced two-dimensional image along diffraction angles corresponding to a plurality of diffraction orders produced from each of said pixels;
    (C) a Fourier transform image formation section for performing Fourier transform of the spatial frequency of the two-dimensional image emitted from said light modulation section to produce Fourier transform images whose number corresponds to the number of diffraction orders;
    (D) a Fourier transform image selection section for selecting one of the Fourier transform images produced by said Fourier transform image formation section which corresponds to a desired diffraction order; and
    (E) a conjugate image formation section for forming a conjugate image of the Fourier transform image selected by said Fourier transform image selection section.

2. A three-dimensional image display apparatus, comprising:

(A) a light source;
(B) a light modulation section having a plurality of pixels for modulating light from said light source by means of said pixels to produce a two-dimensional image and emitting a spatial frequency of the produced two-dimensional image along diffraction angles corresponding to a plurality of diffraction orders produced from each of said pixels;
(C) an image limitation and production section for performing Fourier transform of the spatial frequency of the two-dimensional image emitted from said light modulation section to produce Fourier transform images whose number corresponds to the number of diffraction orders produced from each of said pixels, selecting only a predetermined one of the Fourier transform images and then performing inverse Fourier transform of the selected Fourier transform image to produce a conjugate image of the two-dimensional image produced by said light modulation section;
(D) an oversampling filter having a plurality of opening regions for emitting a spatial frequency of the conjugate image of the two-dimensional image along diffraction angles corresponding to a plurality of diffraction orders produced from said opening regions;
(E) a Fourier transform image formation section for performing Fourier transform of the spatial frequency of the conjugate image of the two-dimensional image emitted from said oversampling filter to produce Fourier transform images whose number coresponds to the number of diffraction orders produced from each of said opening regions;
(F) a Fourier transform image selection section for selecting one of the Fourier transform images produced by said Fourier transform image formation secton which corresponds to a desired diffraction order; and
(G) a conjugate image formation section for forming a conjugate image of the Fourier transform image selected by said Fourier transform image selection section.

3. A three-dimensional image display apparatus, comprising:

(A) a light source;
(B) a two-dimensional image formation apparatus having a plurality of pixels for producing a two-dimensional image based on light from said light source;
(C) an optical apparatus for emitting a spatial frequency of the two-dimensional image incident from said two-dimensional image formation apparatus along diffraction angles corresponding to a plurality of diffraction orders, the optical apparatus including a plurality of optical elements disposed in a two-dimensional matrix and each having an optical power of refracting light incident thereto to condense the light to a substantially one point, and having a function as a phase grating of modulating a phase of light transmitting therethrough;
(D) a Fourier transform image formation section for performing Fourier transform of the spatial frequency of the two-dimensional image emitted from said optical apparatus to produce Fourier transform images whose number corresponds to the number of diffraction orders;
(E) a Fourier transform image selection section for selecting one of the Fourier transform images produced by said Fourier transform image formation section which corresponds to a desired diffraction order; and
(F) a conjugate image formation section for forming a conjugate image of the Fourier transform image selected by said Fourier transform image selection section.

4. A three-dimensional image display apparatus, comprising:

(A) a light source;
(B) a two-dimensional image formation apparatus having $P \times Q$ openings disposed in a two-dimensional matrix along an X direction and a Y direction for producing a two-dimensional image through control of passage, reflection or diffraction of light from said light source for each of said openings and producing, based on the two dimensional image, for each of said openings, totaling $M \times N$ diffracted lights including M diffracted lights from the mth order to the m'th order diffracted lights along the X direction and N diffracted lights from the nth order to the n'th order diffracted lights along the Y direction, P and Q being arbitrary positive integers, m and m' being integers while M is a positive integer, n and n' being integers while N is a positive integer;
(C) a first lens having a front focal plane on which said two-dimensional image formation apparatus is disposed;
(D) a spatial filter disposed on a back focal plane of said first lens and having totaling $M \times N$ openings including M openings disposed along the X direction and N openings disposed along the Y direction, said openings being capable of being controlled between open and closed states;

(E) a second lens having a front focal plane on which said spatial filter is disposed; and

(F) a third lens having a front focus positioned at a back focus of said second lens.

**5.** A three-dimensional image display apparatus, comprising:

(A) a light source;

(B) a two-dimensional image formation apparatus having a plurality of openings disposed in a two-dimensional matrix along an X direction and a Y direction for producing a two-dimensional image through control of passage, reflection or diffraction of light from said light source for each of said openings and producing, based on the two dimensional image, diffracted lights of a plurality of diffraction orders for each of said openings;

(C) a first lens having a front focal plane on which said two-dimensional image formation apparatus is disposed;

(D) an image limitation opening section disposed on a back focal plane of said first lens for allowing only a diffracted light of a predetermined diffraction order to pass therethrough;

(E) a second lens having a front focal plane on which said image limitation opening section is disposed;

(F) an oversampling filter disposed on a back focal plane of said second lens and having $P_0 \times Q_0$ opening regions arrayed in a two-dimensional matrix along the X direction and the Y direction for producing, for each of said opening regions, based on a conjugate image of the two-dimensional image produced by said second lens, totaling $M \times N$ diffracted lights including M diffracted lights from the mth order to the m'th order diffracted lights along the X direction and N diffracted lights from the nth order to the n'th order diffracted lights along the Y direction, $P_0$ and $Q_0$ being arbitrary positive integers, m and m' being integers while M is a positive integer, n and n' being integers while N is a positive integer;

(G) a third lens having a front focal plane on which said oversampling filter is disposed;

(H) a spatial filter disposed on a back focal plane of said third lens and having totaling $M \times N$ openings including M openings along the X direction and N openings along the Y direction, said openings being capable of being controlled between open and closed states;

(I) a fourth lens having a front focal plane on which said spatial filter is disposed; and

(J) a fifth lens having a front focus positioned at a back focus of said fourth lens.

**6.** A three-dimensional image display apparatus, comprising:

(A) a light source;

(B) a two-dimensional image formation apparatus having a plurality of pixels for producing a two-dimensional image based on light from said light source;

(C) an optical apparatus for emitting a spatial frequency of the two-dimensional image incident from said two-dimensional image formation apparatus along diffraction angles corresponding to a plurality of diffraction orders, the optical apparatus including $P_0 \times Q_0$ optical elements disposed in a two-dimensional matrix along an X direction and a Y direction and each having an optical power of refracting light incident thereto to condense the light to a substantially one point, and having a function as a phase grating of modulating a phase of the light transmitting therethrough, $P_0 \times Q_0$ being arbitrary positive integers;

(D) a first lens having a front focal plane on which focuses of said optical elements in said optical apparatus are positioned;

(E) a spatial filter disposed on a back focal plane of said first lens and having $M \times N$ openings including M openings disposed along the X direction and N openings disposed along the Y direction and capable of being controlled between open and closed states;

(F) a second lens having a front focal plane on which said spatial filter is disposed; and

(G) a third lens having a front focus on which a back focus of said second lens is positioned.

**7.** A three-dimensional image display apparatus, comprising:

(A) a light source;

(B) a two-dimensional image formation apparatus including a one-dimensional spatial light modulator having P pixels along an X direction for producing a one-dimensional image, a scanning optical system for two-dimensionally expanding the one-dimensional image produced by said one-dimensional spatial light modulator to produce a two-dimensional image, and a diffracted light production section disposed on a production plane of the two-dimensional image for producing, for each of said pixels, M diffracted lights from the mth to the m'th orders, m and m' being integers while M is a positive integer;

(C) a first lens having a front focal plane on which said diffracted light production section is disposed;

(D) a spatial filter disposed on a back focal plane of said first lens and having totaling M $\times$ N openings including M openings along the X direction and N openings along a Y direction, N being a positive integer, said openings being capable of being controlled between open and closed states;
(E) a second lens having a front focal plane on which said spatial filter is disposed; and
(F) a third lens having a front focus positioned at a back focus of said second lens.

8.  A three-dimensional image display apparatus, comprising:

(A) a light source;
(B) a two-dimensional image formation apparatus including a one-dimensional spatial light modulator for producing a one-dimensional image, a scanning optical system for two-dimensionally expanding the one-dimensional image produced by said one-dimensional spatial light modulator to produce a two-dimensional image, and a diffracted light production section disposed on a production plane of the two-dimensional image for producing, for each of pixels, diffracted lights of a plurality of diffraction orders;
(C) a first lens having a front focal plane on which said diffracted light production section is disposed;
(D) an image limitation opening section disposed on a back focal plane of said first lens for allowing only a diffracted light of a predetermined diffraction order to pass therethrough;
(E) a second lens having a front focal plane on which said image limitation opening section is disposed;
(F) an oversampling filter disposed on a back focal plane of said second lens and having $P_0 \times Q_0$ opening regions arrayed in a two-dimensional matrix along an X direction and a Y direction for producing, for each of said opening regions, based on a conjugate image of a two-dimensional image formed by said second lens, totaling M $\times$ N diffracted lights including M diffracted lights from the mth order to the m'th order diffracted lights along the X direction and N diffracted lights from the nth order to the n'th order diffracted lights along the Y direction, $P_0$ and $Q_0$ being arbitrary positive integers, m and m' being integers while M is a positive integer, n and n' being integers while N is a positive integer;
(G) a third lens having a front focal plane on which said oversampling filter is disposed;
(H) a spatial filter disposed on a back focal plane of said third lens and having totaling M $\times$ N openings including M openings along the X direction and N openings along the Y direction, the openings being capable of being controlled between open and closed states;
(I) a fourth lens having a front focal plane on which said spatial filter is disposed; and
(J) a fifth lens having a front focus positioned at a back focus of said fourth lens.

# FIG.1

EP 1 739 977 A2

# FIG.2

130

FOURIER
TRANSFORM
IMAGE

140

SIZE OF IMAGE

150

ANGULAR FIELD
OF VIEW

EP 1 739 977 A2

# F I G . 3

EP 1 739 977 A2

# F I G . 4

150 , SF

151

| (-5,5) | (-3,5) | (-1,5) | (1,5) | (3,5) | (5,5) |
| (-4,5) | (-2,5) | (0,5) | (2,5) | (4,5) | |
| (-5,4) | (-3,4) | (-1,4) | (1,4) | (3,4) | (5,4) |
| (-4,4) | (-2,4) | (0,4) | (2,4) | (4,4) | |
| (-5,3) | (-3,3) | (-1,3) | (1,3) | (3,3) | (5,3) |
| (-4,3) | (-2,3) | (0,3) | (2,3) | (4,3) | |
| (-5,2) | (-3,2) | (-1,2) | (1,2) | (3,2) | (5,2) |
| (-4,2) | (-2,2) | (0,2) | (2,2) | (4,2) | |
| (-5,1) | (-3,1) | (-1,1) | (1,1) | (3,1) | (5,1) |
| (-4,1) | (-2,1) | (0,1) | (2,1) | (4,1) | |
| (-5,0) | (-3,0) | (-1,0) | (1,0) | (3,0) | (5,0) |
| (-4,0) | (-2,0) | (0,0) | (2,0) | (4,0) | |
| (-5,-1) | (-3,-1) | (-1,-1) | (1,-1) | (3,-1) | (5,-1) |
| (-4,-1) | (-2,-1) | (0,-1) | (2,-1) | (4,-1) | |
| (-5,-2) | (-3,-2) | (-1,-2) | (1,-2) | (3,-2) | (5,-2) |
| (-4,-2) | (-2,-2) | (0,-2) | (2,-2) | (4,-2) | |
| (-5,-3) | (-3,-3) | (-1,-3) | (1,-3) | (3,-3) | (5,-3) |
| (-4,-3) | (-2,-3) | (0,-3) | (2,-3) | (4,-3) | |
| (-5,-4) | (-3,-4) | (-1,-4) | (1,-4) | (3,-4) | (5,-4) |
| (-4,-4) | (-2,-4) | (0,-4) | (2,-4) | (4,-4) | |
| (-5,-5) | (-3,-5) | (-1,-5) | (1,-5) | (3,-5) | (5,-5) |
| (-4,-5) | (-2,-5) | (0,-5) | (2,-5) | (4,-5) | |

$Y_1$

$Y_1$

# FIG.5

# F I G . 6

# F I G . 7 A

130          131

# F I G . 7 B

130          131

# FIG.8A

# FIG.8B

# F I G . 9 A

# F I G . 9 B

# F I G . 9 C

# FIG.10

TWO-DIMENSIONAL
IMAGE FORMATION
POSITION

IMAGE (A)    IMAGE (B)

$t_{1S}$         $t_{1E}$                    TIME t

$\leftarrow T_1 \rightarrow$    $t_{2S}$         $t_{2E}$

$\leftarrow T_2 \rightarrow$

(3, 2)TH OPENING

$t_{1S}$         $t_{1E}$                    TIME t

$\leftarrow T_1 \rightarrow$

(3, 3)TH OPENING

$t_{2S}$         $t_{2E}$  TIME t

$\leftarrow T_2 \rightarrow$

EP 1 739 977 A2

# FIG.11

TIME t

53

# FIG.12

# FIG.13A

TO TWO-DIMENSIONAL IMAGE FORMATION APPARATUS

# FIG.13B

TO TWO-DIMENSIONAL IMAGE FORMATION APPARATUS

# FIG.13C

TO TWO-DIMENSIONAL IMAGE FORMATION APPARATUS

# FIG.14A

124D

122D

110D

123D

120D

TO TWO-DIMENSIONAL
IMAGE FORMATION
APPARATUS

# FIG.14B

124E

110E

120E

TO TWO-DIMENSIONAL
IMAGE FORMATION
APPARATUS

# FIG.15

EP 1 739 977 A2

# FIG.16

OSF

FOURIER
TRANSFORM
IMAGE

$L_3$

SIZE OF IMAGE

ANGULAR FIELD
OF VIEW

SF

EP 1 739 977 A2

FIG.17

EP 1 739 977 A2

# FIG.18

# FIG.19

EP 1 739 977 A2

# FIG.20

EP 1 739 977 A2

# FIG.21

# FIG.22

635

FOURIER
TRANSFORM
IMAGE

SIZE OF IMAGE

ANGULAR FIELD
OF VIEW

$L_1$

SF

EP 1 739 977 A2

# FIG.23

EP 1 739 977 A2

# F I G . 2 4

# FIG.25

FIG.26

# FIG.27

X DIRECTION

Y DIRECTION

# FIG.28A

417 415       421 422       414 418

412      411

→Y DIRECTION

# FIG.28B

417       422       418

412      411

→Y DIRECTION

# FIG.28C

410       410

$\Delta h_0$ 422 421   SP    $\Delta h_1$ 422 421

d

412      411

→X DIRECTION

# FIG.29

110

401

230

404

405

403

SCANNING
DIRECTION

TO DIFFRACTION
GRADING FILTER

EP 1 739 977 A2

# FIG.30

EP 1 739 977 A2

EP 1 739 977 A2

# FIG.31

# FIG.32

110

120

130A,530A,630A

L₁

170

f₁

y

x ⊗ → z

# FIG.33A

171 130

y

110

x ⊗ → z

120

# FIG.33B

RED LIGHT

171G 130

110

GREEN
LIGHT

120

172

BLUE LIGHT

y

x ⊗ → z

# FIG.34

RED LIGHT

GREEN LIGHT

BLUE LIGHT

110

120

130

171R

171G    130

172

171B

130

x    y    z

FIG.35

FIG.36

THREE-DIMENSIONAL IMAGE

702

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005186333 A
- JP 2006020588 A
- JP 2006020587 A
- JP 2006032815 A
- JP 2006039392 A
- JP 2006039393 A
- JP 2003173128 A
- JP 2003161912 A
- JP 2003295114 A
- JP 2003075771 A
- JP 2002072135 A
- JP 2001056450 A
- JP 3523605 B